(19) Europäisches Patentamt / European Patent Office / Office européen des brevets

(11) **EP 4 676 152 A1**

(12) **EUROPEAN PATENT APPLICATION**
published in accordance with Art. 153(4) EPC

(43) Date of publication:
**07.01.2026 Bulletin 2026/02**

(21) Application number: **24793038.1**

(22) Date of filing: **18.04.2024**

(51) International Patent Classification (IPC):
***H04W 72/232*** *(2023.01)* ***H04W 72/231*** *(2023.01)*
***H04W 72/1268*** *(2023.01)* ***H04W 72/1273*** *(2023.01)*
***H04L 5/00*** *(2006.01)* ***H04B 7/0413*** *(2017.01)*

(86) International application number:
**PCT/KR2024/005238**

(87) International publication number:
**WO 2024/219853 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.04.2023 KR 20230051313**

(71) Applicant: **Samsung Electronics Co., Ltd.**
**Suwon-si, Gyeonggi-do 16677 (KR)**

(72) Inventors:
- **JANG, Youngrok**
  **Suwon-si, Gyeonggi-do 16677 (KR)**
- **ABEBE, Ameha Tsegaye**
  **Suwon-si, Gyeonggi-do 16677 (KR)**
- **LIM, Seongmok**
  **Suwon-si, Gyeonggi-do 16677 (KR)**
- **JI, Hyoungju**
  **Suwon-si, Gyeonggi-do 16677 (KR)**
- **CHOI, Kyungjun**
  **Suwon-si, Gyeonggi-do 16677 (KR)**

(74) Representative: **Nederlandsch Octrooibureau**
**P.O. Box 29720**
**2502 LS The Hague (NL)**

(54) **METHOD AND APPARATUS FOR DETERMINING TRANSMISSION CONFIGURATION INDICATOR FOR MULTI-CELL SCHEDULING IN WIRELESS COMMUNICATION SYSTEM**

(57) The disclosure relates to a 5G or 6G communication system for supporting higher data transmission rates. The disclosure relates to the operation of a terminal and a base station in a wireless communication system and, specifically, relates to a method for transmitting and receiving an uplink reference signal in a wireless communication system, and an apparatus capable of performing same. The disclosure provides an apparatus and a method capable of providing services effectively in a mobile communication system.

FIG. 1

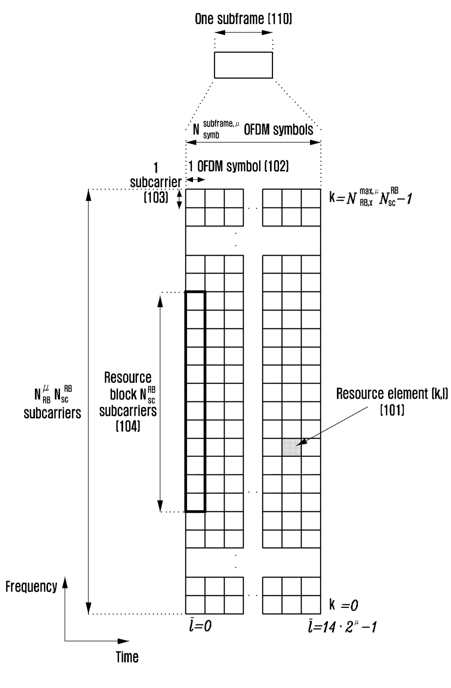




Processed by Luminess, 75001 PARIS (FR)

## Description

[Technical Field]

The disclosure relates to the operations of a terminal and a base station in a wireless communication system. Specifically, the disclosure relates to a method for determining a transmission configuration indicator for multi-cell scheduling in a wireless communication system and to an apparatus capable of performing the same.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

The disclosed embodiment is intended to provide an apparatus and method capable of effectively providing a service in a mobile communication system.

[Technical Solution]

In order to solve the above problems, the disclosure provides a method performed by a terminal in a wireless communication system. The method includes receiving a radio resource control (RRC) message including a transmission configuration information (TCI) list related to multi cell (MC)-downlink control information (DCI) from a base station via higher layer signaling, wherein the TCI list includes a TCI index for each cell scheduled for the terminal; receiving a medium access control (MAC) control element (CE) for activating a TCI state from the base station; receiving the MC-DCI including a TCI field from the base station, wherein the TCI field is used to indicate one of values included in the TCI list; and receiving a physical downlink shared channel (PDSCH) in a cell scheduled for the terminal, based on the MC-DCI.

Additionally, in order to solve the above problems, the disclosure provides a method performed by a base station in a wireless communication system. The method includes transmitting a radio resource control (RRC) message including a transmission configuration information (TCI) list related to multi cell (MC)-downlink control information (DCI) to a terminal via higher layer signaling, wherein the TCI list includes a TCI index for each cell scheduled for the terminal; transmitting a medium access control (MAC) control element (CE) for activating a TCI state to the terminal; transmitting the MC-DCI including a TCI field, wherein the TCI field is used to indicate one of values included in the TCI list; and transmitting a physical downlink shared channel (PDSCH) via a cell scheduled for the terminal, based on the MC-DCI.

Additionally, in order to solve the above problems, the disclosure provides a terminal in a wireless communication system. The terminal includes a transceiver and a controller connected to the transceiver. The controller is configured to receive a radio resource control (RRC) message including a transmission configuration information (TCI) list related to multi cell (MC)-downlink control information (DCI) from a base station via higher layer signaling, wherein the TCI list includes a TCI index for each cell scheduled for the terminal, receive a medium access control (MAC) control element (CE) for activating a TCI state from the base station, receive the MC-DCI including a TCI field from the base station, wherein the TCI field is used to indicate one of values included in the TCI list, and receive a physical downlink shared channel (PDSCH) in a cell scheduled for the terminal, based on the MC-DCI.

Additionally, in order to solve the above problems, the disclosure provides a base station in a wireless communication system. The base station includes a transceiver and a controller connected to the transceiver. The controller is configured to transmit a radio resource control (RRC) message including a transmission configuration information (TCI) list related to multi cell (MC)-downlink control information (DCI) to a terminal via higher layer signaling, wherein the TCI list includes a TCI index for each cell scheduled for the terminal, transmit a medium access control (MAC) control element (CE) for activating a TCI state to the terminal, transmit the MC-DCI including a TCI field, wherein the TCI field is used to indicate one of values included in the TCI list, and transmit a physical downlink shared channel (PDSCH) via a cell scheduled for the terminal, based on the MC-DCI.

[Advantageous Effects]

The disclosed embodiment provides an apparatus and method capable of effectively providing a service in a mobile communication system.

[Description of Drawings]

FIG. 1 is a diagram illustrating a basic structure of a time-frequency domain in a wireless communication system according to an embodiment of the disclosure.

FIG. 2 is a diagram illustrating structures of a frame, a subframe, and a slot in a wireless communication system according to an embodiment of the disclosure.

FIG. 3 is a diagram illustrating an example of a configuration of a bandwidth part (BWP) in a wireless communication system according to an embodiment of the disclosure.

FIG. 4 is a diagram illustrating radio protocol structures of a base station and a UE in single cell, carrier aggregation, and dual connectivity situations in a wireless communication system according to an embodiment of the disclosure.

FIG. 5 is a diagram illustrating an example of base station beam allocation based on a transmission configuration indicator (TCI) state configuration in a wireless communication system according to an embodiment of the disclosure.

FIG. 6 is a diagram illustrating a beam application time considerable in case of using a unified TCI scheme in a wireless communication system according to an embodiment of the disclosure.

FIG. 7 is a diagram illustrating another MAC-CE structure for activation and indication of a joint TCI state or a separate DL or UL TCI state in a wireless communication system according to an embodiment of the disclosure.

FIG. 8 is a diagram illustrating an example of a configuration of a control resource set of a downlink control channel in a wireless communication system according to an embodiment of the disclosure.

FIG. 9 is a diagram illustrating a structure of a downlink control channel in a wireless communication system according to an embodiment of the disclosure.

FIG. 10 is a diagram illustrating an example of a TCI state allocation method for a PDCCH in a wireless communication system according to an embodiment of the disclosure.

FIG. 11 is a diagram illustrating a TCI indication MAC CE signaling structure for a PDCCH DMRS in a wireless communication system according to an embodiment of the disclosure.

FIG. 12 is a diagram illustrating an example of control resource set and search space beam configuration in a wireless communication system according to an embodiment of the disclosure.

FIG. 13 is a diagram illustrating an example of frequency-domain resource allocation of a PDSCH or PUSCH in a wireless communication system according to an embodiment of the disclosure.

FIG. 14 is a diagram illustrating a VRB-PRB interleaving scheme of a PDSCH in FDRA type-1 resource allocation according to an embodiment of the disclosure.

FIG. 15 is a diagram illustrating an example of time-domain resource allocation of a PDSCH in a wireless communication system according to an embodiment of the disclosure.

FIG. 16 illustrates a procedure for beam configuration and activation of a PDSCH.

FIG. 17 is a diagram illustrating an example of MC-DCI including a plurality of FDRA fields according to an embodiment of the disclosure.

FIG. 18 is a diagram illustrating an example of MC-DCI including at least one of a cell set indicator field, a scheduling cell indicator field, and a plurality of FDRA fields according to an embodiment of the disclosure.

FIG. 19 is a diagram illustrating an example of a field indicating frequency domain resource allocation information based on subcarrier spacing of a cell according to an embodiment of the disclosure.

FIG. 20 is a diagram illustrating an example of a MAC-CE for activating a TCI state field in MC-DCI according to an embodiment of the disclosure.

FIG. 21 is a diagram illustrating another example of a MAC-CE for activating a TCI state field in MC-DCI according to an embodiment of the disclosure.

FIG. 22 is a diagram illustrating still another example of a MAC-CE for activating a TCI state field in MC-DCI according to an embodiment of the disclosure.

FIG. 23 is a diagram illustrating the operation of a UE according to an embodiment of the disclosure.

FIG. 24 is a diagram illustrating the operation of a base station according to an embodiment of the disclosure.

FIG. 25 is a diagram illustrating the structure of a UE in a wireless communication system according to an embodiment of the disclosure.

FIG. 26 is a diagram illustrating the structure of a base station in a wireless communication system according to an embodiment of the disclosure.

[Mode for Disclosure]

Hereinafter, embodiments of the disclosure will be described in detail with reference to the accompanying drawings.

In describing embodiments of the disclosure, descriptions of technical contents well-known in the art and not directly related to the disclosure will be omitted. This is to more clearly convey the subject matter of the disclosure without obscuring it by omitting unnecessary description.

For the same reason, some elements are exaggerated, omitted, or schematically illustrated in the accompanying drawings. In addition, the depicted size of each element does not completely reflect the actual size. In the drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided to inform those skilled in the art of the scope of the disclosure, and the disclosure is defined only by the scope of the appended claims. Throughout the description herein, the same or like reference numerals designate the same or like elements. Further, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the entire description herein.

Hereinafter, a base station is an entity that allocates resources to terminals, and may be at least one of a gNode B, an eNode B, a Node B, a base station (BS), a wireless access unit, a BS controller, and a node on a network. A terminal may include a user equipment (UE), a mobile station (MS), a cellular phone, a smartphone, a computer, or a multimedia system capable of performing communication functions. In the disclosure, a downlink (DL) refers to a radio link via which a base station transmits a signal to a terminal, and an uplink (UL) refers to a radio link via which a terminal transmits a signal to a base station. Further, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the 5G covers the existing LTE, LTE-A, or other similar services. In addition, based on determinations by those skilled in the art, the embodiments of the disclosure may also be applied to other communication systems through some modifications without significantly departing from the scope of the disclosure.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit' used in embodiments refers to a software or hardware component such as a field programmable gate array (FPGA) or application specific integrated circuit (ASIC), and the 'unit' performs certain tasks. However, the 'unit' is not limited to software or hardware. The 'unit' may be constituted to reside on an addressable storage medium and constituted to execute on one or more processors. Thus, the 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and 'units' may be combined into fewer components and 'units' or further separated into additional components and 'units'. In addition, the components and 'units' may be implemented to operate one or more central processing units (CPUs) in a device or a secure multimedia card. Also, in embodiments, the 'unit' may include one or more processors.

Wireless communication systems have expanded beyond the original role of providing a voice-oriented service and have evolved into wideband wireless communication systems that provide a high-speed and high-quality packet data service according to, for example, communication standards such as high-speed packet access (HSPA), long-term evolution (LTE or evolved universal terrestrial radio access (E-UTRA)), and LTE-advanced (LTE-A) of 3GPP, high-rate packet data (HRPD) and a ultra-mobile broadband (UMB) of 3GPP2, and 802.16e of IEEE.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) or a mobile station (MS) transmits data or control signals to a base station (BS or eNode B), and the downlink indicates a radio link through which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a communication system subsequent to LTE, should freely reflect various requirements of users, service providers, and the like, services satisfying various requirements should be supported. The services considered in the 5G communication system include enhanced Mobile Broadband (eMBB) communication, massive Machine Type Communication (mMTC), Ultra-Reliability Low-Latency Communication (URLLC), and the like.

The eMBB aims at providing a data rate higher than that supported by existing LTE, LTE-A, or LTE-Pro. For example, in the 5G communication system, the eMBB should provide a peak data rate of 20 Gbps in the downlink and a peak data rate of 10 Gbps in the uplink for a single base station. Furthermore, the 5G communication system should provide an increased user-perceived data rate to the UE, as well as the maximum data rate. In order to satisfy such requirements, transmission/reception technologies including a further enhanced Multi-Input Multi-Output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, the mMTC is being considered to support application services such as the Internet of things (IoT) in the 5G communication system. The mMTC has requirements, such as support of connection of a large number of UEs in a cell, enhancement coverage of UEs, improved battery time, a reduction in the cost of a UE, and the like, in order to effectively provide the IoT. Since the IoT provides communication functions while being provided to various sensors and various devices, it should support a large number of UEs (e.g., 1,000,000 UEs/$km^2$) in a cell. In addition, the UEs supporting the mMTC may require wider coverage than those of other services provided by the 5G communication system because the UEs are likely to be located in a shadow area, such as a basement of a building, which is not covered by the cell due to the nature of the service. The UE supporting the mMTC should be configured to be inexpensive, and may require a very long battery life-time such as 10 to 15 years because it is difficult to frequently replace the battery of the UE.

Lastly, the URLLC, which is a cellular-based mission-critical wireless communication service, may be used for remote control for robots or machines, industrial automation, unmanned aerial vehicles, remote health care, emergency alert, and the like. Thus, the URLLC should provide communication with ultra-low latency and ultra-high reliability. For example, a service supporting the URLLC should satisfy an air interface latency of less than 0.5ms, and also requires a packet error rate of $10^{-5}$ or less. Therefore, for the services supporting the URLLC, a 5G system should provide a transmit time interval (TTI) shorter than those of other services, and also may require a design for assigning a large number of resources in a frequency band in order to secure reliability of a communication link.

Three services in 5G, that is, the eMBB, the URLLC, and the mMTC, may be multiplexed and transmitted in a single system. In this case, different transmission/reception techniques and transmission/reception parameters may be used between services in order to satisfy different requirements of the respective services. Of course, 5G is not limited to the three services described above.

Hereinafter, a/b can be understood as at least one of a or b.

[NR Time-Frequency Resource]

Hereinafter, the frame structure of the 5G system will be described in more detail with reference to the drawings.

FIG. 1 is a diagram illustrating a basic structure of a time-frequency domain which is a radio resource domain where a data or control channel is transmitted in the 5G system.

In FIG. 1, the horizontal axis represents a time domain, and the vertical axis represents a frequency domain. A basic unit of resources in the time-frequency domain is a resource element (RE) 101, which may be defined as one OFDM symbol 102 in the time domain and one subcarrier 103 in the frequency domain. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1 ms.

FIG. 2 is a diagram illustrating structures of a frame, a subframe, and a slot in a wireless communication system according to an embodiment of the disclosure.

In FIG. 2, an example of structures of a frame 200, a subframe 201, and a slot 202 is illustrated. One frame 200 may be defined as 10 ms. One subframe 201 may be defined as 1 ms, and thus the one frame 200 may be composed of ten subframes 201 in total. One slot 202 or 203 may be defined as fourteen OFDM symbols (i.e., the number of symbols per slot, $N_{symb}^{slot}=14$ ). One subframe 201 may be composed of one or multiple slots 202 and 203, and the number of slots 202 and 203 per one subframe 201 may differ according to a configuration value $\mu$ 204 or 205 for a subcarrier spacing. In the example of FIG. 2, a case 204 of $\mu$=0 and a case 205 of $\mu$=1 are illustrated as the subcarrier spacing configuration value. In the case 204 of $\mu$=0, one subframe 201 may be composed of one slot 202, and in the case 205 of $\mu$=1, the one

subframe 201 may be composed of two slots 203. That is, the number of slots per one subframe ( $N_{slot}^{subframe,\mu}$ ) may differ according to the subcarrier spacing configuration value μ, and accordingly, the number of slots per one frame ( $N_{slot}^{frame,\mu}$ ) may differ. $N_{slot}^{subframe,\mu}$ and $N_{slot}^{frame,\mu}$ according to each subcarrier spacing configuration μ may be defined as in Table 1 below.

[Table 1]

| $\mu$ | $N_{symb}^{slot}$ | $N_{slot}^{frame\mu}$ | $N_{slot}^{subframe\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

Next, the BWP configuration in a 5G communication system will be described in detail with reference to the drawings.

FIG. 3 is a diagram illustrating an example of the BWP configuration in a wireless communication system according to an embodiment of the disclosure.

In FIG. 3, an example is shown in which a UE bandwidth 300 is configured as two BWPs, that is, BWP#1 301 and BWP#2 302. The base station may configure one or multiple BWPs for the UE, and may configure the following Table 2 information for each BWP.

[Table 2]

```
BWP ::=                          SEQUENCE {
    bwp-Id                            BWP-Id,
   (bandwidth part identifier)
    locationAndBandwidth              INTEGER (1..65536),
    (bandwidth part location)
    subcarrierSpacing                 ENUMERATED {n0, n1, n2, n3, n4, n5},
    (subcarrier spacing)
    cyclicPrefix                      ENUMERATED { extended }
    (cyclic prefix)
}
```

The above example is not a limitation, and various parameters related to the BWP may be configured for the UE in addition to the above configuration information. The above information may be transmitted by the base station to the UE via higher layer signaling, for example, radio resource control (RRC) signaling. At least one BWP among the configured one or multiple BWPs may be activated. Whether to activate the configured BWP may be semi-statically transmitted from the base station to the UE via RRC signaling or may be dynamically transmitted through downlink control information (DCI).

According to some embodiment, the UE before RRC connected may be configured with an initial BWP for initial access from the base station through a master information block (MIB). More specifically, the UE may receive configuration information about a search space and a control resource set (CORESET) through which a PDCCH for reception of system information (which may correspond to remaining system information (RMSI) or system information block 1 (SIB1)) required for initial access may be transmitted through the MIB in an initial access stage. The CORESET and search space, which are configured through the MIB, may be regarded as identity (ID) 0, respectively. The base station may notify the UE of configuration information, such as frequency allocation information, time allocation information, and numerology for CORESET#0 through the MIB. In addition, the base station may notify the UE of configuration information regarding the monitoring periodicity and occasion for CORESET#0, that is, configuration information regarding search space#0, through the MIB. The UE may regard the frequency domain configured as CORESET#0, obtained from the MIB, as the initial BWP for initial access. Here, the ID of the initial BWP may be regarded as 0.

The BWP configuration supported by the 5G may be used for various purposes.

According to some embodiment, in the case where a bandwidth supported by the UE is less than a system bandwidth, this may be supported through the BWP configuration. For example, the base station may configure a frequency location (configuration information 2) of the BWP to the UE so that the UE may transmit or receive data at a specific frequency location within the system bandwidth.

Further, according to some embodiment, the base station may configure multiple BWPs to the UE for the purpose of supporting different numerologies. For example, to support data transmission/reception using both a subcarrier spacing of 15 kHz and a subcarrier spacing of 30 kHz to a certain UE, two BWPs may be configured with a subcarrier spacing of 15 kHz and a subcarrier spacing of 30 kHz, respectively. Different BWPs may be frequency division multiplexed, and in the case of desiring to transmit or receive data at a specific subcarrier spacing, the BWP configured with the corresponding subcarrier spacing may be activated.

In addition, according to some embodiment, the base station may configure, to the UE, the BWPs having bandwidths of different sizes for the purpose of reducing power consumption of the UE. For example, when the UE supports a very large bandwidth, for example, a bandwidth of 100 MHz, and always transmits or receives data at that bandwidth, it may cause very high power consumption in the UE. In particular, even when there is no traffic, monitoring an unnecessary downlink control channel with a large bandwidth of 100 MHz may be very inefficient in terms of power consumption. Therefore, in order to reduce power consumption of the UE, the base station may configure, to the UE, a BWP of a relatively small bandwidth, for example, a BWP of 20 MHz. In a situation without traffic, the UE may perform a monitoring operation in a BWP of 20 MHz, and when data occurs, the UE may transmit or receive data in a BWP of 100 MHz according to an indication of the base station.

In a method of configuring the BWP, the UEs before RRC connected may receive configuration information about the initial BWP through the MIB in the initial access stage. More specifically, the UE may be configured with a CORESET for a downlink control channel, in which DCI for scheduling a system information block (SIB) may be transmitted, from the MIB of a physical broadcast channel (PBCH). The bandwidth of the CORESET configured through the MIB may be regarded as the initial BWP, and the UE may receive, through the configured initial BWP, a physical downlink shared channel (PDSCH) in which the SIB is transmitted. The initial BWP may be used for other system information (OSI), paging, and random access as well as for the reception of the SIB.

[Bandwidth Part (BWP) Switch]

In the case where one or more BWPs have been configured to the UE, the base station may indicate a switch (or switching, transition) of the BWP to the UE by using a BWP indicator field in DCI. As an example, in FIG. 3, when the currently activated BWP of the UE is BWP#1 301, the base station may indicate BWP#2 302 to the UE by using the BWP indicator in DCI, and the UE may perform the BWP switch to the BWP#2 302 indicated by the BWP indicator in the received DCI.

As described above, since the DCI-based BWP switch may be indicated by the DCI that schedules the PDSCH or the PUSCH, when receiving a request to switch the BWP, the UE should smoothly receive or transmit the PDSCH or the PUSCH, which is scheduled by the DCI, without difficulty in the switched BWP. To this end, the standard specifies requirements for a delay time ($T_{BWP}$) required when switching the BWP, which may be defined, for example, as shown in Table 3 below.

[Table 3]

| $\mu$ | **NR Slot length (ms)** | **BWP switch delay $T_{BWPswitchDelay}$ (slots)** | |
|---|---|---|---|
| | | **Type 1**[Note 1] | **Type 2**[Note 1] |
| 0 | 1 | 1 | 3 |

(continued)

| $\mu$ | NR Slot length (ms) | BWP switch delay $T_{BWPswitchDelay}$ (slots) | |
|---|---|---|---|
| | | Type 1[Note 1] | Type 2[Note 1] |
| 1 | 0.5 | 2 | 5 |
| 2 | 0.25 | 3 | 9 |
| 3 | 0.125 | 6 | 18 |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the BWP switch delay time support Type 1 or Type 2 depending on UE capability. The UE may report a supportable type of BWP delay time to the base station.

When the UE receives the DCI including the BWP switch indicator in slot n according to the requirements for the BWP switch delay time, the UE may complete a switch to a new BWP indicated by the BWP switch indicator at a time not later than slot $n+T_{BWP}$, and may perform transmission and reception of a data channel scheduled by the corresponding DCI in the switched new BWP. When the base station intends to schedule the data channel to the new BWP, the base station may determine a time domain resource allocation for the data channel by considering the BWP switch delay time ($T_{BWP}$) of the UE. That is, when the base station schedules the data channel to the new BWP, the base station may schedule the data channel after the BWP switch delay time in a method for determining time domain resource allocation for the data channel. Therefore, the UE may not expect the DCI indicating the BWP switch to indicate a slot offset (K0 or K2) value smaller than the BWP switch delay time ($T_{BWP}$).

If the UE has received the DCI (for example, DCI format 1_1 or 0_1) indicating the BWP switch, the UE may not perform any transmission or reception during a time interval from the third symbol of a slot in which the PDCCH including the DCI is received to the start time of a slot indicated by the slot offset (K0 or K2) value indicated by the time domain resource allocation indicator field in the DCI. For example, if the UE has received the DCI indicating the BWP switch in slot n, and if the slot offset value indicated by the DCI is K, the UE may not perform any transmission or reception from the third symbol of slot n to the symbol prior to slot n+K (i.e., the last symbol of slot n+K-1).

[CA/DC Related]

FIG. 4 is a diagram illustrating radio protocol structures of a base station and a UE in single cell, carrier aggregation, and dual connectivity situations in a wireless communication system according to an embodiment of the disclosure.

With reference to FIG. 4, in each of the UE and the NR base station, the radio protocol of the next generation mobile communication system is composed of NR service data adaptation protocol (NR SDAP) 425 or 470, NR packet data convergence protocol (NR PDCP) 430 or 465, NR radio link control (NR RLC) 435 or 460, and NR medium access control (NR MAC) 440 or 455.

The main functions of the NR SPAP 425 or 470 may include some of the following functions.

- User data transmission function (Transfer of user plane data)
- Function of mapping QoS flow and a data bearer for uplink and downlink (Mapping between a QoS flow and a DRB for both DL and UL)
- Function of marking a QoS flow ID for uplink and downlink (Marking QoS flow ID in both DL and UL packets)
- Function of mapping reflective QoS flow to a data bearer for uplink SDAP PDUs (Reflective QoS flow to DRB mapping for the UL SDAP PDUs)

With respect to the SDAP layer device, the UE may be configured through an RRC message whether or not to use a header of the SDAP layer device or whether or not to use a function of the SDAP layer device, for each PDCP layer device, each bearer, or each logical channel. If the SDAP header is configured, a 1-bit indicator of NAS reflective QoS of the SDAP header and a 1 bit-indicator of AS reflective QoS may indicate that the UE can update or reconfigure mapping information about QoS flow and a data bearer in uplink and downlink. The SDAP header may include QoS flow ID information indicating the QoS. The QoS information may be used as data processing priority, scheduling information, etc. to support a seamless service.

The main functions of the NR PDCP 430 or 465 may include some of the following functions.

- Header compression and decompression function (Header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

In the above description, the reordering function of the NR PDCP device refers to a function of sequentially reordering PDCP PDUs received from a lower layer on the basis of a PDCP sequence number (SN). This may include a function of sequentially transferring the reordered data to an upper layer, a function of directly transferring the reordered data without regard to the order, a function of recording lost PDCP PDUs by reordering, a function of reporting the statuses of the lost PDCP PDUs to a transmitting side, or a function of requesting retransmission of the lost PDCP PDUs.

The main functions of the NR RLC 435 or 460 may include some of the following functions.

- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

In the above description, the sequential delivery function (In-sequence delivery) of the NR RLC device refers to a function of sequentially transferring RLC PDUs received from a lower layer to an upper layer. In the case where one original RLC SDU is divided into a plurality of RLC SDUs and received, the sequential delivery function may include a function of reassembling and transmitting the RLC SDUs. The sequential delivery function may include a function of reordering the received RLC PDUs on the basis of an RLC sequence number (SN) or a PDCP SN, a function of recording lost RLC PDUs by reordering, a function of reporting the statuses of the lost RLC PDUs to a transmitting side, and a function of requesting retransmission of the lost RLC PDUs. In the case that there is a lost RLC SDU, the sequential delivery function may include a function of sequentially transferring only RLC SDUs preceding the lost RLC SDU to the upper layer. If a predetermined timer expires even when there is a lost RLC SDU, the sequential delivery function may include a function of sequentially transferring all RLC SDUs received before the timer starts to the upper layer, or a function of sequentially transferring all RLC SDUs received up to that point in time to the upper layer. In addition, the RLC PDUs may be processed in the order in which they are received (in the order of arrival, regardless of the order of sequence numbers) and delivered to the PDCP device out of order (out-of sequence delivery). In the case of segments, the segments stored in the buffer or to be received later may be received, reassembled into a complete one RLC PDU, processed, and delivered to the PDCP device. The NR RLC layer may not include a concatenation function, and this function may be performed in the NR MAC layer or replaced with a multiplexing function of the NR MAC layer.

In the above description, the non-sequential delivery function (Out-of-sequence delivery) of the NR RLC device refers to a function of transferring RLC SDUs received from a lower layer directly to an upper layer regardless of the order of the RLC SDUs. In the case where one original RLC SDU is divided into a plurality of RLC SDUs and received, the non-sequential delivery function may include a function of reassembling and transmitting the RLC SDUs, and a function of storing RLC SNs or PDCP SNs of the received RLC PDUs, reordering them, and recording lost RLC PDUs.

The NR MAC 440 or 455 may be connected to multiple NR RLC layer devices composed in one UE, and the main functions of the NR MAC may include some of the following functions.

- Mapping function (Mapping between logical channels and transport channels)
- Multiplexing and demultiplexing function (Multiplexing/demultiplexing of MAC SDUs)
- Scheduling information reporting function (Scheduling information reporting)
- HARQ function (Error correction through HARQ)

- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The NR PHY layer 445 or 450 may perform operations of channel-coding and modulating upper layer data to generate an OFDM symbol and transmitting it through a radio channel or demodulating and channel-decoding an OFDM symbol received through a radio channel and transmitting it to an upper layer.

The detailed structure of the above-described radio protocol structure may be variously changed according to a carrier (or cell) management scheme. For example, when the base station transmits data to the UE based on a single carrier (or cell), the base station and the UE use a protocol structure having a single structure for each layer as in 400. On the other hand, when the base station transmits data to the UE based on carrier aggregation (CA) using multiple carriers in a single TRP, the base station and the UE use a protocol structure having a single structure up to RLC but multiplexing PHY layers through a MAC layer as in 410. In another example, when the base station transmits data to the UE based on dual connectivity (DC) using multiple carriers in multiple TRPs, the base station and the UE use a protocol structure having a single structure up to RLC but multiplexing PHY layers through a MAC layer as in 420.

[QCL, TCI State]

In a wireless communication system, one or more different antenna ports (which may be replaced by one or more channels, signals, and combinations thereof, but in the description below, this will be collectively referred to as different antenna ports for convenience of explanation) may be associated with each other by a quasi-co-location (QCL) configuration as shown in Table 4 below. The TCI state is for announcing a QCL relationship between a PDCCH (or PDCCH DMRS) and another RS or channel. When a certain reference antenna port A (reference RS #A) and another target antenna port B (target RS #B) are QCLed, it means that the UE is allowed to apply some or all of the large-scale channel parameters estimated at the antenna port A to the channel measurement from the antenna port B. The QCL is required to correlate different parameters, depending on situations, such as 1) time tracking affected by average delay and delay spread, 2) frequency tracking affected by Doppler shift and Doppler spread, 3) radio resource management (RRM) affected by average gain, and 4) beam management (BM) affected by spatial parameters. Accordingly, the NR supports four types of QCL relationships as shown in Table 4 below.

[Table 4]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to some or all of various parameters, such as angle of arrival (AoA), power angular spectrum (PAS) of AoA, angle of departure (AoD), PAS of AoD, transmit/receive channel correlation, transmit/receive beamforming, and spatial channel correlation.

The QCL relationship may be configured to the UE through RRC parameter TCI-State and QCL-Info as shown in Table 5 below. With reference to Table 5, the base station may configure one or more TCI states to the UE and inform the UE of up to two QCL relationships (qcl-Type1, qcl-Type2) for RS With reference to the ID of the TCI state, that is, target RS. Here, each QCL information (QCL-Info) included in each TCI state includes the serving cell index and BWP index of the reference RS indicated by the corresponding QCL information, the type and ID of the reference RS, and the QCL type as shown in Table 4 above.

[Table 5]

```
TCI-State ::=                    SEQUENCE {
    tci-StateId                      TCI-StateId,
    (ID of the corresponding TCI state)
    qcl-Type1                        QCL-Info,
    (QCL information of the first reference RS of the RS (target RS) With reference to the corresponding TCI state ID)
    qcl-Type2                        QCL-Info                OPTIONAL, -- Need R
    (QCL information of the second reference RS of the RS (target RS) With reference to the corresponding TCI state ID)
    ...
}

QCL-Info ::=                 SEQUENCE {
    cell                             ServCellIndex           OPTIONAL, -- Need R
    (Serving cell index of the reference RS indicated by the corresponding QCL information)
    bwp-Id                           BWP-Id                  OPTIONAL, -- Cond CSI-RS-Indicated
    (BWP index of the reference RS indicated by the relevant QCL information)
    referenceSignal                  CHOICE {
        csi-rs                           NZP-CSI-RS-ResourceId,
        ssb                              SSB-Index
        (One of the CSI-RS ID or SSB ID indicated by the relevant QCL information)
    },
    qcl-Type                     ENUMERATED {typeA, typeB, typeC, typeD},
    ...
}
```

FIG. 5 is a diagram illustrating an example of base station beam allocation based on TCI state configuration.

With reference to FIG. 5, the base station may transmit information on N different beams to the UE through N different TCI states.

If N=3 as shown in FIG. 5, the base station may notify that the antenna ports With reference to the different TCI states 500, 505 and 510 are associated with different spatial Rx parameters, i.e., different beams, by ensuring that the qcl-Type2 parameters included in the three TCI states 500, 505 and 510 are associated with CSI-RS or SSB corresponding to different beams and are configured as QCL type D.

Tables 6 to 10 below show valid TCI state configurations according to target antenna port types.

Table 6 shows valid TCI state configurations when the target antenna port is CSI-RS for tracking (TRS). The TRS refers to an NZP CSI-RS, in which a repetition parameter is not configured and trs-Info is configured to be true, from among CSI-RSs. Configuration 3 in Table 6 may be used for aperiodic TRS.

[Table 6] Valid TCI state configurations when the target antenna port is CSI-RS for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 7 shows valid TCI state configurations when the target antenna port is CSI-RS for CSI. The CSI-RS for CSI refers to an NZP CSI-RS, in which a parameter indicating repetition (e.g., a repetition parameter) is not configured and trs-Info is not configured to be true, from among CSI-RSs.

[Table 7] Valid TCI state configurations when the target antenna port is CSI-RS for CSI

| Valid TCI state Configuration | DL RS 1 | qcl-Type1 | DL RS 2 (if configured) | qcl-Type2 (if configured) |
|---|---|---|---|---|
| **1** | TRS | QCL-TypeA | SSB | QCL-TypeD |
| **2** | TRS | QCL-TypeA | CSI-RS for BM | QCL-TypeD |
| **3** | TRS | QCL-TypeA | TRS (same as DL RS 1) | QCL-TypeD |
| **4** | TRS | QCL-TypeB | | |

Table 8 shows valid TCI state configurations when the target antenna port is CSI-RS for beam management (BM, which has the same meaning as CSI-RS for L1 RSRP reporting). The CSI-RS for BM refers to an NZP CSI-RS, in which a repetition parameter is configured to have the value of On or Off and trs-Info is not configured to be true, from among CSI-RSs.

[Table 8] Valid TCI state configurations when the target antenna port is CSI-RS for BM (for L1 RSRP reporting)

| Valid TCI state Configuration | DL RS 1 | qcl-Type1 | DL RS 2 (if configured) | qcl-Type2 (if configured) |
|---|---|---|---|---|
| **1** | TRS | QCL-TypeA | TRS (same as DL RS 1) | QCL-TypeD |
| **2** | TRS | QCL-TypeA | CSI-RS (BM) | QCL-TypeD |
| **3** | SS/PBCH Block | QCL-TypeC | SS/PBCH Block | QCL-TypeD |

Table 9 shows valid TCI state configurations when the target antenna port is a PDCCH DMRS.

[Table 9] Valid TCI state configurations when the target antenna port is a PDCCH DMRS

| Valid TCI state Configuration | DL RS 1 | qcl-Type1 | DL RS 2 (if configured) | qcl-Type2 (if configured) |
|---|---|---|---|---|
| **1** | TRS | QCL-TypeA | TRS (same as DL RS 1) | QCL-TypeD |
| **2** | TRS | QCL-TypeA | CSI-RS (BM) | QCL-TypeD |
| **3** | CSI-RS (CSI) | QCL-TypeA | CSI-RS (same as DL RS 1) | QCL-TypeD |

Table 10 shows valid TCI state configurations when the target antenna port is a PDSCH DMRS.

[Table 10] Valid TCI state configurations when the target antenna port is a PDSCH DMRS

| Valid TCI state Configuration | DL RS 1 | qcl-Type1 | DL RS 2 (if configured) | qcl-Type2 (if configured) |
|---|---|---|---|---|
| **1** | TRS | QCL-TypeA | TRS | QCL-TypeD |
| **2** | TRS | QCL-TypeA | CSI-RS (BM) | QCL-TypeD |

(continued)

| Valid TCI state Configuration | DL RS 1 | qcl-Type1 | DL RS 2 (if configured) | qcl-Type2 (if configured) |
|---|---|---|---|---|
| 3 | CSI-RS (CSI) | QCL-TypeA | CSI-RS (CSI) | QCL-TypeD |

A representative QCL configuring method according to Tables 6 to 10 above is to operate by configuring the target antenna port and reference antenna port for each stage as "SSB" -> "TRS" -> "CSI-RS for CSI, or CSI-RS for BM, PDCCH DMRS, or PDSCH DMRS". Through this, it is possible to link the statistical characteristics that can be measured from the SSB and the TRS to each of antenna ports to assist the UE's reception operation.

[Unified TCI state]

Hereinafter, a method for single TCI state indication and activation based on the unified TCI scheme will be described. The unified TCI scheme can be understood as a method that unifies UE's transmission and reception beam management schemes, which were previously separated into the TCI state scheme used for downlink reception and the spatial relation info scheme used for uplink transmission in existing Rel-15 and 16, into a TCI state. Therefore, when the UE receives an indication from the base station based on the unified TCI scheme, it can perform beam management using the TCI state for uplink transmission as well. If the UE is configured with a TCI-State (higher layer signaling) having tci-stateId-r17 (higher layer signaling) from the base station, the UE can perform operations based on the unified TCI scheme using the TCI-State. The TCI-State may exist in two types: a joint TCI state or a separate TCI state.

The first type is a joint TCI state, and the UE can be indicated a TCI state to be applied to both uplink transmission and downlink reception by the base station via a single TCI-State. If the UE is indicated a TCI-State based on a joint TCI state, the UE can be indicated a parameter to be used for downlink channel estimation using an RS corresponding to qcl-Type1 in the TCI-State based on the joint TCI state, and a parameter to be used as a downlink reception beam or reception filter using an RS corresponding to qcl-Type2. If the UE is indicated a TCI-State based on a joint TCI state, the UE can be indicated a parameter to be used as an uplink transmission beam or transmission filter using an RS corresponding to qcl-Type2 in the TCI-State based on the joint DL/UL TCI state. In this case, if the UE is indicated the joint TCI state, the UE can apply the same beam to both uplink transmission and downlink reception.

The second type is a separate TCI state, and the UE can be individually indicated a UL TCI state to be applied for uplink transmission and a DL TCI state to be applied fo downlink reception by the base station. If the UE is indicated the UL TCI state, the UE can be indicated a parameter to be used as an uplink transmission beam or transmission filter using a reference RS or source RS configured in the UL TCI state. If the UE is indicated the DL TCI state, the UE can be indicated a parameter to be used for downlink channel estimation using an RS corresponding to qcl-Type1 configured in the DL TCI state, and a parameter to be used as a downlink reception beam or reception filter using an RS corresponding to qcl-Type2.

If the UE is indicated both the DL TCI state and the UL TCI state, the UE can be indicated a parameter to be used as an uplink transmission beam or transmission filter using a reference RS or source RS configured in the UL TCI state, and can be indicated a parameter to be used for downlink channel estimation using an RS corresponding to qcl-Type1 configured in the DL TCI state, and a parameter to be used as a downlink reception beam or reception filter using an RS corresponding to qcl-Type2. In this case, if the reference RSs or source RSs configured in the DL TCI state and UL TCI state indicated to the UE are different, the UE can individually apply beams to uplink transmission and downlink reception, respectively, based on the indicated UL TCI state and DL TCI state.

The UE can be configured with the joint TCI state for each bandwidth part within a specific cell, up to 128, from the base station via higher layer signaling, and configured with the DL TCI state among the separate TCI states for each bandwidth part within a specific cell, up to 64 or 128, via higher layer signaling based on a UE capability report. The DL TCI state among the separate TCI states and the joint TCI state can use the same higher layer signaling structure. For example, if 128 joint TCI states are configured and 64 DL TCI states among the separate TCI states are configured, the 64 DL TCI states can be included in the 128 joint TCI states.

The UL TCI state among the separate TCI states can be configured for each bandwidth part within a specific cell, up to 32 or 64, via higher layer signaling based on the UE capability report. Similar to the relationship between the DL TCI state among the separate TCI states and the joint TCI state, the UL TCI state among the separate TCI states and the joint TCI state can also use the same higher layer signaling structure. Alternatively, the UL TCI state among the separate TCI states can use a higher layer signaling structure different from those of the joint TCI state and the DL TCI state among the separate TCI states.

The use of different or same higher layer signaling structures can be defined in the standard, or can be distinguished through additional higher layer signaling configured by the base station based on the UE capability report which contains information on one of the two usage types the UE can support.

The UE can receive a transmission/reception beam-related indication in the unified TCI scheme using one of the joint TCI state and the separate TCI state configured by the base station. The UE can be configured about whether to use one of the joint TCI state and the separate TCI state from the base station via higher layer signaling.

The UE receives the transmission/reception beam-related indication using one selected from the joint TCI state and the separate TCI state via higher layer signaling. A method for the transmission/reception beam indication from the base station can be of two types: a MAC-CE based indication method and a MAC-CE based activation and DCI based indication method.

If the UE receives the transmission/reception beam-related indication using the joint TCI state scheme via higher layer signaling, the UE can perform a transmission/reception beam application operation by receiving a MAC-CE indicating the joint TCI state from the base station, and the base station can schedule reception of a PDSCH including the MAC-CE to the UE through a PDCCH. If the MAC-CE includes one joint TCI state, the UE can determine the uplink transmission beam or transmission filter and the downlink reception beam or reception filter using the indicated joint TCI state from 3 ms after transmitting a PUCCH including HARQ-ACK information indicating whether reception of the PDSCH including the MAC-CE is successful. If the MAC-CE includes two or more joint TCI states, the UE can identify that a plurality of joint TCI states indicated by the MAC-CE correspond to each codepoint of the TCI state field of DCI format 1_1 or 1_2 from 3 ms after transmitting a PUCCH including HARQ-ACK information indicating whether reception of the PDSCH including the MAC-CE is successful, and then the UE can activate the indicated joint TCI state. Thereafter, the UE can receive DCI format 1_1 or 1_2 and apply one joint TCI state indicated by the TCI state field in the corresponding DCI to the uplink transmission and downlink reception beams. In this case, DCI format 1_1 or 1_2 may include downlink data channel scheduling information (with DL assignment) or may not include it (without DL assignment).

If the UE receives the transmission/reception beam-related indication using the separate TCI state scheme via higher layer signaling, the UE can perform a transmission/reception beam application operation by receiving a MAC-CE indicating the separate TCI state from the base station, and the base station can schedule reception of a PDSCH including the MAC-CE to the UE through a PDCCH. If the MAC-CE includes one set of separate TCI states, the UE can determine the uplink transmission beam or transmission filter and the downlink reception beam or reception filter using the separate TCI states included in the indicated separate TCI state set from 3 ms after transmitting a PUCCH including HARQ-ACK information indicating whether reception of the PDSCH is successful. In this case, the separate TCI state set may mean single or plurality of separate TCI states that one codepoint of the TCI state field in DCI format 1_1 or 1_2 can have, and one separate TCI state set may include one DL TCI state, one UL TCI state, or one DL TCI state and one UL TCI state. If the MAC-CE includes two or more sets of separate TCI states, the UE can identify that a plurality of separate TCI state sets indicated by the MAC-CE correspond to each codepoint of the TCI state field of DCI format 1_1 or 1_2 from 3 ms after transmitting a PUCCH including HARQ-ACK information indicating whether reception for the PDSCH is successful, and then the UE can activate the indicated separate TCI state set. In this case, each codepoint of the TCI state field of DCI format 1_1 or 1_2 can indicate one DL TCI state, one UL TCI state, or one DL TCI state and one UL TCI state each. The UE can receive DCI format 1_1 or 1_2 and apply the separate TCI states set indicated by the TCI state field in the corresponding DCI to the uplink transmission and downlink reception beams. In this case, DCI format 1_1 or 1_2 may include downlink data channel scheduling information (with DL assignment) or may not include it (without DL assignment).

FIG. 6 is a diagram illustrating a beam application time considerable in case of using a unified TCI scheme in a wireless communication system according to an embodiment of the disclosure. As described above, the UE may receive DCI format 1_1 or 1_2 from the base station, including (with DL assignment) or not including (without DL assignment) downlink data channel scheduling information, and apply one joint TCI state or separate TCI state set indicated by the TCI state field in the DCI to the uplink transmit and downlink receive beams.

- DCI format 1_1 or 1_2 with DL assignment (600): If the UE receives (601) DCI format 1_1 or 1_2 including downlink data channel scheduling information from the base station, and a single joint TCI state or separate TCI state set based on the unified TCI scheme is indicated, the UE can receive (605) a PDSCH scheduled based on the DCI, and transmit (610) a PUCCH including a HARQ-ACK indicating whether the DCI and the PDSCH have been received successfully. In this case, the HARQ-ACK may include whether both the DCI and the PDSCH have been received successfully. If at least one of the DCI and the PDSCH is not received, the UE may transmit a NACK, and if reception of the DCI and the PDSCH is successful, the UE may transmit an ACK.
- DCI format 1_1 or 1_2 without DL assignment (650): If the UE receives (655), from the base station, DCI format 1_1 or 1_2 that does not include downlink data channel scheduling information, and a single joint TCI state or separate TCI state set based on the unified TCI scheme is indicated, the UE may assume at least one combination of the followings for the DCI.

  - CRC scrambled using CS-RNTI is included.
  - The value of all bits assigned to all fields used as a redundancy version (RV) field is 1.
  - The value of all bits assigned to all fields used as a modulation and coding scheme (MCS) field is 1.

- ▪ The value of all bits assigned to all fields used as a new data indication (NDI) field is 0.
- ▪ In the case of frequency domain resource allocation (FDRA) Type 0, the value of all bits assigned to the FDRA field is 0, in the case of FDRA Type 1, the value of all bits assigned to the FDRA field is 1, and in the case where the FDRA scheme is dynamicSwitch, the value of all bits assigned to the FDRA field is 0.

The UE can transmit (660) a PUCCH including a HARQ-ACK indicating whether reception of DCI format 1_1 or 1_2 for which the above-described matters are assumed is successful.

- For DCI format 1_1 or 1_2 with DL assignment (600) or without DL assignment (650), if a new TCI state indicated via DCI 601 or 655 is the same as a TCI state that has been previously indicated and applied to the uplink transmit and downlink receive beams, the UE may maintain the previously applied TCI state. If the new TCI state is different from the previously indicated TCI state, the UE may determine an application time of the joint TCI state or separate TCI state set, which can be indicated from the TCI state field included in the DCI, as a time 630 or 680 after the first slot 620 or 670 after a beam application time (BAT) 615 or 665 has elapsed from PUCCH transmission, and may use the previously indicated TCI state at a time 625 or 675 before that slot 620 or 670.
- For DCI format 1_1 or 1_2 with DL assignment (600) or without DL assignment (650), the BAT may be configured via a higher layer signaling based on UE capability report information as a certain number of OFDM symbols, and the numerology for the BAT and the first slot after the BAT may be determined based on the smallest numerology among all cells to which the joint TCI state or separate TCI state set indicated through DCI is applied.

The UE may apply a single joint TCI state indicated through MAC-CE or DCI to reception of CORESETs connected to all UE-specific search spaces, PDSCH reception and PUSCH transmission scheduled by a PDCCH transmitted from the corresponding CORESET, and all PUCCH transmissions.

If a single separate TCI state set indicated via MAC-CE or DCI includes one DL TCI state, the UE may apply the single separate TCI state set to reception of CORESETs connected to all UE-specific search spaces, and PDSCH reception scheduled by a PDCCH transmitted from the corresponding CORESET, and apply the previously indicated UL TCI state to all PUSCH and PUCCH resources.

If a single separate TCI state set indicated via MAC-CE or DCI includes one DL TCI state, the UE may apply the single separate TCI state set to all PUSCH and PUCCH resources, and apply the previously indicated DL TCI state to reception of CORESETs connected to all UE-specific search spaces, and PDSCH reception scheduled by a PDCCH transmitted from the corresponding CORESET.

If a single separate TCI state set indicated via MAC-CE or DCI includes one DL TCI state and one UL TCI state, the UE may apply the DL TCI state to reception of CORESETs connected to all UE-specific search spaces, and PDSCH reception scheduled by a PDCCH transmitted from the corresponding CORESET, and apply the UL TCI state to all PUSCH and PUCCH resources.

[Unified TCI state MAC-CE]

Hereinafter, a single TCI state indication and activation method based on the unified TCI scheme will be described. The UE is scheduled a PDSCH, which includes a MAC-CE described below, from the base station, and starting from 3 slots after transmitting a HARQ-ACK for the PDSCH to the base station, the UE can interpret each codepoint of the TCI state field in DCI format 1_1 or 1_2 based on information within the MAC-CE received from the base station. In other words, the UE can activate each entry of the MAC-CE received from the base station to each codepoint of the TCI state field in DCI format 1_1 or 1_2.

FIG. 7 is a diagram illustrating another MAC-CE structure for activation and indication of a joint TCI state or a separate DL or UL TCI state in a wireless communication system according to an embodiment of the disclosure. The meaning of each field in the MAC-CE structure may be as follows.

- Serving Cell ID 700: This field may indicate which serving cell the MAC-CE is to be applied to. The length of this field may be 5 bits. If the serving cell indicated by this field is included in one or more of simultaneousU-TCI-UpdateList1, simultaneousU-TCI-UpdateList2, simultaneousU-TCI-UpdateList3, or simultaneousU-TCI-UpdateList4, which are higher layer signaling, then the MAC-CE can be applied to all serving cells included in one or more of simultaneousU-TCI-UpdateList1, simultaneousU-TCI-UpdateList2, simultaneousU-TCI-UpdateList3, or simultaneousU-TCI-UpdateList4 in which the serving cell indicated by this field is included.
- DL BWP ID 705: This field may indicate which DL BWP the MAC-CE is to be applied to, and the meaning of each codepoint in this field may correspond to each codepoint of the bandwidth part indicator in the DCI. The length of this field may be 2 bits.
- UL BWP ID 710: This field may indicate which UL BWP the MAC-CE is to be applied to, and the meaning of each codepoint in this field may correspond to each codepoint of the bandwidth part indicator in the DCI. The length of this field may be 2 bits.

- $P_i$ 715: This field may indicate whether each codepoint in the TCI state field in DCI format 1_1 or 1_2 has a plurality of TCI states or a single TCI state. If the value of $P_i$ is 1, it means that the i-th codepoint has a plurality of TCI states, which may mean that the corresponding codepoint may include a separate DL TCI state and a separate UL TCI state. If the value of $P_i$ is 0, it means that the i-th codepoint has a single TCI state, which may mean that the corresponding codepoint may include either a joint TCI state, a separate DCI TCI state, or a separate UL TCI state.
- D/U 720: This field may indicate whether the TCI state ID field in the same octet is a joint TCI state, a separate DL TCI state, or a separate UL TCI state. If this field is 1, the TCI state ID field in the same octet may be a joint TCI state or a separate DL TCI state; if this field is 0, the TCI state ID field in the same octet may be a separate UL TCI state.
- TCI state ID 725: This field may indicate a TCI state that can be identified by higher layer signaling TCI-StateId. If the D/U field is set to 1, this field may be used to express the TCI-StateId that can be expressed in 7 bits. If the D/U field is set to 0, the most significant bit (MSB) of this field may be considered as a reserved bit, and the remaining 6 bits may be used to express higher layer signaling UL-TCIState-Id. The maximum number of TCI states that can be activated may be 8 for a joint TCI state and 16 for separate DL or UL TCI states.
- R: It indicates a reserved bit and can be set to 0.

For the above-described MAC-CE structure of FIG. 7, the UE may include the third octet including the $P_1$, $P_2$, ..., $P_8$ fields of FIG. 7 in the MAC-CE structure, regardless of whether unifiedTCI-StateType-r17 in MIMOparam-r17 in ServingCellConfig, which is higher layer signaling, is configured as joint or separate. In this case, the UE can perform TCI state activation using a fixed MAC-CE structure regardless of higher layer signaling configured from the base station. In another example, for the above-described MAC-CE structure of FIG. 7, the UE may omit the third octet including the $P_1$, $P_2$, ..., $P_8$ fields of FIG. 7 when unifiedTCI-StateType-r17 in MIMOparam-r17 in ServingCellConfig, which is higher layer signaling, is configured as joint. In this case, the UE can save up to 8 bits of the payload of the corresponding MAC-CE according to higher layer signaling configured from the base station. In addition, from the fourth octet to in FIG. 7, all D/U fields located in the first bit may be regarded as R fields, and all corresponding R fields may be set to 0 bits.

[PDCCH: DCI Related]

Next, downlink control information (DCI) in the 5G system will be described in detail.

In the 5G system, scheduling information about uplink data (or physical uplink shared channel (PUSCH)) or downlink data (or physical downlink shared channel (PDSCH)) is transmitted from the base station to the UE via the DCI. The UE may monitor a fallback DCI format and a non-fallback DCI format for the PUSCH or the PDSCH. The fallback DCI format may include a fixed field, predefined between the base station and the UE, and the non-fallback DCI format may include a configurable field.

The DCI may be transmitted through a physical downlink control channel (PDCCH) after a channel coding and modulation process is performed. A cyclic redundancy check (CRC) may be attached to a DCI message payload, and the CRC may be scrambled by a radio network temporary identifier (RNTI) corresponding to the identity of the UE. Different RNTIs may be used according to the purpose of the DCI message, for example, a UE-specific data transmission, a power control command, or a random access response. That is, the RNTI is not explicitly transmitted, but is included in a CRC calculation process and then transmitted. Upon receiving the DCI message transmitted through the PDCCH, the UE may check the CRC by using an assigned RNTI. When a CRC check result is correct, the UE may know that the message has been transmitted to the UE.

For example, the DCI for scheduling the PDSCH for system information (SI) may be scrambled by an SI-RNTI. The DCI for scheduling the PDSCH for a random access response (RAR) message may be scrambled by an RA-RNTI. The DCI for scheduling the PDSCH for a paging message may be scrambled by a P-RNTI. The DCI for notifying of a slot format indicator (SFI) may be scrambled by an SFI-RNTI. The DCI for notifying of transmit power control (TPC) may be scrambled by a TPC-RNTI. The DCI for scheduling UE-specific PDSCH or PUSCH may be scrambled by a cell RNTI (C-RNTI).

DCI format 0_0 may be used as a fallback DCI for scheduling the PUSCH. Here, the CRC may be scrambled by a C-RNTI. The DCI format 0_0 in which the CRC is scrambled by the C-RNTI may include, for example, information in Table 11 below.

[Table 11]

| |
|---|
| - Identifier for DCI formats - [1] bit |
| - Frequency domain resource assignment - $[\lceil \log_2(N_{RB}^{UL,BWP}(N_{RB}^{UL,BWP}+1)/2) \rceil]$ bits |
| - Time domain resource assignment - X bits |

(continued)

| |
|---|
| - Frequency hopping flag - 1 bit.<br>- Modulation and coding scheme - 5 bits<br>- New data indicator - 1 bit<br>- Redundancy version - 2 bits<br>- HARQ process number - 4 bits<br>- TPC command for scheduled PUSCH - [2] bits<br>- UL/supplementary UL (SUL) indicator - 0 or 1 bit |

DCI format 0_1 may be used as a non-fallback DCI for scheduling the PUSCH. Here, the CRC may be scrambled by a C-RNTI. The DCI format 0_1 in which the CRC is scrambled by the C-RNTI may include, for example, information in Table 12 below.

[Table 12]

| |
|---|
| - Carrier indicator - 0 or 3 bits<br>- UL/SUL indicator - 0 or 1 bit<br>- Identifier for DCI formats - [1] bits<br>- Bandwidth part indicator - 0, 1 or 2 bits<br>- Frequency domain resource assignment<br>• For resource allocation type 0, $\lceil N_{RB}^{UL,BWP} / P \rceil$ bits<br>• For resource allocation type 1, $\lceil \log_2 (N_{RB}^{UL,BWP} (N_{RB}^{UL,BWP} + 1) / 2) \rceil$ bits<br>- Time domain resource assignment -1, 2, 3, or 4 bits<br>- Virtual resource block (VRB)-to-physical resource block (PRB) mapping - 0 or 1 bit, only for resource allocation type 1.<br>• 0 bit if only resource allocation type 0 is configured; |
| • 1 bit otherwise.<br>- Frequency hopping flag - 0 or 1 bit, only for resource allocation type 1.<br>• 0 bit if only resource allocation type 0 is configured;<br>• 1 bit otherwise.<br>- Modulation and coding scheme - 5 bits<br>- New data indicator - 1 bit<br>- Redundancy version - 2 bits<br>- HARQ process number - 4 bits<br>- 1st downlink assignment index - 1 or 2 bits<br>• 1 bit for semi-static HARQ-ACK codebook;<br>• 2 bits for dynamic HARQ-ACK codebook with single HARQ-ACK codebook.<br>- 2nd downlink assignment index - 0 or 2 bits<br>• 2 bits for dynamic HARQ-ACK codebook with two HARQ-ACK sub-codebooks;<br>• 0 bit otherwise.<br>- TPC command for scheduled PUSCH - 2 bits<br>- SRS resource indicator - $\left\lceil \log_2 \left( \sum_{k=1}^{L_{max}} \binom{N_{SRS}}{k} \right) \right\rceil$ or $\lceil \log_2 (N_{SRS}) \rceil$ bits<br>• $\left\lceil \log_2 \left( \sum_{k=1}^{L_{max}} \binom{N_{SRS}}{k} \right) \right\rceil$ bits for non-codebook based PUSCH transmission;<br>• $\lceil \log_2 (N_{SRS}) \rceil$ bits for codebook based PUSCH transmission.<br>- Precoding information and number of layers -up to 6 bits |

(continued)

| |
|---|
| - Antenna ports - up to 5 bits<br>- SRS request - 2 bits<br>- CSI request - 0, 1, 2, 3, 4, 5, or 6 bits<br>- Code block group (CBG) transmission information - 0, 2, 4, 6, or 8 bits<br>- Phase tracking reference signal (PTRS)-demodulation reference signal (DMRS) association - 0 or 2 bits.<br>- beta_offset indicator - 0 or 2 bits<br>- DMRS sequence initialization - 0 or 1 bit |

DCI format 1_0 may be used as a fallback DCI for scheduling the PDSCH. Here, the CRC may be scrambled by a C-RNTI. The DCI format 1_0 in which the CRC is scrambled by the C-RNTI may include, for example, information in Table 13 below.

[Table 13]

| |
|---|
| - Identifier for DCI formats - [1] bit<br>- Frequency domain resource assignment - $[\lceil \log_2 (N_{RB}^{DL,BWP} (N_{RB}^{DL,BWP} + 1)/2) \rceil]$ bits<br>- Time domain resource assignment - X bits<br>- VRB-to-PRB mapping - 1 bit.<br>- Modulation and coding scheme - 5 bits<br>- New data indicator - 1 bit<br>- Redundancy version - 2 bits<br>- HARQ process number - 4 bits<br>- Downlink assignment index - 2 bits<br>- TPC command for scheduled PUCCH - [2] bits<br>- PUCCH resource indicator - 3 bits<br>- PDSCH-to-HARQ feedback timing indicator - [3] bits |

DCI format 1_1 may be used as a non-fallback DC for scheduling the PDSCH. Here, the CRC may be scrambled by a C-RNTI. The DCI format 1_1 in which the CRC is scrambled by the C-RNTI may include, for example, information in Table 14 below.

[Table 14]

| |
|---|
| - Carrier indicator - 0 or 3 bits<br>- Identifier for DCI formats - [1] bits<br>- Bandwidth part indicator - 0, 1 or 2 bits<br>- Frequency domain resource assignment<br>• For resource allocation type 0, $\lceil N_{RB}^{DL,BWP} / P \rceil$ bits<br>• For resource allocation type 1, $\lceil \log_2 (N_{RB}^{DL,BWP} (N_{RB}^{DL,BWP} + 1)/2) \rceil$ bits<br>- Time domain resource assignment -1, 2, 3, or 4 bits |
| - VRB-to-PRB mapping - 0 or 1 bit, only for resource allocation type 1.<br>• 0 bit if only resource allocation type 0 is configured;<br>• 1 bit otherwise.<br>- PRB bundling size indicator - 0 or 1 bit<br>- Rate matching indicator - 0, 1, or 2 bits<br>- ZP CSI-RS trigger - 0, 1, or 2 bits<br>For transport block 1:<br>- Modulation and coding scheme - 5 bits<br>- New data indicator - 1 bit |

(continued)

| |
|---|
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

[PDCCH: CORESET, REG, CCE, Search Space]

Hereinafter, a downlink control channel in the 5G communication system will be described in more detail with reference to the drawings.

FIG. 8 is a diagram illustrating an example of a control resource set (CORESET) where a downlink control channel is transmitted in the 5G communication system. FIG. 8 shows an example in which two CORESETs (CORESET#1 801 and CORESET#2 802) are configured within a UE BWP 810 in the frequency domain and within one slot 820 in the time domain. The CORESETs 801 and 802 may be configured to specific frequency resources 803 within the entire UE BWP 810 in the frequency domain. One or multiple OFDM symbols may be configured in the time domain and defined as a CORESET duration 804. In an example shown in FIG. 8, the CORESET#1 801 is configured with the CORESET duration of two symbols, and the CORESET#2 802 is configured with the CORESET duration of one symbol.

The above described CORESET in the 5G may be configured to the UE by the base station via higher layer signaling (e.g., system information (SI), master information block (MIB), radio resource control (RRC) signaling). Configuring the CORESET to the UE refers to providing information such as a CORESET identity, a frequency location of the CORESET, a symbol length of the CORESET, etc. For example, information in Table 15 below may be included.

[Table 15]

```
ControlResourceSet ::=                    SEQUENCE {
    -- Corresponds to L1 parameter 'CORESET-ID'

    controlResourceSetId                  ControlResourceSetId,
    (CORESET identity)
    frequencyDomainResources                  BIT STRING (SIZE (45)),
    (Frequency domain resource allocation information)
    duration                              INTEGER (1..maxCoReSetDuration),
    (Time domain resource allocation information)
    cce-REG-MappingType                               CHOICE {
    (CCE-to-REG mapping scheme)
      interleaved                                 SEQUENCE {

        reg-BundleSize                            ENUMERATED {n2, n3, n6},
       (REG bundle size)
```

```
        precoderGranularity                     ENUMERATED {sameAsREG-
      bundle, allContiguousRBs},

        interleaverSize                         ENUMERATED {n2, n3, n6}
       (Interleaver size)

        shiftIndex
        INTEGER(0..maxNrofPhysicalResourceBlocks-1)          OPTIONAL
       (Interleaver shift)
  },
      nonInterleaved                            NULL
    },
    tci-StatesPDCCH                             SEQUENCE(SIZE
      (1..maxNrofTCI-StatesPDCCH)) OF TCI-StateId
        OPTIONAL,
       (QCL configuraiton information)
    tci-PresentInDCI                   ENUMERATED {enabled}
        OPTIONAL,      -- Need S
    }
```

In Table 15, tci-StatesPDCCH (simply referred to as transmission configuration indication (TCI) state) configuration information may include information about one or multiple synchronization signal/physical broadcast channel (SS/PBCH) block indexes or channel state information reference signal (CSI-RS) indexes having a QCL relationship with a DMRS transmitted in the corresponding CORESET.

FIG. 9 is a diagram illustrating an example of the basic unit of time and frequency resources constituting a downlink control channel that can be used in the 5G. According to FIG. 9, the basic unit of time and frequency resources constituting a control channel may be referred to as a resource element group (REG) 903, which may be defined as one OFDM symbol 901 in the time domain and one physical resource block (PRB) 902, i.e., 12 subcarriers, in the frequency domain. The base station may concatenate the REGs 903 to constitute a downlink control channel allocation unit.

As shown in FIG. 9, when a basic unit to which a downlink control channel is allocated in the 5G is referred to as a control channel element (CCE) 904, one CCE 904 may be composed of multiple REGs 903. In the example shown in FIG. 9, the REG 903 may include 12 REs, and when one CCE 904 is composed of six REGs 903, one CCE 904 may include 72 REs. When the downlink CORESET is configured, it may be composed of multiple CCEs 904. A specific downlink control channel may be transmitted while being mapped to one or more CCEs 904 according to an aggregation level (AL) in the CORESET. The CCEs 904 in the CORESET are distinguished by numbers. Here, the numbers of the CCEs 904 may be assigned according to a logical mapping scheme.

The basic unit of the downlink control channel shown in FIG. 9, that is, the REG 903 may include both REs to which DCI is mapped and a region to which a DMRS 905, which is a reference signal for decoding the DCI, is mapped. As shown in FIG. 9, three DMRSs 905 may be transmitted in one REG 903. The number of CCEs required for transmission of the PDCCH may be 1, 2, 4, 8, or 16 depending on the AL. A different number of CCEs may be used to implement link adaptation of the downlink control channel. For example, if AL=L, one downlink control channel may be transmitted through L CCEs. The UE needs to detect a signal in a state in which the UE does not know information about the downlink control channel, and a search space representing a set of CCEs has been defined for blind decoding. The search space is a set of downlink control channel candidates composed of CCEs that the UE has to attempt to decode at a given AL. Since there are various ALs that make one bundle of 1, 2, 4, 8, or 16 CCEs, the UE may have multiple search spaces. A search space set may be defined as a set of search spaces at all configured ALs.

The search space may be classified into a common search space and a UE-specific search space. A certain group of UEs or all the UEs may examine the common search space of the PDCCH so as to receive cell common control information such as dynamic scheduling of system information or a paging message. For example, PDSCH scheduling allocation information for transmission of the SIB including cell operator information, etc. may be received by examining the common search space of the PDCCH. In the case of the common search space, since a certain group of UEs or all the UEs need to receive the PDCCH, the common search space may be defined as a set of prearranged CCEs. Scheduling allocation information about the UE-specific PDSCH or PUSCH may be received by examining the UE-specific search space of the PDCCH. The UE-specific search space may be UE-specifically defined as a function of the UE identity and various system parameters.

In the 5G, parameter for the search space of the PDCCH may be configured to the UE by the base station via higher layer signaling (e.g., SIB, MIB, RRC signaling, etc.). For example, the base station may configure, to the UE, the number of PDCCH candidates at each aggregation level L, the monitoring periodicity for the search space, the monitoring occasion of symbol units in the slots for the search space, the search space type (common search space or UE-specific search space), the combination of RNTI and DCI format to be monitored in the search space, the CORESET index to monitor the search space, etc. For example, it may include information in Table 16 below.

[Table 16]

```
SearchSpace ::=                          SEQUENCE {
    -- Identity of the search space. SearchSpaceId = 0 identifies the SearchSpace
         configured via PBCH (MIB) or ServingCellConfigCommon.
    searchSpaceId                            SearchSpaceId,
    (Search space ID)
    controlResourceSetId                     ControlResourceSetId,
    (CORESET ID)
    monitoringSlotPeriodicityAndOffset       CHOICE {
    (Monitoring slot level periodicity)
        sl1                                  NULL,
        sl2                                  INTEGER (0..1),
```

```
    sl4                                    INTEGER (0..3),
    sl5                                    INTEGER (0..4),
    sl8                                    INTEGER (0..7),
    sl10                                   INTEGER (0..9),
    sl16                                   INTEGER (0..15),
    sl20                                   INTEGER (0..19)
}
                                           OPTIONAL,
duration (Monitoring duration)              INTEGER (2..2559)
monitoringSymbolsWithinSlot                     BIT STRING (SIZE (14))
(Monitoring system within slot)
nrofCandidates                             SEQUENCE {
(Number of PDCCH candidates per AL)
    aggregationLevel1                  ENUMERATED {n0, n1, n2, n3, n4, n5, n6,
      n8},
    aggregationLevel2                  ENUMERATED {n0, n1, n2, n3, n4, n5, n6,
      n8},
    aggregationLevel4                  ENUMERATED {n0, n1, n2, n3, n4, n5, n6,
      n8},
    aggregationLevel8                  ENUMERATED {n0, n1, n2, n3, n4, n5, n6,
      n8},
    aggregationLevel16                 ENUMERATED {n0, n1, n2, n3, n4, n5, n6,
      n8}
},

searchSpaceType                                CHOICE {
(Search space type)
    -- Configures this search space as common search space (CSS) and DCI formats
      to monitor.
    common                                     SEQUENCE {
   (Common search space)
}
    ue-Specific                                SEQUENCE {
   (UE-specific search space)
      -- Indicates whether the UE monitors in this USS for DCI formats 0-0 and 1-0
      or for formats 0-1 and 1-1.
```

```
        formats                                    ENUMERATED {formats0-0-And-1-
        0, formats0-1-And-1-1},
        ...
    }
```

The base station may configure one or more search space sets to the UE according to configuration information. According to some embodiment, the base station may configure search space set 1 and search space set 2 to the UE. The base station may configure to monitor DCI format A scrambled by X-RNTI in the common search space within the search space set 1, and to monitor DCI format B scrambled by Y-RNTI in the UE-specific search space within the search space set 2.

According to the configuration information, one or multiple search space sets may exist in the common search space or the UE-specific search space. For example, search space set#1 and search space set#2 may be configured as the common search space, and search space set#3 and search space set#4 may be configured as the UE-specific search space.

In the common search space, the following combinations of the DCI format and the RNTI may be monitored. However, the disclosure is not limited to the following example.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of the DCI format and the RNTI may be monitored. However, the disclosure is not limited to the following example.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the definitions and usages described below.

- Cell RNTI (C-RNTI): Used for UE-specific PDSCH scheduling
- Temporary Cell RNTI (TC-RNTI): Used for UE-specific PDSCH scheduling
- Configured Scheduling RNTI (CS-RNTI): Used for semi-statically configured UE-specific PDSCH scheduling
- Random Access RNTI (RA-RNTI): Used for PDSCH scheduling at random access stage
- Paging RNTI (P-RNTI): Used for PDSCH scheduling where paging is transmitted
- System Information RNTI (SI-RNTI): Used for PDSCH scheduling where system information is transmitted
- Interruption RNTI (INT-RNTI): Used for notifying of whether PDSCH is punctured
- Transmit Power Control for PUSCH RNTI (TPC-PUSCH-RNTI): Used for indicating power control command for PUSCH
- Transmit Power Control for PUCCH RNTI (TPC-PUCCH-RNTI): Used for indicating power control command for PUCCH
- Transmit Power Control for SRS RNTI (TPC-SRS-RNTI): Used for indicating power control command for SRS

The above-described specified DCI formats may follow the definition shown in Table 17 below.

[Table 17]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

(continued)

| DCI format | Usage |
|---|---|
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G, the search space of the aggregation level *L* in the CORESET *p* and the search space set s may be expressed by Equation 1 below.

[Equation 1]

$$L \cdot \left\{ \left( Y_{p,n^{\mu}_{s,f}} + \left\lfloor \frac{m_{s,n_{CI}} \cdot N_{CCE,p}}{L \cdot M^{(L)}_{s,max}} \right\rfloor + n_{CI} \right) mod \left\lfloor \frac{N_{CCE,p}}{L} \right\rfloor \right\} + i$$

- L: Aggregation level
- $n_{CI}$: Carrier index
- $N_{CCE,p}$: Total number of CCEs existing in the CORESET *p*
- $n^{\mu}_{s,f}$: Slot index
- $M^{(L)}_{s,max}$: Number of PDCCH candidates of aggregation level *L*
- $m_{s,nCI}=0, \cdots, M^{(L)}_{s,max}-1$: PDCCH candidate group index of aggregation level *L*
- $i=0, \cdots, L-1$

- $Y_{p,n^{\mu}_{s,f}} = \left(A_p \cdot Y_{p,n^{\mu}_{s,f}-1}\right) mod\ D$ , $Y_{p,-1} = n_{RNT1} \neq 0$,

  $A_p = 39827$ *for pmod*$3 = 0$ $A_p = 39829$ *for pmod*$3 = 1$
  $A_p = 39839$ *for pmod*$3 = 2$ $D = 65537$

- $n_{RNTI}$: UE identifier

The $Y_{p,n^{\mu}_{s,J}}$ value may correspond to zero in the case of the common search space.

In the case of the UE-specific search space, the $Y_{p,n^{\mu}_{s,J}}$ value may correspond to a value that varies depending on the UE identity (C-RNTI or ID configured by the base station to the UE) and the time index.

In the 5G, multiple search space sets may be configured with different parameters (e.g., parameters in Table 16), and accordingly, the search space set monitored by the UE may differ at each time point. For example, if search space set#1 is configured with the X-slot period, search space set#2 is configured with the Y-slot period, and X and Y are different, the UE may monitor both search space set#1 and space set#2 in a specific slot, and may monitor one of search space set#1 and search space set#2 in a specific slot.

[PDCCH: TCI State Related]

Specifically, TCI state combinations applicable to a PDCCH DMRS antenna port are as shown in Table 18 below. In Table 18, the fourth row is a combination assumed by the UE before RRC configuration, and configuration after RRC is not possible.

[Table 18]

| Valid TCI state Configuration | DL RS 1 | qcl-Type1 | DL RS 2 (if configured) | qcl- Type2 (if configured) |
|---|---|---|---|---|
| 1 | TRS | QCL-TypeA | TRS | QCL-TypeD |
| 2 | TRS | QCL-TypeA | CS I -RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

In the NR, for dynamic allocation of a PDCCH beam, a hierarchical signaling method is supported as shown in FIG. 10. With reference to FIG. 10, the base station may configure N TCI states 1005, 1010, ⋯, 1020 to the UE via RRC signaling 1000, and may configure some 1025 of them as TCI states for a CORESET. Thereafter, the base station may indicate one of the TCI states 1030, 1035, and 1040 for the CORESET to the UE via MAC CE signaling 1045. Thereafter, the UE may receive a PDCCH based on beam information included in the TCI state indicated by the MAC CE signaling.

FIG. 11 is a diagram illustrating a TCI indication MAC CE signaling structure for the PDCCH DMRS. With reference to FIG. 11, the TCI indication MAC CE signaling for the PDCCH DMRS consists of 2 bytes (16 bits) and includes a serving cell ID 1115 of 5 bits, a CORESET ID 1120 of 4 bits, and a TCI state ID 1125 of 7 bits.

FIG. 12 is a diagram illustrating an example of beam configuration for a control resource set (CORESET) and a search space according to the above description. With reference to FIG. 12, the base station may indicate one TCI state 1205 in a list of TCI states included in a CORESET 1200 configuration through MAC CE signaling. Thereafter, before another TCI state is indicated to that CORESET through another MAC CE signaling, the UE considers that the same QCL information (beam #1) 1205 is applied to one or more search spaces 1210, 1215, and 1220 connected to the CORESET. According to the above-described PDCCH beam allocation method, it is difficult to indicate a beam change faster than a MAC CE signaling delay, and there is a problem in that the same beam is collectively applied to all CORESETs regardless of search space characteristics, making flexible PDCCH beam management difficult. Hereinafter, embodiments of the disclosure provide a more flexible PDCCH beam configuration and management method. In the following description of embodiments of the disclosure, several distinct examples are provided for convenience, but these are not mutually exclusive and may be appropriately combined and applied depending on the situation.

The base station may configure one or multiple TCI states for a certain CORESET to the UE, and may activate one of the configured TCI states through a MAC CE activation command. For example, {TCI state#0, TCI state#1, TCI state#2} are configured as the TCI state in the CORESET#1, and the base station may transmit a command to the UE via MAC CE to activate the assumption of TCI state#0 as the TCI state for CORESET#1. Based on the activation command for the TCI state received via the MAC CE, the UE may correctly receive a DMRS of the corresponding CORESET according to QCL information in the activated TCI state.

For the CORESET configured with index 0 (CORESET#0), if the UE has not received the MAC CE activation command for the TCI state of CORESET#0, the UE may assume that the DMRS transmitted in the CORESET#0 is QCLed with an SS/PBCH block identified during the initial access procedure or non-contention-based random access procedure that is not triggered by a PDCCH command.

For the CORESET configured with any index other than 0 (CORESET#X), if the UE has been not configured with the TCI state for CORESET#X, or if the UE has been configured with one or more TCI states but has not received the MAC CE activation command for activating one of the TCI states, the UE may assume that the DMRS transmitted in the CORESET#X is QCLed with an SS/PBCH block identified during the initial access procedure.

[PDSCH/PUSCH: Frequency Resource Allocation Related]

Next, the frequency domain resource assignment (FDRA) for a physical downlink shared channel (PDSCH) and a physical uplink shared channel (PUSCH) in NR will be described.

FIG. 13 is a diagram illustrating an example of the frequency domain resource assignment of the PDSCH or PUSCH in a wireless communication system according to an embodiment of the disclosure.

FIG. 13 illustrates three frequency domain resource assignment methods configurable via higher layers in an NR wireless communication system: FDRA type 0 (1300), FDRA type 1 (1305), and dynamic switch (1310).

With reference to FIG. 13, in the case 1300 where the UE is configured to use only FDRA type 0 via higher layer signaling, some DCI for scheduling PDSCH or PUSCH to the UE includes a bitmap composed of $N_{RBG}$ bits. The conditions for this will be described later. Here, $N_{RBG}$ refers to the number of resource block groups (RBGs) determined as shown in Table 19 below based on a BWP size allocated by a BWP indicator and a higher layer parameter rbg-Size. Data is transmitted in RBGs indicated as ’1’ by the bitmap.

[Table 19]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

The size of frequency resources in the BWP may be defined as the number of RBs included in the BWP. More specifically, if the UE is indicated the FDRA type-0 resource assignment, the length of the FDRA field of the DCI received by the UE is equal to the number of RBGs (NRBG) in the BWP, which is $N_{RBG=} \lceil (N_{BWP}^{size}+(N_{BWP}^{start} \mathrm{mod} P))/P \rceil$ . Here, the first RBG in the BWP includes $RBG_0^{size}=P\text{-}N_{BWP}^{size} \mathrm{mod} P$ RBs, and the last RBG in the BWP includes $\mathrm{RBG}_{last}^{\mathrm{size}} = (\mathrm{N}_{\mathrm{BWP}}^{\mathrm{start}} + \mathrm{N}_{\mathrm{BWP}}^{\mathrm{size}}) mod\ P$ RBs if $(N_{BWP}^{start}+N_{BWP}^{size}) \mathrm{mod} P>0$ , and includes $\mathrm{RBG}_{last}^{\mathrm{size}} = \mathrm{P}$ RBs otherwise. The remaining RBGs in the BWP include *P* RBs, where *P* is the number of nominal RBGs determined according to the above Table 19.

In the case 1305 where the UE is configured to use only FDRA type 1 via higher layer signaling, the DCI that allocates PDSCH or PUSCH to the UE includes frequency domain resource assignment (FDRA) information composed of $\lceil \log_2(N_{RB}^{BWP} * (N_{RB}^{BWP} + 1)/2 \rceil$ bits. Here, $N_{RB}^{BWP}$ is the number of RBs included in the BWP. Through this, the base station can configure a starting VRB 1320 and a length 1325 of frequency domain resources allocated continuously therefrom.

If the UE is not configured with higher upper layer signaling, vrb-ToPRB-Interleaver, the UE may connect the resources allocated to the VRB to the PRB without interleaving. If the UE is configured with higher layer signaling, vrb-ToPRB-Interleaver, this higher layer signaling has a value of 2 or 4, which may be the unit of multiple RBs for performing interleaving. In other words, RB bundles of 2 or 4 units may be used for interleaving.

If the UE is configured with the i-th BWP starting from $N_{BWP,i}^{start}$ position and composed of $N_{BWP,i}^{size}$ RBs in length, and the vrb-ToPRB-Interleaver is configured as $L_i$ , the UE can divide the i-th BWP into $N_{bundle=} \lceil (N_{BWP,i}^{size}+(N_{BWP,i}^{start} \mathrm{mod} L_i))/L_i \rceil$ RB bundles, each of which can consist of $L_i$ RBs.

- In the i-th BWP, the first RB bundle may be composed of $L_i\text{-}(N_{BWP,i}^{size} \mathrm{mod} L_i)$ RBs.
- In the i-th BWP, the last RB bundle may be composed of $(N_{BWP,i}^{start}+N_{BWP,i}^{size}) \mathrm{mod} L_i$ RBs if the $(N_{BWP,i}^{start}+N_{BWP,i}^{size}) \mathrm{mod} L_i$ value is greater than 0, and otherwise, it may be composed of $L_i$ RBs.
- In the i-th BWP, the remaining RB bundles may be composed of $L_i$ RBs.

In this case, VRBs may be connected to PRBs according to the following method.

- The last VRB bundle may be connected to the last PRB bundle.
- The j-th (j = 0, 1, ..., $N_{bundle}$-2) VRB bundle may be connected to the *f*(*j*)-th PRB bundle, and *f*(*j*) may be expressed as in Equation 2 below.

[Equation 2]

$$f(j) = rC + c$$
$$j = cR + r$$
$$r = 0, 1, \dots, R - 1$$
$$c = 0, 1, \dots, C - 1$$
$$R = 2$$
$$C = \lfloor N_{bundle}/R \rfloor$$

FIG. 14 is a diagram illustrating a VRB-PRB interleaving scheme of PDSCH in FDRA type-1 resource allocation according to an embodiment of the disclosure. FIG. 14 shows a case 1410 where each of the first and last VRB bundles is composed of one VRB within a BWP 1400 composed of 10 RBs. Accordingly, the number of VRB bundles $N_{bundle}$ may be 6, and calculated as $C=\lfloor N_{bundle}/R \rfloor=3$ by the above Equation 2. Since the j-th VRB bundle may be connected to the f(j)-th PRB bundle by the above Equation 2, the connection from a VRB bundle to a PRB bundle may be performed as denoted by 1420 through the result 1430 calculated by the above Equation 2. For example, VRB bundle 1 1440 may be connected to PRB bundle 3 1450.

In the case 1310 where the UE is configured to use both FDRA type-0 resource allocation and FDRA type-1 resource allocation via higher layer signaling, some DCIs that allocate PDSCH/PUSCH to the UE include frequency domain resource allocation information composed of bits of the larger value 1335 among the payload 1315 for configuring FDRA type-0 resource allocation and the payloads 1320 and 1325 for configuring FDRA type-1 resource allocation. The conditions for this will be explained later. At this time, one bit may be added to the most significant bit (MSB) of the frequency domain resource allocation information in the DCI. If this bit has a value of '0', it may indicate that FDRA type-0 resource allocation is used, and if this bit has a value of '1', it may indicate that FDRA type-1 resource allocation is used.

If the UE is configured with the FDRA type-2 resource allocation method via higher layer signaling, the UE can be indicated the FDRA type-2 resource allocation method from the base station according to the following method.

The UE may be indicated RB allocation information from the base station, which includes a set of M interlace indexes.

The interlace indexes $m\in\{0,1,...,M-1\}$ may be composed of common RBs $\{m, M+m, 2M+m, 3M+m, ...\}$, and M may be defined as shown in Table 20.

[Table 20]

| $\mu$ | ***M*** |
|---|---|
| 0 | 10 |
| 1 | 5 |

The relationship between RB $n^{\mu}_{IRB,m}\in\{0,1,...\}$, which is in interlace *m* and bandwidth part *i,* and common RB $n^{\mu}_{CRB}$ can be defined as follows.

■ $n^{\mu}_{CRB}=Mn^{\mu}_{IRB,m}+N^{start,\mu}_{BWP,i}+((m-N^{start,\mu}_{BWP,i})\mathrm{mod}M)$

■ where $N^{start,\mu}_{BWP,i}$ is the common resource block where bandwidth part starts relative to common resource block 0. u is subcarrier spacing index

When the subcarrier spacing is 15 kHz (u=0), RB allocation information for an interlace set with indexes m0 + 1 may be notified from the base station to the UE. In addition, the resource allocation field may be composed of a resource indicator value (RIV). When the resource indicator value is $0\leq RIV<M(M+1)/2$ $l$=0, 1,...,$L$-1, it may be composed of a start interlace m0 and the number of consecutive interlaces, and its value is as follows.

$$\text{if } (L-1) \leq \lfloor M/2 \rfloor \text{ then}$$

$$RIV = M(L-1) + m_0$$

$$\text{else}$$

$$RIV = M(M-L+1) + (M-1-m_0)$$

When the resource indicator value is $RIV \geq M(M+1)/2$, the resource indicator value is composed of the start interlace index m0 and *l* values and may be composed as shown in Table 21.

[Table 21]

| ***RIV* - *M*(*M* + 1)/2** | m0 | *l* |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

When the subcarrier spacing is 30 kHz (u=1), RB allocation information may be notified from the base station to the UE in the form of a bitmap indicating the interlaces allocated to the UE. The bitmap size is M, and each bit in the bitmap corresponds to the interlace. The interlace bitmap may be mapped in order from MSB to LSB for interlace indexes 0 to M-1.

Additionally, for 15 kHz and 30 kHz, the least significant bit (LSB) $Y = \lceil \log 2 \frac{N^{BWP}_{RB\text{-}set}(N^{BWP}_{RB\text{-}set}+1)}{2} \rceil$ of the FDRA field may indicate a contiguous RB set of a PUSCH scheduled in DCI format 0_1. The Y bit may be composed of a resource indication value (RIVRBset). In $0 \leq RIV_{RBset} < N^{BWP}_{RB\text{-}set}(N^{BWP}_{RB\text{-}set}+1)/2$ , $l$=0,1,....$L_{RBset}$-1, the RIVRBset value may be determined by the starting RB set ($RBset_{START}$) and the number of contiguous RB sets ($L_{RBset}$($L_{RBset} \geq 1$)). The RIVRBset value can be defined as follows:

$$\text{if } (L_{RBset}-1) \leq \lfloor N^{BWP}_{RB-set}/2 \rfloor \text{ then}$$

$$RIV_{RBset} = N^{BWP}_{RB-set}(L_{RBset}-1) + RBset_{\text{START}}$$

$$\text{else}$$

$$RIV_{RBset} = N^{BWP}_{RB-set}(N^{BWP}_{RB-set} - L_{RBset} + 1) + (N^{BWP}_{RB-set} - 1 - RBset_{\text{START}})$$

$N^{BWP}_{RB\text{-}set}$ refers to the number of RB sets included in the bandwidth part, and can be determined by the number of guard gaps (or bands) within the carrier configured via higher signaling (or preconfigured).

[PDSCH/PUSCH: Time Domain Resource Allocation Related]

Hereinafter, a method for time domain resource allocation for a data channel in a next-generation mobile communication system (5G or NR system) will be described.

The base station may configure to the UE a table for time domain resource allocation information on a downlink data channel (PDSCH: physical downlink shared channel) and an uplink data channel (PUSCH: physical uplink shared channel) via higher layer signaling (e.g., RRC signaling). For PDSCH, a table composed of maxNrofDL-Allocations=16 entries may be configured, and for PUSCH, a table composed of maxNrofUL-Allocations=16 entries may be configured. In an embodiment, the time domain resource allocation information may include PDCCH-to-PDSCH slot timing (corresponding to a time interval in slot units between a time point at which a PDCCH is received and a time point at which a PDSCH scheduled by the received PDCCH is transmitted, and denoted by K0), PDCCH-to-PUSCH slot timing (corresponding to a time interval in slot units between a time point at which a PDCCH is received and a time point at which a PUSCH scheduled by the received PDCCH is transmitted, and denoted by K2), information on the position and length of a starting symbol where the PDSCH or PUSCH is scheduled within a slot, a mapping type of the PDSCH or PUSCH, etc. For example, information such as Table 22 or Table 23 below may be transmitted from the base station to the UE.

[Table 22]

| ***PDSCH-TimeDomainResourceAllocationList* information element** |
|---|
| PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE {<br>k0 INTEGER(0..32) OPTIONAL,<br>mappingType ENUMERATED {typeA, typeB},<br>startSymbolAndLength INTEGER (0..127)<br>} |

[Table 23]

| ***PUSCH-TimeDomainResourceAllocation* information element** |
|---|
| PUSCH-TimeDomainResourceAllocationList ::= SEQUENCE (SIZE(1..maxNrofUL-Allocations)) OF PUSCH-TimeDomainResourceAllocation<br><br>PUSCH-TimeDomainResourceAllocation ::= SEQUENCE {<br>k2 INTEGER(0..32) OPTIONAL,<br>mappingType ENUMERATED {typeA, typeB},<br>startSymbolAndLength INTEGER (0..127)<br>} |

The base station may notify one of the entries in the above-described table for the time-domain resource allocation information to the UE via L1 signaling (e.g., DCI) (e.g., it may be indicated by a 'time domain resource allocation' field in DCI). Based on the DCI received from the base station, the UE may acquire time-domain resource allocation information for PDSCH or PUSCH.

FIG. 15 is a diagram illustrating an example of time domain resource allocation of a PDSCH in a wireless communication system according to an embodiment of the disclosure.

With reference to FIG. 15, the base station may indicate a time domain position of a PDSCH resource according to subcarrier spacings (SCSs) ($\mu_{PDSCH}$, $\mu_{PDCCH}$) of a data channel and a control channel and a scheduling offset (K0) value, configured using a higher layer, and a start position 1500 and a length 1505 of an OFDM symbol in one slot, dynamically indicated via DCI.

[PDSCH: TCI State Activation MAC-CE]

FIG. 16 illustrates a procedure for beam configuration and activation of a PDSCH. A list of TCI states for a PDSCH may be indicated via a higher layer list such as RRC (1600). The list of TCI states may be indicated by, for example, tci-StatesToAddModList and/or tci-StatesToReleaseList in PDSCH-Config IE per BWP. Next, some of the list of TCI states may be activated via MAC-CE (1620). Among the TCI states activated via MAC-CE, a TCI state for PDSCH may be indicated via DCI (1640). The maximum number of activated TCI states may be determined according to the capability reported by the UE. Reference numeral 1650 shows an example of a MAC-CE structure for PDSCH TCI state activation/deactivation.

The meaning of each field in MAC CE and values configurable for each field are as in Table 24 below.

[Table 24]

| |
|---|
| - **Serving Cell ID:** This field indicates the identity of the Serving Cell for which the MAC CE applies. The length of the field is 5 bits. If the indicated Serving Cell is configured as part of a simultaneousTCI-UpdateListl or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;<br>- **BWP ID:** This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;<br>- **$T_i$** (TCI state identifier): If there is a TCI state with TCI-StateId i as specified in TS 38.331 [5], this field indicates the activation/deactivation status of the TCI state |
| with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;<br>- **CORESET Pool ID:** This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE. |

[UE Capability Report Related]

In the LTE and the NR, the UE may perform a procedure of reporting the UE-supported capability to a serving base station while being connected to that base station. In the description below, this is referred to as a UE capability report.

The base station may transmit a UE capability enquiry message requesting the UE capability report to the UE which is in a connected state. This message may include a UE capability request for each radio access technology (RAT) type of the base station. The request for each RAT type may include supported frequency band combination information, etc. Further, in the case of the UE capability enquiry message, the UE capability for each of multiple RAT types may be requested through one RRC message container transmitted by the base station, or the base station may transmit multiple UE capability enquiry messages including the UE capability request for each RAT type to the UE. That is, the UE capability enquiry may be repeated multiple times in a single message, and the UE may construct a corresponding UE capability information message and report it multiple times. In the next generation mobile communication system, the UE capability request may be made for multi-RAT dual connectivity (MR-DC) including NR, LTE, and E-UTRA-NR dual connectivity (EN-DC). In general, the UE capability enquiry message is transmitted initially after the UE is connected to the base station. However, the UE capability enquiry message may be requested under any condition if the base station needs.

In the above step, the UE that has received the UE capability report request from the base station constructs the UE capability according to the RAT type and band information requested by the base station. A method for constructing the UE capability by the UE in the NR system is summarized as follows.

1. If the UE receives a list of LTE and/or NR frequency bands from the base station with a UE capability request, the UE constructs a band combination (BC) for EN-DC and NR stand-alone (SA). That is, the UE constructs a candidate BC list for EN-DC and NR SA, based on bands requested to the base station with FreqBandList. In addition, the bands has priorities in the order described in FreqBandList.
2. If the base station requests the UE capability report by setting "eutra-nr-only" flag or "eutra flag", the UE removes matters relating to NR SA BCs from the above candidate BC list. This operation may occur only if the LTE base station (eNB) requests the "eutra" capability.
3. Thereafter, the UE removes fallback BCs from the candidate BC list constructed in the above step. Here, the fallback BCs refer to BCs obtainable by removing a band corresponding to at least one SCell from an arbitrary BC, and may be omitted because a BC before removing the band corresponding to at least one SCell may already cover the fallback BC. This step is also applied to MR-DC, that is, LTE bands are also applied. The BCs remaining after this step correspond to a final "candidate BC list".
4. The UE selects BCs to be reported by selecting BCs suitable for the requested RAT type from the final "candidate BC list". In this step, the UE constructs supportedBandCombinationList in a predetermined order. That is, the UE constructs the BCs and UE capability to be reported according to a predetermined order of RAT type (nr -> eutra-nr -> eutra). In addition, the UE constructs featureSetCombination for the constructed supportedBandCombinationList, and constructs a list of "candidate feature set combinations" in the candidate BC list from which a list of fallback BCs (including the same or lower level capabilities) has been removed. The "candidate feature set combinations" include all of feature set combinations for the NR and the EUTRA-NA BC, and may be obtained from feature set combinations of containers of UE-NR-Capabilities and UE-MRDC-Capabilities.
5. In addition, if the requested RAT type is EUTRA-NR and makes some influence, featureSetCombinations is included in both containers of UE-MRDC-Capabilities and UE-NR-Capabilities. However, the feature set of the NR includes only UE-NR-Capabilities.

After the UE capability is constructed, the UE transmits a UE capability information message including the UE capability to the base station. Thereafter, based on the UE capability received from the UE, the base station performs suitable scheduling and transmission/reception management for that UE.

Now, embodiments of the disclosure will be described in detail with the accompanying drawings. The disclosure is applicable to both FDD and TDD systems. Hereinafter, in the disclosure, higher signaling (or higher layer signaling) is a signal transmission method in which data is transmitted from the base station to the UE using a downlink data channel of a physical layer or transmitted from the UE to the base station using an uplink data channel of a physical layer, and may be referred to as RRC signaling, PDCP signaling, or medium access control (MAC) control element (CE) (MAC CE).

In the disclosure, in determining whether to apply coordinated communication, the UE may use various methods such as a method in which PDCCH(s) for allocating PDSCH to which coordinated communication is applied has a specific format, a method in which PDCCH(s) for allocating PDSCH to which coordinated communication is applied includes a specific indicator for informing whether coordinated communication is applied, a method in which PDCCH(s) for allocating PDSCH to which coordinated communication is applied is scrambled by a specific RNTI, or a method in which it is assumed that coordinated communication is applied in a specific section indicated by a higher layer. Hereinafter, for convenience of description, the case where the UE receives a PDSCH to which coordinated communication is applied based on conditions similar to the above will be referred to as an NC-JT case.

In the disclosure, determining a priority between A and B refers to selecting one having a higher priority according to a predetermined priority rile to perform a corresponding operation, or omitting (or dropping) an operation for the other one having a lower priority, etc.

In the disclosure, although the above examples are described through a plurality of embodiments, the examples are not independent and one or more embodiments can be applied at the same time or in combination.

In the following description of the disclosure, for convenience, a cell, a transmission reception point (TRP), a panel, a beam, or/and a transmission direction, which can be distinguished through higher layer/L 1 parameters such as TCI state or spatial relation information, or indicators such as cell ID, TRP ID, and panel ID, may be described as a TRP, a beam, or a TCI state. Therefore, in actual application, the TRP, the beam, or the TCI state may be appropriately replaced with one of the above terms.

In the disclosure, when determining whether cooperative communication is applied, the UE may use various methods, such as a method in which the PDCCH(s) that allocate the PDSCH to which cooperative communication is applied have a specific format, a method in which the PDCCH(s) that allocate the PDSCH to which cooperative communication is applied include a specific indicator indicating whether cooperative communication is applied, a method in which the PDCCH(s) that allocate the PDSCH to which cooperative communication is applied are scrambled with a specific RNTI, or a method in which cooperative communication is assumed to be applied in a specific section indicated by a higher layer. For the convenience of explanation, the case where the UE receives the PDSCH with cooperative communication applied based on conditions similar to the above will be referred to as the NC-JT case.

Hereinafter, embodiments of the disclosure will be described in detail with the attached drawings. In the description of the disclosure, a base station refers to an entity performing resource allocation of a UE, and may be at least one of a gNode B (gNB), an eNode B (eNB), a Node B, a base station (BS), a radio access unit, a base station controller, or a node on a network. Also, a UE may include a user equipment (UE), a mobile station (MS), a cellular phone, a smart phone, a computer, or a multimedia system capable of performing a communication function. Hereinafter, embodiments of the disclosure will be described using the 5G system as an example, but the embodiments may also be applied to other communication systems having a similar technical background or channel type, such as LTE or LTE-A mobile communication and mobile communication technologies developed after 5G. Accordingly, the embodiments of the disclosure may be applied to other communication systems through some modifications without significantly departing from the scope of the disclosure as will be apparent to a person skilled in the art. The contents of the disclosure can be applied to FDD and TDD systems.

In the description of the disclosure, a detailed description of known functions or components will be omitted when it may make the subject matter of the disclosure unnecessarily unclear. The terms which will be described below are terms defined in consideration of the functions in the disclosure, and may be varied according to users, intentions of operators, or customs. Therefore, the definitions of the terms should be made based on the contents throughout the description.

In the description of the disclosure, a higher layer signaling may be a signaling corresponding to at least one or a combination of one or more of the following signaling.

- MIB (Master Information Block)
- SIB (System Information Block) or SIB X (X=1, 2, ...)
- RRC (Radio Resource Control)
- MAC (Medium Access Control) CE (Control Element)

In addition, an L1 signaling may be a signaling corresponding to at least one or a combination of one or more of signaling methods using the following physical layer channels or signaling.

- PDCCH (Physical Downlink Control Channel)
- DCI (Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI not used for the purpose of scheduling downlink or uplink data)
- PUCCH (Physical Uplink Control Channel)
- UCI (Uplink Control Information)

In the description of the disclosure, determining a priority between A and B refers to selecting one having a higher priority according to a predetermined priority rile to perform a corresponding operation, or omitting (or dropping) an operation for the other one having a lower priority, etc.

The term slot used in the disclosure is a general term that refers to a specific time unit corresponding to a transmit time interval (TTI), and specifically may refer to a slot used in the 5G NR system, or refer to a slot or a subframe used in the 4G LTE system.

In the disclosure, the above examples are described through many embodiments, but they are not independent and two or more embodiments can be applied simultaneously or in combination.

<First Embodiment: MC-DCI Scheduling Method>

As an embodiment of the disclosure, a scheduling method using multi-cell scheduling DCI (MC-DCI) will be described. This embodiment may be combined with other embodiments.

In the disclosure, one DCI may be a single-DCI or one DCI format, and a plurality of DCIs may be multi-DCI or a plurality of DCI formats. In the disclosure, one DCI may be one PDCCH and/or transmitted and received through one PDCCH, and a plurality of DCIs may be a plurality of PDCCHs and/or transmitted and received through a plurality of PDCCHs.

Generally, the UE may receive one DCI, which may include scheduling information for one cell. For example, DCI format 0_0/0_1/0_2 may schedule one PUSCH in one uplink cell. Additionally, DCI formats 1_0/1_1/1_2 may schedule one PDSCH for one downlink cell. The scheduled cell may be indicated via a carrier indication field (DIF) of the DCI format.

However, according to this method, if PDSCH and/or PUSCH are scheduled in each of a plurality of cells, a plurality of DCIs should be transmitted and received. Therefore, significant DCI overhead may occur. To reduce DCI overhead, one DCI may schedule a PDSCH and/or a PUSCH for each of a plurality of cells. This is conveniently referred to as MC-DCI. In the disclosure, MC-DCI may be one DCI that schedules a PDSCH and/or a PUSCH for each of a plurality of cells. In this case, the DCI format of MC-DCI may be DCI format 1_X or 1_3 for PDSCH scheduling, and DCI format 0_X or 0_3 for PUSCH scheduling.

Within a specific cell, the UE may report the number of candidates for a cell set that can be scheduled via MC-DCI to the base station through UE capability (UECapability). Here, the cell set refers to a set that includes a plurality of cells. For example, cell set 1 may include cell 1, cell 2, cell 3, and cell 4, and cell set 2 may include cell 5, cell 6, cell 7, and cell 8. The maximum number of cells that can be included in the cell set may be 4, and the cells included in respective cell sets may not overlap each other. The number of candidates for the cell set that the UE can report as UE capability may be 1 or 2 or more.

If the UE reports the number of candidates for the cell set that can be scheduled via MC-DCI received within a specific cell as 1, the UE can expect the absence of a cell set indicator field in the MC-DCI, and upon receiving the MC-DCI from the base station, the UE can expect scheduling for cells within one cell set.

If the UE reports the number of candidates for the cell set that can be scheduled via MC-DCI received within a specific cell as 2 or more, the UE can expect the presence of a cell set indicator field in the MC-DCI, and the UE can be indicated one cell set index from the base station through that field. The UE can receive scheduling information for one or more cells within a single cell set among a plurality of cell sets via MC-DCI. The following description assumes that the number of cell set candidates reported by the UE is 1, but the same explanation can also be applied to cases where the number of cell set candidates is 2 or more.

The cells that can be scheduled in MC-DCI can be configured via a higher layer. For example, it is assumed that MC-DCI can schedule cell 0, cell 1, cell 2, and cell 3 (simultaneously). Upon receiving the MC-DCI, the UE can identify the scheduling information for cell 0, cell 1, cell 2, and cell 3. That is, the UE can obtain the scheduling information for cell 0, cell 1, cell 2, and cell 3 from the MC-DCI. For example, it can be configured from a higher layer that the MC-DCI can schedule cell 0, cell 1, cell 2, and cell 3. Here, the scheduling information can include time domain resource allocation (TDRA) information and/or frequency domain resource allocation (FDRA) information where a data channel (PDSCH for downlink, PUSCH for uplink) is transmitted and received in each cell. Accordingly, the UE can obtain the scheduling information for each cell via the MC-DCI and transmit/receive a data channel to/from each cell.

In certain circumstances, the base station may not be able to schedule all cells configured for the UE. There may be cases where scheduling is not possible for at least some of a plurality of cells configured by the base station for the UE. For example, the base station may configure the UE with four cells (e.g., cell 0, cell 1, cell 2, and cell 3) within a list of cells that can be scheduled via MC-DCI through higher layer signaling. However, some of these cells may not be schedulable, for example, because they are scheduled to another UE, the channel conditions are poor, or for other various reasons. In this case, the base station should be able to indicate to the UE which cells are actually scheduled via MC-DCI among cells that are preconfigured for scheduling via MC-DCI. That is, among a plurality of cells preconfigured to be schedulable via MC-DCI, the base station should be able to indicate to the UE one or more cells actually scheduled via MC-DCI.

This may be indicated based on one of the following two methods or a combination thereof.

In the first method, the UE can obtain information indicating co-scheduled cells among the preconfigured cells (e.g., cell 0, cell 1, cell 2, and cell 3) from the MC-DCI. That is, among the plurality of cells configured to be scheduled in the MC-DCI, one or more cells co-scheduled (actually) via the MC-DCI can be identified based on the MC-DCI. More specifically, the base station can configure a table including co-scheduled cells for the UE. For example, the rows of this table can have unique indexes. The index of each row (and/or each row) can include the indexes of co-scheduled cells. For example, {cell 0, cell 1} can be configured for row 0, {cell 2, cell 3} for row 1, and {cell 0, cell 1, cell 2, cell 3} for row 2. Table 25 shows an example of a table configured for the UE.

[Table 25]

| index | Co-scheduled cell |
|---|---|
| 0 | {0, 1} |
| 1 | {2, 3} |
| 2 | {0, 1, 2, 3} |

The UE can obtain a value indicating the index of the row through MC-DCI. Accordingly, the UE can determine the scheduled cell based on the value. For example, the MC-DCI can include information about the index of the row, and the UE can identify the scheduled cell based on the index of the row obtained from the MC-DCI and the table. For example, if row 0 is indicated from the MC-DCI, the UE can identify that cell 0 and cell 1 are scheduled cells. For example, if row 1 is indicated from the MC-DCI, the UE can identify that cell 2 and cell 3 are scheduled cells. For example, if row 2 is indicated from the MC-DCI, the UE can identify that cell 0, cell 1, cell 2, and cell 3 are scheduled cells. Although, in the disclosure, information including co-scheduled cells for the UE by the base station is described in the form of a table, embodiments of the disclosure are not limited thereto. That is, various methods for indicating the co-scheduled cells can be used. For example, a method may be used in which information about the co-scheduled cells is organized as a list, and an identifier for identifying the co-scheduled cells is assigned in each piece of information. Accordingly, the term "table" described below may be replaced with the term "information about co-scheduled cells", etc.

In the disclosure, a table is established for mapping relationships between scheduled cells (or indexes of scheduled cells) and indexes indicated by DCI, and scheduled cells can be identified based on the mapping relationship and the indexes indicated by DCI.

In the disclosure, an embodiment in which co-scheduled cells are identified based on the indexes of rows in a table is described, but the disclosure is not limited thereto. For example, scheduled cells may be identified based on the indexes of columns in a table. In this case, rows in the above-described embodiment may be replaced with columns.

In the disclosure, if the number of candidate cell sets schedulable via MC-DCI received by the UE within a certain cell is two or more, the UE may be configured with the above-described table for each cell set, and the UE may determine which table for which cell set to use through the cell set indicator field in the MC-DCI.

In the second method, the UE may determine the presence or absence of scheduling information for one or more cells based on the FDRA field of the MC-DCI.

If the UE reports the number of candidate cell sets that can be scheduled via MC-DCI within a specific cell as 1, the UE can expect the presence of as many FDRA fields in the MC-DCI as the number of cells included in one cell set. In this case, if the UE fails to receive higher layer signaling configuration such as the table described above in the first method, the UE can determine whether scheduling information for each cell exists based on one or more FDRA fields in the MC-DCI.

If the UE reports the number of candidate cell sets that can be scheduled via MC-DCI within a specific cell as 2 or more via the UE capability report, the UE can expect the presence of as many FDRA fields as correspond to the maximum number of cells included in each of the two or more cell sets. For example, if the UE reports the number of candidate cell sets as 2, the first cell set contains 3 cells, and the second cell set contains 4 cells, then the UE can expect the MC-DCI to contain 4 FDRA fields, which is the maximum number of cells contained in the first and second cell sets, respectively.

- If the UE fails to receive the higher layer signaling configuration, such as the table in the first method, for all cell sets, the UE can determine whether scheduling information for each cell exists based on the FDRA fields in the MC-DCI. If the number of cells in the cell set indicated by the UE through the cell set indicator field is less than the number of FDRA fields, the UE can consider the FDRA fields corresponding to the number of cells in the indicated cell set as an ascending index of the FDRA fields, and can ignore the FDRA fields corresponding to indexes greater than the number of cells.
- If the UE receives the higher layer signaling configuration, such as the table in the first method, for a specific cell set but fails to receive for the remaining cell sets, the UE can expect the MC-DCI to include a scheduling cell indicator field that can indicate the index of a specific row in the table configured via higher layer signaling, as in the first method. The UE can identify which cell set is indicated through the cell set indicator field in the MC-DCI. When determining the presence or not of scheduling information for one or more cells, the UE can use a method of interpreting the scheduling cell indicator field or the FDRA field. In this case, the scheduling cell indicator field, which may be included in the MC-DCI, may be a separate field distinct from a carrier indication field (CIF), or the CIF may replace the scheduling cell indicator field in the MC-DCI.

If the UE is indicated a cell set for which higher layer signaling, such as the table above, is configured through the cell set indicator field in the MC-DCI, the UE can be indicated the presence or not of scheduling information for one or more cells through the scheduling cell indicator field. If the UE is indicated a cell set for which higher layer signaling, such as the table above, is not configured through the cell set indicator field in the MC-DCI, the UE can be indicated through the FDRA field the presence of not of scheduling information for one or more cells.

FIG. 17 is a diagram illustrating an example of MC-DCI including a plurality of FDRA fields according to an embodiment of the disclosure.

With reference to FIG. 17, the MC-DCI 1700 may include a plurality of FDRA fields. Each FDRA field may correspond to a cell. That is, when co-scheduled cells in the MC-DCI 1700 are configured as cell 0 1720, cell 1 1721, cell 2 1722, and cell 3 1723, the MC-DCI 1700 may include an FDRA field 1710 for cell 0, an FDRA field 1711 for cell 1, an FDRA field 1712 for cell 2, and an FDRA field 1713 for cell 3. Accordingly, the UE can determine whether each cell is scheduled based on the value of the FDRA field. Cells scheduled based on the value of the above FDRA field can be called actually co-scheduled cells.

FIG. 18 is a diagram illustrating an example of MC-DCI including at least one of a cell set indicator field, a scheduling cell indicator field, and a plurality of FDRA fields according to an embodiment of the disclosure.

With reference to FIG. 18, the MC-DCI 1800 may include at least one of a cell set indicator field 1801, a scheduling cell indicator field 1802, and a plurality of FDRA fields 1805, 1806, 1807, and 1808. As described above, if the UE reports to the base station the number of candidates for a cell set that can be scheduled within a specific cell via MC-DCI as two or more, the UE can expect the cell set indicator field 1801 to be present in the MC-DCI. On the other hand, if the UE reports to the base station the number of candidates for a cell set that can be scheduled via MC-DCI as one, the cell set indicator field 1801 may not be present in the MC-DCI. FIG. 18 illustrates a case where the UE reports the number of candidate cell sets as two. In this embodiment, for example, cell set 0 1810 may include three cells: cell 0 1811, cell 1 1812, and cell 2 1813, and cell set 1 1820 may include four cells: cell 3 1821, cell 4 1822, cell 5 1823, and cell 6 1824. Therefore, the UE can expect the presence of FDRA fields in the MC-DCI as many as four cells, which is the maximum number of cells included in each of cell set 0 1810 and cell set 1 1820.

Additionally, in FIG. 18, it is assumed that the UE has not received higher layer signaling, such as the table above, for cell set 0 1810. Accordingly, as in the second method, the presence or absence of scheduling information for cells within cell set 0 1810 can be indicated via the FDRA fields 1805, 1806, 1807, and 1808 within the MC-DCI. In this case, since there are three cells within cell set 0 1810, the UE can be indicated the scheduling information for cell 0 1811, cell 1 1812, and cell 2 1813 through the first, second, and third FDRA fields 1808, 1807, and 1806.

Additionally, in FIG. 18, it can be assumed that the UE has received higher layer signaling including information, such as the table above, even for cell set 1 1820. Therefore, as in the first method, the presence or absence of scheduling information for cells within cell set 1 1820 can be indicated via the scheduling cell indicator field 1802 within the MC-DCI. For example, the UE can be indicated a specific row, among all rows within the table configured via higher layer signaling, through the scheduling cell indicator field 1802 within the MC-DCI, and that row can indicate the scheduling information for, for example, cell 3 1821 and cell 5 1823 within cell set 1 1820.

The FDRA field can be divided into valid and invalid values. A valid value may be a case where a frequency domain allocation corresponding to the value of the FDRA field exists. Conversely, an invalid value may be a case where there is no frequency domain allocation corresponding to the value in the FDRA field.

For example, valid and invalid values are described based on FDRA type-0. FDRA type-0 is a method of indicating scheduled RBs (or RBGs) based on a bitmap. Each bit may have a corresponding RB (or RBG). If a bit is '1', the corresponding RB (or RBG) is scheduled, and if a bit is '0', the corresponding RB (or RBG) is not scheduled. Therefore, a value may be determined as valid if at least one bit is '1', and as invalid if all bits are '0'.

For example, valid and invalid values are described based on FDRA type-1. FDRA type-1 is a method of indicating scheduled RBs based on a resource indication value (RIV). Through FDRA type-1, consecutive RBs can be scheduled in the frequency domain. FDRA type-1 can indicate the index of the starting RB and the number of consecutive RBs. The RIV value can be one of 0, 1, ..., N*(N+1)/2-1. Here, N is the number of RBs included in the frequency domain. Therefore, if the RIV value is one of 0, 1, ..., N*(N+1)/2-1, it can be determined as a valid value, and a value greater than or equal to N*(N+1)/2 can be determined as an invalid value.

Some of the cells scheduled via MC-DCI may be in a licensed band, while others may be in an unlicensed band (or shared spectrum). For example, for cells in an unlicensed band, FDRA type-2 may be used for uplink scheduling. Specific information on FDRA type-2 or an embodiment in which FDRA type-2 is used will be described later.

The disclosure discloses a method for determining a scheduled cell from a single DCI when the UE supports multi-cell scheduling through the single DCI.

The UE can receive a single DCI including a plurality of frequency domain resource allocation (FDRA) fields and determine the cell corresponding to each FDRA field. The UE can determine scheduling or not of a cell based on the FDRA type of the cell and the value of the FDRA field. The UE can identify scheduling or not of a cell and/or a scheduled cell and/or an unscheduled cell based on one or more of the FDRA type or the FDRA field. For example, the interpretation of the FDRA field may vary depending on the subcarrier spacing of the corresponding cell.

When the UE is configured with FDRA type-2 for one cell, scheduling or not of the cell can be determined based on at least one or a combination of the following.

If the cell has a 15 kHz subcarrier spacing, the UE can determine that the cell is not scheduled if the FDRA field value is as follows.

Case 1: All bits of the FDRA field are "1".

Case 2: The first 6 bits of the FDRA field are all "1". That is, the six most significant bits (MSBs) in the FDRA field are all "1".

Case 3: The last Y bits of the FDRA field are all "1". That is, the Y least significant bits (LSBs) in the FDRA field are all "1".

If the cell has a 30 kHz subcarrier spacing, the UE can determine that the cell is not scheduled if the FDRA field value is as follows.

Case 1: The first 5 bits of the FDRA field are all "0" and the last Y bits are all "1". That is, the five most significant bits (MSBs) in the FDRA field are all "0" and the Y least significant bits (LSBs) are all "1".

Case 2: All bits of the FDRA field are "0".

Case 3: The first 5 bits of the FDRA field are all "0". That is, the five MSBs in the FDRA field are all "0".

Case 4: The last Y bits of the FDRA field are all "1". That is, the Y LSB bits in the FDRA field are all "1".

Hereinafter, each situation will be described in more detail.

Situation 1. In the case where a cell has a 15 kHz subcarrier spacing

The UE can identify information about the subcarrier spacing and FDRA type of each cell included in the candidate cell set scheduled via MC-DCI. If one of cells included in the candidate cell set scheduled via MC-DCI is configured with FDRA type-2, the UE can identify whether the subcarrier spacing of the cell is 15 kHz ($\mu$=0) or 30 kHz ($\mu$=1). This embodiment may be the case where the UE identifies that the subcarrier spacing of the cell is 15 kHz ($\mu$=0).

FIG. 19 is a diagram illustrating an example of a field indicating frequency domain resource allocation information based on subcarrier spacing of a cell according to an embodiment of the disclosure.

Shown in (a) of FIG. 19 is an example of a field indicating frequency domain resource allocation information in the case where the subcarrier spacing of a cell is 15 kHz. The size of the frequency resource of the bandwidth part can be defined as the number of RBs included in the bandwidth part. Specifically, if the UE is indicated FDRA type-0 resource allocation, the length of the FDRA field of the DCI received by the UE is equal to the number of RBGs ($N_{RBG}$) in the bandwidth part, which is $N_{RBG}=\lceil (N_{BWP}^{size}+(N_{BWP}^{start} \bmod P))/P \rceil$ . Here, the first RBG in the bandwidth part includes $RBG_0^{size}=P\text{-}N_{BWP}^{size} \bmod P$ RBs, and the last RBG in the bandwidth part includes $RBG_{last}^{size}=(N_{BWP}^{start}+N_{BWP}^{size}) \bmod P$ RBs if $(N_{BWP}^{start}+N_{BWP}^{size}) \bmod P>0$ , otherwise, it includes $RBG_{last}^{size}=P$ RBs. The remaining RBGs in the bandwidth part include *P* RBs. Here, *P* can be configured via higher layer signaling, may have a value of 2 or 4, and other values may also be used.

With reference to (a) of FIG. 19, when the subcarrier spacing of a cell is 15 kHz, the length of the field indicating frequency domain allocation information of the cell within MC-DCI may be 6+Y bits. Here, 6 bits may indicate the start index (m0) and length (L) of M=10 interlaces included in one RB-set, and Y bits indicate a scheduled RB-set, where $Y=\lceil \log 2 \frac{N_{RB\text{-}set,UL}^{BWP}(N_{RB\text{-}set,UL}^{BWP}+1)}{2} \rceil$ . Here, Y bits may indicate the index and length of a starting RB set among RB sets included in the UL BWP. In the disclosure, $N_{RB\text{-}set,UL}^{BWP}$ may be the number of RB-sets configured for indicated active UL BWP. In the disclosure, for convenience, 6 bits and Y bits may be referred to as an RIV scheme (or RIV-like).

More specifically, 6 bits are as follows.

When $\mu$=0, the X=6 most significant bits (MSBs) of the resource block allocation information (or frequency domain resource allocation information) can indicate an interlace index set *m0+l* allocated to the UE. Here, the indication for the interlace index set is composed of a resource indication value (RIV). When 0≤*RIV*<*M*(*M*+1)/2 and *l*=0, 1, ..., L-1, the RIV corresponds to the starting interlace index *m0* and the number of consecutive interlace indexes. The RIV is defined as follows.

[RIV Formula]

if $(L-1) \leq \lfloor M/2 \rfloor$ then

$$RIV = M(L-1) + m_0$$

else

$$RIV = M(M-L+1) + (M-1-m_0)$$

For *RIV*≥*M*(*M*+1)/2, the RIV value corresponds to the starting interlace index *m0* and the value of *l* in Table 26.

[Table 26] *m0* and *l* for *RIV*≥*M*(*M*+1)/2.

| ***RIV* - *M*(*M* + 1)/2** | $m_0$ | *l* |
|---|---|---|
| 0 | 0 | {0, 5} |
| 1 | 0 | {0, 1, 5, 6} |
| 2 | 1 | {0, 5} |
| 3 | 1 | (0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

With reference to the RIV formula and Table 26 above, among the RIV values, 0, in the case of 1, ..., M*(M+1)/2-1=54, the starting interlace index and the number of consecutive interlace indexes can be indicated according to the RIV formula, and subsequently, in the case of RIV = M*(M+1)/2=55, M*(M+1)/2+1=56, ..., M*(M+1)/2+7=62, the starting interlace index (*m0*) and the *l* value can be indicated according to Table 26. The 6 bits of the RIV value can represent one of the values 0, 1, ..., 63, and 0, 1, ..., 62 are values used to schedule the interlace. However, RIV=63 (6 bits in binary are '111111') may be an unused value. In other words, there may not be a scheduled interlace corresponding to the above value RIV=63. Therefore, an unscheduled cell may be indicated using the value RIV=63 (6 bits in binary are '111111').

More specifically, the Y bits are as follows.

When μ=0 or μ=1, $Y = \lceil \log 2 \frac{N^{BWP}_{RB\text{-}set,UL}(N^{BWP}_{RB\text{-}set,UL}+1)}{2} \rceil$ least significant bits (LSBs) of the resource block allocation information (or frequency domain resource allocation information) indicates consecutive RB sets to the UE. For example, the Y bits may be included in DCI format 0_1. The resource allocation field consists of a resource indication value ( $RIV_{RB\text{-}set}$ ). For $0 \leq RIV_{RB\text{-}set} < N^{BWP}_{RB\text{-}set,UL}(N^{BWP}_{RB\text{-}set,UL}+1)/2$ , and *l*=0, 1, ..., LRBset-1, the RIV indicates the starting RB set index ( $N^{start}_{RB\text{-}set,UL}$ ) and the number of consecutive RB sets (LRBset-). The RIV is defined as follows.

[$RIV_{RB\text{-}set}$ Formula]

if $(L_{\text{RB-set}} - 1) \leq \lfloor N^{\text{BWP}}_{\text{RB-set,UL}}/2 \rfloor$ then

$$RIV_{\text{RB-set}} = N^{\text{BWP}}_{\text{RB-set,UL}}(L_{\text{RB-set}} - 1) + N^{\text{start}}_{\text{RB-set,UL}}$$

else

$$RIV_{\text{RB-set}} = N^{\text{BWP}}_{\text{RB-set,UL}}(N^{\text{BWP}}_{\text{RB-set,UL}} - L_{\text{RB-set}} + 1) + (N^{\text{BWP}}_{\text{RB-set,UL}} - 1 - N^{\text{start}}_{\text{RB-set,UL}})$$

where $N^{\text{start}}_{\text{RB-set,UL}} = 0,1,\cdots N^{\text{BWP}}_{\text{RB-set,UL}} - 1$, $L_{\text{RB-set}} \geq 1$ and shall not exceed $N^{\text{BWP}}_{\text{RB-set,UL}} - N^{\text{start}}_{\text{RB-set,UL}}$

With reference to the above equation, the following can be observed.

- If one RB-set is included in the UL BWP ( $N^{BWP}_{RB\text{-}set,UL}=1$), Y is 0 bits (Y=0). Therefore, when Y=0 bits, unscheduled cells may not be indicated via the Y bits.
- If two RB-sets are included in the UL BWP ( $N^{BWP}_{RB\text{-}set,UL}=2$ ), Y is 2 bits (Y=2). Here, $RIV_{RB\text{-}set}$=0, 1, 2 can be used to indicate the starting RB set index and the number of consecutive RB sets. The Y bits can have values of 0, 1, ..., 3. Therefore, there may not be a scheduled RB-set corresponding to Y bits equal to 3 (2 bits are '11' in binary). Therefore, using the above value 3 (2 bits in binary are '11'), an unscheduled cell can be indicated.
- If three RB-sets are included in the UL BWP ( $N^{BWP}_{RB\text{-}set,UL}=3$ ), Y is 3 bits (Y=3). Here, $RIV_{RB\text{-}set}$=0, 1, 2, 3, 4, 5 can be used to indicate the starting RB set index and the number of consecutive RB sets. The Y bits can have values of 0, 1, ..., 7. Therefore, there may not be a scheduled RB-set corresponding to Y bits equal to 7 (3 bits are '111' in binary). Therefore, using the above value 7 (3 bits are '111' in binary), an unscheduled cell can be indicated.
- If four RB-sets are included in the UL BWP ( $N^{BWP}_{RB\text{-}set,UL}=4$ ), Y is 4 bits (Y=4). Here, $RIV_{RB\text{-}set}$=0, 1, ..., 9 are used to indicate the starting RB set index and the number of consecutive RB sets. The Y bits can have values of 0, 1, ..., 15. Therefore, there may not be a scheduled RB-set corresponding to Y bits equal to 15 (4 bits are '1111' in binary). Therefore, using the above value 15 (4 bits in binary are '1111'), an unscheduled cell can be indicated.
- If five RB-sets are included in the UL BWP ( $N^{BWP}_{RB\text{-}set,UL}=5$ ), Y is 4 bits (Y=4). Here, $RIV_{RB\text{-}set}$=0, 1, ..., 14 are used to indicate the starting RB set index and the number of consecutive RB sets. The Y bits are can have values of 0, 1, ..., 15. Therefore, there may not be a scheduled RB-set corresponding to Y bits equal to 15 (4 bits are '1111' in binary). Therefore, using the above value 15 (4 bits are '1111' in binary), an unscheduled cell can be indicated.

In summary, in the remaining cases except for the case where Y=0 among the sizes of Y bits, an unscheduled cell can be indicated when all Y bits are '1'. That is, an unscheduled cell can be indicated when all bits included in the Y LSBs of the FDRA are '1'.

In the disclosure, a method for indicating that a cell with a 15 kHz subcarrier spacing is not scheduled may be one or any combination of the following. In the description of this method, the FDRA field correspond to the cell having a 15 kHz subcarrier spacing. In addition, the FDRA type can be FDRA type-2.

- In the first method, the UE can determine whether a cell is scheduled based on all bits (6+Y bits) of the FDRA field. For example, if all bits of the FDRA field are '1', the UE can determine that the cell is an unscheduled cell. Here, the FDRA field can include 6 bits MSB and Y bits LSB. Therefore, if all 6+Y bits are '1' (if all bits included in the 6+Y bits have bit values of 1), the UE can determine that the cell with 15 kHz subcarrier spacing corresponding to the FDRA field is not scheduled. For example, if the 6 bits MSB are all '1' and the remaining Y bits LSB are not all '1' (if all bits included in the 6 MSBs have bit values of 1 and at least some of the bits included in the Y LSBs have bit values of 0, or if all bit included in the 6 MSBs have bit values of 1 and all bits included in the Y LSBs have bit values of 0), the UE can determine that the DCI format including the above information is an error case. Alternatively, if all Y bits LSB are '1' and the remaining 6 bits MSB are not all '1' (if all bits included in the Y LSBs have bit values of 1 and at least some of the bits included in the 6 MSBs have bit values of 0, or if all bits included in the Y LSBs have bit values of 1 and all bits included in the 6 MSBs have bit values of 0), the UE can determine that the DCI format including the above information is an error case. If it is determined to be an error case, the UE may discard (or ignore) the information indicated via the DCI format without applying it. Alternatively, if it is determined to be an error case, the UE may discard (or not apply) the information for the cell (the cell corresponding to the FDRA field determined to be an error case) in the information indicated via the DCI format, and apply the information for the remaining cells (the remaining cells excluding the cell corresponding to the FDRA field determined to be an error case).

- In the second method, the UE can determine whether a cell is scheduled based on only the 6 bits MSB of the FDRA field. The UE can identify whether a cell is scheduled through the 6 MSBs of the FDRA field. For example, if all bits of the 6 bits MSB of the FDRA field are '1' (if all bits included in the 6 MSBs have bit values of 1), the UE can determine that the cell (corresponding to the FDRA field) is an unscheduled cell. Therefore, if the 6 bits MSB are all '1', the UE can determine that the cell with 15 kHz subcarrier spacing corresponding to the FDRA field is not scheduled. For example, in this case, the Y bits LSB may not provide information. That is, regardless of the value of the Y bits LSB, whether a cell is scheduled can be determined based on the 6 bits MSB. For example, the Y bits LSB may be discarded, ignored, or not included in the FDRA field (e.g., Y=0).
- In the third method, the UE can determine whether a cell is scheduled based on only the Y bits LSB of the FDRA field. The UE can identify whether a cell is scheduled through the Y LSBs of the FDRA field. For example, if all bits of the Y bits LSB of the FDRA field are '1' (if all bits included in the Y LSBs have bit values of 1), the UE can determine that the cell (corresponding to the FDRA field) is an unscheduled cell. Therefore, if the Y bits LSB are all '1', the UE can determine that the cell with 15 kHz subcarrier spacing corresponding to the FDRA field is not scheduled. For example, in this case, the 6 bits MSB may not provide information. That is, regardless of the value of the 6 bits MSB, whether a cell is scheduled can be determined based on the Y bits LSB. For example, the 6 bits MSB may be discarded, ignored, or not included in the FDRA field.

According to an embodiment, the third method may be used when Y>0. If Y=0, the second method may be used. That is, based on the value of Y, the second or third method may be selectively used. That is, the method to be used by the UE may be determined based on the value of Y (the bit size of the Y LSBs of the FDRA field).

Situation 2: In the case where a cell has a 30 kHz subcarrier spacing

The UE can identify information about the subcarrier spacing and FDRA type of each cell included in the candidate cell set scheduled via MC-DCI. If one of cells included in the candidate cell set scheduled via MC-DCI is configured with FDRA type-2, the UE can identify whether the subcarrier spacing of the cell is 15 kHz ($\mu$=0) or 30 kHz ($\mu$=1). This embodiment may be the case where the UE identifies that the subcarrier spacing of the cell is 15 kHz ($\mu$=0).

Shown in (b) of FIG. 19 is an example of a field indicating frequency domain resource allocation information when the subcarrier spacing of the cell is 30 kHz.

With reference to (b) of FIG. 19, when the subcarrier spacing of the cell is 30 kHz, the length of the field indicating the frequency domain allocation information of the cell within MC-DCI may be 5+Y bits. Here, the 5 bits may indicate, as a bitmap, whether M=5 interlaces contained in one RB-set are scheduled. In other words, each bit within the 5 bits may be used to indicate whether one interlace is scheduled. Here, the interlace corresponding to a bit with a value of '1' among the 5 bits may be determined to be scheduled. The interlace corresponding to a bit with a value of '0' among the 5 bits may be determined to be not scheduled. The Y bits indicate a scheduled RB-set, which is

$$Y=\left\lceil \log 2\frac{N_{RB\text{-}set,UL}^{BWP}(N_{RB\text{-}set,UL}^{BWP}+1)}{2}\right\rceil$$

. Here, the Y bits may indicate the index and length of the starting RB set among the RB sets included in the UL BWP. In the disclosure, $N_{RB\text{-}set,UL}^{BWP}$ may be the number of RB-sets configured for the indicated active UL BWP. In the disclosure, for convenience, the 5 bits are referred to as bitmap scheme, and the Y bits are referred to as RIV scheme (or RIV-like).

The 5 bits may indicate an interlace scheduled based on a bitmap. If each bit of the 5 bits is '1', the UE may determine that the interlace corresponding to '1' is scheduled. In other words, the interlace corresponding to a bit with a value of '1' among the 5 bits may be determined to be scheduled. If the 5 bits are all '0', no interlace may be scheduled. Therefore, if the 5 bits are all '0', the UE can determine that the cell is not scheduled.

Since the Y bits in situation 2 are the same as in situation 1, the description thereof will be omitted. For more information, please refer to the description of the Y bits in situation 1.

The FDRA field of a cell with a 30 kHz subcarrier spacing includes 5+Y bits. The 5 bits MSB indicate the interlace scheduled within the RB set in the form of a bitmap, and the Y bits LSB indicate the scheduled RB sets in the form of an RIV. Therefore, whether a cell is scheduled can be determined based on the values of the 5 bits MSB and the Y bits LSB.

In the disclosure, a method for indicating that a cell with a 30 kHz subcarrier spacing is not scheduled may be one or any combination of the following. In the description of this method, the FDRA field corresponds to the cell having a 30 kHz subcarrier spacing. In addition, the FDRA type can be FDRA type-2.

- In the first method, the UE can determine whether a cell is scheduled based on all bits (5+Y bits) of the FDRA field. For example, if all bits of the FDRA field are '0', the UE can determine that the cell with 30 kHz subcarrier spacing is an unscheduled cell. Here, the FDRA field can include 5 bits MSB and Y bits LSB. Therefore, if the 5+Y bits are all '0' (if all bits included in the 5+Y bits have bit values of 0), the UE can determine that the cell with 30 kHz subcarrier spacing corresponding to the FDRA field is not scheduled. For example, if the Y bits LSB are all '0', a corresponding value may exist according to the $RIV_{RB\text{-}set}$ formula. However, since the 5 bits MSB are all '0', the RB set indicated by the Y bits LSB may not be used as information on whether there is scheduling or not. In other words, since it is determined that there is no scheduled interlace when the 5 bits MSB are all '0', the RB set corresponding to the Y bits LSB may be ignored.
- In the second method, the UE can determine whether a cell is scheduled based on only the 5 bits MSB of the FDRA field. The UE can identify whether a cell is scheduled through the 5 MSBs of the FDRA field. For example, if all bits of the 5 bits MSB of the FDRA field are '0' (if all bits included in the 5 MSBs have bit values of 1), the UE can determine that the cell (corresponding to the FDRA field) is an unscheduled cell. Therefore, if the 5 bits MSB are all '0', the UE can determine that the cell with 30 kHz subcarrier spacing corresponding to the FDRA field is not scheduled. For example, in this case, the Y bits LSB may not provide information. That is, regardless of the value of the Y bits LSB, whether a cell is scheduled can be determined based on the 5 bits MSB. For example, the Y bits LSB may be discarded, ignored, or not included in the FDRA field (e.g., Y=0).
- In the third method, the UE can determine whether a cell is scheduled based on only the Y bits LSB of the FDRA field. The UE can identify whether a cell is scheduled through the Y LSBs of the FDRA field. For example, if all bits of the Y bits LSB of the FDRA field are '1' (if all bits included in the Y LSBs have bit values of 1), the UE can determine that the cell (corresponding to the FDRA field) is an unscheduled cell. Therefore, if the Y bits LSB are all '1', the UE can determine that the cell with 30 kHz subcarrier spacing corresponding to the FDRA field is not scheduled. For example, in this case, the 5 bits MSB may not provide information. That is, regardless of the value of the 5 bits MSB, whether a cell is scheduled can be determined based on the Y bits LSB. For example, the 5 bits MSB may be discarded, ignored, or not included in the FDRA field.

According to an embodiment, the third method may be used when Y>0. If Y=0, the second method may be used. That is, based on the value of Y, the second or third method may be selectively used. That is, the method to be used by the UE may be determined based on the value of Y (the bit size of the Y LSBs of the FDRA field).

<Second Embodiment: Semi-static Configuration Method for TCI State Field in MC-DCI>

As an embodiment of the disclosure, a method for configuring a TCI state field that may be included in MC-DCI will be described. This embodiment may operate in combination with other embodiments.

The UE can expect the TCI state field in DCI formats 1_1 and 1_2 to have a maximum length of 3 bits, and each codepoint in the TCI state field may have different meanings for respective BWPs. The definition of the codepoint of the TCI state field in each BWP may be activated by the base station via MAC-CE. If the UE operates with the Rel-15/16 TCI state framework in a specific cell within a certain band, i.e., if the UE is not configured with higher layer signaling for the unified TCI state, the codepoint of the TCI state field in DCI may be activated based on the MAC-CE 1620 illustrated in FIG. 16. If the UE is configured with higher layer signaling for the unified TCI state in a specific cell within a certain band, the codepoint of the TCI state field in DCI may be activated based on the MAC-CE illustrated in FIG. 7.

The UE can expect a BWP indication field to have a length of 2 bits in the MC-DCI. The BWP index indicated through the BWP indication field can be applied commonly to all cells scheduled through the corresponding MC-DCI.

The UE can expect a TCI state field to have a length of up to 4 bits in the MC-DCI. The UE can expect each codepoint of the TCI state field in the MC-DCI to contain one or more TCI state indications and to be applied to a plurality of cells scheduled through the corresponding MC-DCI. Through the TCI state field in the MC-DCI, the UE can be indicated the TCI state applicable when scheduling a PDSCH for each cell scheduled via the MC-DCI, according to the Rel-15/16 TCI state framework. The UE can be indicated the unified TCI state for each cell scheduled via the MC-DCI, through the TCI state field in the MC-DCI, according to the unified TCI state framework, and can apply the indicated TCI state to uplink and downlink channels and signals to which it is applicable according to the unified TCI state framework. Alternatively, the UE can be indicated the unified TCI state for each cell scheduled via the MC-DCI, through the TCI state field in the MC-DCI, according to the unified TCI state framework, and can apply the indicated TCI state only to specific channels and signals among the uplink and downlink channels and signals to which it is applicable according to the unified TCI state framework (e.g., limited to data channels such as PDSCH and PUSCH).

Based on the following, the UE may consider various methods for defining each codepoint of the TCI state field included in MC-DCI.

[Method 2-1]

To define the meaning of each codepoint of the TCI state field in the MC-DCI, the UE can use each codepoint of the TCI state field activated for each BWP of each cell scheduled via the MC-DCI.

For example, it can be assumed that the UE receives scheduling information for four cells, i.e., cell0, cell1, cell2, and cell3, via the MC-DCI and is indicated the first BWP via the BWP indication field in the MC-DCI. In this case, the information activated for each codepoint of the TCI state field in DCI format 1_1 or 1_2 transmitted in each BWP (e.g., BWP1 and BWP2) of cell0 to cell3 may be as shown in Table 27 below.

[Table 27]

| Codepoint index of TCI state field in DCI format 1_1/1_2 | Cell0 | | Cell1 | | Cell2 | | Cell3 | |
|---|---|---|---|---|---|---|---|---|
| | BWP1 | BWP2 | BWP1 | BWP2 | BWP1 | BWP2 | BWP1 | BWP2 |
| Codepoint 0 | TCI# 1 | TCI#10 | TCI#1 | TCI#2 | TCI#10 | TCI#1 | TCI#8 | TCI#10 |
| Codepoint 1 | TCI#2 | TCI#11 | TCI#2 | TCI#4 | TCI#11 | TCI#2 | TCI#6 | TCI#11 |
| Codepoint 2 | TCI#3 | TCI#12 | TCI#3 | TCI#6 | TCI#12 | TCI#3 | TCI#15 | TCI#12 |
| Codepoint 3 | TCI#4 | TCI#13 | TCI#4 | TCI#7 | TCI#13 | TCI#4 | TCI#64 | TCI#13 |
| Codepoint 4 | TCI#5 | TCI#14 | TCI#5 | TCI#9 | TCI#14 | TCI#5 | TCI#12 | TCI#14 |
| Codepoint 5 | TCI#6 | TCI#15 | TCI#6 | TCI#11 | TCI#15 | TCI#6 | TCI#17 | TCI#15 |
| Codepoint 6 | TCI#7 | TCI#16 | TCI#7 | TCI#5 | TCI#16 | TCI#7 | TCI#9 | TCI#16 |
| Codepoint 7 | TCI#8 | TCI#17 | TCI#8 | TCI#1 | TCI#17 | TCI#8 | TCI#10 | TCI#17 |

In Table 27 above, for example, codepoint 0 of the TCI state field in DCI format 1_1 or 1_2 transmitted in BWP1 within cell0 may indicate TCI#1. In this case, TCI#1 may refer to TCI state configuration information having index 1 in the TCI state information configured for the UE via higher layer signaling in the first BWP within cell0. Additionally, in Table 27 above, TCI#1 indicated by codepoint 7 of the TCI state field in DCI format 1_1 or 1_2 transmitted in BWP2 within cell1 and TCI#1 indicated by codepoint 0 of the TCI state field in DCI format 1_1 or 1_2 transmitted in BWP1 within cell0 are TCI states configured in BWP1 of each of cell2 and cell0, and the index may be the same as 1, but information indicated by the two TCI states may be different.

Based on the information as shown in Table 27 above, the UE and the base station can define the meaning of each codepoint of the TCI state field in the MC-DCI. Each codepoint of the TCI state field in MC-DCI can use the index of the codepoint of the TCI state field in DCI format 1_1 or 1_2 transmitted in a specific BWP of each cell scheduled via the MC-DCI as it is. For example, if the UE receives scheduling for cell0 to cell3 via the MC-DCI, BWP1 is indicated via the BWP indication field, and codepoint 0 is indicated as information of the TCI state field in the MC-DCI, then the UE can apply the TCI state indication information in BWP1 in each cell corresponding to codepoint 0 in Table 27 above to BWP1 in each cell. That is, after receiving the MC-DCI, the UE can apply TCI#1 to BWP1 in cell0, TCI#1 to BWP1 in cell1, TCI#10 to BWP1 in cell2, and TCI#8 to BWP1 in cell3.

Using the above method, the UE can use the information already activated for each BWP in each cell as it is, and since separate activation information for TCI state indication is not required in the MC-DCI, this can reduce the burden on the UE and provide convenience. However, if the UE uses the information already activated for each BWP in each cell as it is, the flexibility for TCI state indication for each BWP in each cell may be reduced even though the TCI state field in the MC-DCI can be up to 4 bits. For example, in Table 27 above, if the base station wants to indicate, to the UE, TCI#1 for BWP1 of cell0 and TCI#5 for BWP1 of cell1, the base station may have to transmit DCI within each BWP of each cell, rather than the MC-DCI. In this case, the overhead reduction effect of downlink control information that MC-DCI can have may not be achieved.

[Method 2-2]

To define the meaning of each codepoint in the TCI state field within the MC-DCI, the UE can sequentially copy the respective codepoints in the TCI state field activated for each BWP of each cell scheduled via the MC-DCI and connect (or map) them to the respective codepoints in the TCI state field within the MC-DCI.

For example, it can be assumed that the UE receives scheduling information for four cells, i.e., cell0, cell1, cell2, and cell3, via the MC-DCI and is indicated the first BWP via the BWP indication field in the MC-DCI. In this example, the size of the TCI state field in the MC-DCI may be 4 bits. In this case, the information activated for each codepoint of the TCI state field in DCI format 1_1 or 1_2 transmitted in each BWP (e.g., BWP1 and BWP2) of cell0 to cell3 may be as shown in Table 27 above, and Table 28 below shows the result of sequentially copying the activated TCI state field codepoints for each BWP in each cell to the codepoints of the TCI state field in the MC-DCI based on this.

[Table 28]

| Codepoint index of TCI state field in MC-DCI | Cell0 | | Cell1 | | Cell2 | | Cell3 | |
|---|---|---|---|---|---|---|---|---|
| | BWP1 | BWP2 | BWP1 | BWP2 | BWP1 | BWP2 | BWP1 | BWP2 |
| Codepoint 0 | TCI#1 | TCI#10 | TCI#1 | TCI#2 | TCI#10 | TCI#1 | TCI#8 | TCI#10 |
| Codepoint 1 | TCI#2 | TCI#11 | TCI#2 | TCI#4 | TCI#11 | TCI#2 | TCI#6 | TCI#11 |
| Codepoint 2 | TCI#3 | TCI#12 | TCI#3 | TCI#6 | TCI#12 | TCI#3 | TCI#15 | TCI#12 |
| Codepoint 3 | TCI#4 | TCI#13 | TCI#4 | TCI#7 | TCI#13 | TCI#4 | TCI#64 | TCI#13 |
| Codepoint 4 | TCI#5 | TCI#14 | TCI#5 | TCI#9 | TCI#14 | TCI#5 | TCI#12 | TCI#14 |
| Codepoint 5 | TCI#6 | TCI#15 | TCI#6 | TCI#11 | TCI#15 | TCI#6 | TCI#17 | TCI#15 |
| Codepoint 6 | TCI#7 | TCI#16 | TCI#7 | TCI#5 | TCI#16 | TCI#7 | TCI#9 | TCI#16 |
| Codepoint 7 | TCI#8 | TCI#17 | TCI#8 | TCI#1 | TCI#17 | TCI#8 | TCI#10 | TCI#17 |
| Codepoint 8 | TCI#1 | TCI#10 | TCI#1 | TCI#2 | TCI#10 | TCI#1 | TCI#8 | TCI#10 |
| Codepoint 9 | TCI#2 | TCI#11 | TCI#2 | TCI#4 | TCI#11 | TCI#2 | TCI#6 | TCI#11 |
| Codepoint 10 | TCI#3 | TCI#12 | TCI#3 | TCI#6 | TCI#12 | TCI#3 | TCI#15 | TCI#12 |
| Codepoint 11 | TCI#4 | TCI#13 | TCI#4 | TCI#7 | TCI#13 | TCI#4 | TCI#64 | TCI#13 |
| Codepoint 12 | TCI#5 | TCI#14 | TCI#5 | TCI#9 | TCI#14 | TCI#5 | TCI#12 | TCI#14 |
| Codepoint 13 | TCI#6 | TCI#15 | TCI#6 | TCI#11 | TCI#15 | TCI#6 | TCI#17 | TCI#15 |
| Codepoint 14 | TCI#7 | TCI#16 | TCI#7 | TCI#5 | TCI#16 | TCI#7 | TCI#9 | TCI#16 |
| Codepoint 15 | TCI#8 | TCI#17 | TCI#8 | TCI#1 | TCI#17 | TCI#8 | TCI#10 | TCI#17 |

In the above example, the TCI state field of each BWP in each cell has a total of 8 codepoints with 3 bits, while the TCI state field in MC-DCI can have a total of 16 codepoints with 4 bits. Therefore, a method of sequentially copying a total of 8 codepoints can be used as a method of connecting (or mapping) a total of 8 codepoints to a total of 16 codepoints.

For the 8 TCI states activated in codepoints 0 to 7 of the TCI state field of BWP1 in cell0 shown in Table 27, they can be connected to codepoints 0 to 7 of the TCI state field in MC-DCI, and the same information can be copied and connected to codepoints 8 to 15, respectively, as shown in Table 28 (or, the 8 TCI states corresponding to codepoints 0 to 7 of the TCI state field in Table 27 can be used identically for codepoints 0 to 7 of the TCI state field in MC-DCI in Table 28, and the 8 TCI states corresponding to codepoints 0 to 7 of the TCI state field in Table 27 can be used identically for codepoints 8 to 15 of the TCI state field in MC-DCI in Table 28). Table 28 above is only an embodiment for the case where the TCI state field in each BWP in each cell has 8 codepoints and the TCI state field in MC-DCI has 16 codepoints, and it can be generalized to the case where the TCI state field in each BWP in each cell is expressed with n bits and has $2^n$ codepoints, and the TCI state field in MC-DCI is expressed with m bits and has $2^m$ codepoints. That is, the $2^n$ codepoints of the TCI state field in each BWP in each cell are connected to the first $2^n$ codepoints among the $2^m$ codepoints of the TCI state field in MC-DCI, and the codepoints of the TCI state field in each BWP in each cell are sequentially connected to the remaining codepoints of the TCI state field in MC-DCI until there are no remaining codepoints of the TCI state field in MC-DCI.

[Method 2-3]

To define the meaning of each codepoint in the TCI state field within the MC-DCI, the UE can copy the respective codepoints in the TCI state field activated for each BWP of each cell scheduled via the MC-DCI according to a specific rule and connect (or map) them to the respective codepoints in the TCI state field within the MC-DCI.

For example, it can be assumed that the UE receives scheduling information for four cells, i.e., cell0, cell1, cell2, and cell3, via the MC-DCI and is indicated the first BWP via the BWP indication field in the MC-DCI. In this example, the size of the TCI state field in the MC-DCI may be 4 bits. In this case, the information activated for each codepoint of the TCI state field in DCI format 1_1 or 1_2 transmitted in each BWP (e.g., BWP1 and BWP2) of cell0 to cell3 may be as shown in Table 27 above, and Table 29 below shows the result of copying the activated TCI state field codepoints for each BWP in each cell to the codepoints of the TCI state field in the MC-DCI based on a specific rule.

[Table 29]

| Codepoint index of TCI state field in MC-DCI | Cell0 | | Cell1 | | Cell2 | | Cell3 | |
|---|---|---|---|---|---|---|---|---|
| | BWP1 | BWP2 | BWP1 | BWP2 | BWP1 | BWP2 | BWP1 | BWP2 |
| Codepoint 0 | TCI#1 | TCI#10 | TCI#1 | TCI#2 | TCI#10 | TCI#1 | TCI#8 | TCI#10 |
| Codepoint 1 | TCI#1 | TCI#10 | TCI#1 | TCI#2 | TCI#10 | TCI#1 | TCI#8 | TCI#10 |
| Codepoint 2 | TCI#2 | TCI#11 | TCI#2 | TCI#4 | TCI#11 | TCI#2 | TCI#6 | TCI#11 |
| Codepoint 3 | TCI#2 | TCI#11 | TCI#2 | TCI#4 | TCI#11 | TCI#2 | TCI#6 | TCI#11 |
| Codepoint 4 | TCI#3 | TCI#12 | TCI#3 | TCI#6 | TCI#12 | TCI#3 | TCI#15 | TCI#12 |
| Codepoint 5 | TCI#3 | TCI#12 | TCI#3 | TCI#6 | TCI#12 | TCI#3 | TCI#15 | TCI#12 |
| Codepoint 6 | TCI#4 | TCI#13 | TCI#4 | TCI#7 | TCI#13 | TCI#4 | TCI#64 | TCI#13 |
| Codepoint 7 | TCI#4 | TCI#13 | TCI#4 | TCI#7 | TCI#13 | TCI#4 | TCI#64 | TCI#13 |
| Codepoint 8 | TCI#5 | TCI#14 | TCI#5 | TCI#9 | TCI#14 | TCI#5 | TCI#12 | TCI#14 |
| Codepoint 9 | TCI#5 | TCI#14 | TCI#5 | TCI#9 | TCI#14 | TCI#5 | TCI#12 | TCI#14 |
| Codepoint 10 | TCI#6 | TCI#15 | TCI#6 | TCI#11 | TCI#15 | TCI#6 | TCI#17 | TCI#15 |
| Codepoint 11 | TCI#6 | TCI#15 | TCI#6 | TCI#11 | TCI#15 | TCI#6 | TCI#17 | TCI#15 |
| Codepoint 12 | TCI#7 | TCI#16 | TCI#7 | TCI#5 | TCI#16 | TCI#7 | TCI#9 | TCI#16 |
| Codepoint 13 | TCI#7 | TCI#16 | TCI#7 | TCI#5 | TCI#16 | TCI#7 | TCI#9 | TCI#16 |
| Codepoint 14 | TCI#8 | TCI#17 | TCI#8 | TCI#1 | TCI#17 | TCI#8 | TCI#10 | TCI#17 |
| Codepoint 15 | TCI#8 | TCI#17 | TCI#8 | TCI#1 | TCI#17 | TCI#8 | TCI#10 | TCI#17 |

In the above example, the TCI state field of each BWP in each cell has a total of 8 codepoints with 3 bits, while the TCI state field in MC-DCI can have a total of 16 codepoints with 4 bits. Therefore, a method of copying a total of 8 codepoints based on a specific rule can be used as a method of connecting (or mapping) a total of 8 codepoints to a total of 16 codepoints.

For the 8 TCI states activated in codepoints 0 to 7 of the TCI state field of BWP1 in cell0 shown in Table 27, codepoint 0 of the TCI state field of BWP1 in cell0 is connected to codepoints 0 and 1 of the TCI state field in MC-DCI as shown in Table 29, codepoint 1 of the TCI state field of BWP1 in cell0 is connected to codepoints 2 and 3 of the TCI state field in MC-DCI, and so on for the remaining codepoints, so that all codepoints of the TCI state field in MC-DCI can be determined (or, the TCI state corresponding to codepoint 0 of the TCI state field in Table 27 can be used identically for codepoints 0 and 1 of the TCI state field in MC-DCI in Table 29, the TCI state corresponding to codepoint 1 of the TCI state field in Table 27 can be used identically for codepoints 2 and 3 of the TCI state field in MC-DCI in Table 29, and so on). That is, the first codepoint of the TCI state field of each BWP in each cell is repeated a specific number of times and sequentially connected from the first codepoint of the TCI state field in MC-DCI, then the next codepoint of the TCI state field of each BWP in each cell is repeated a specific number of times and sequentially connected from the first codepoint among the remaining codepoints of the TCI state field in MC-DCI, and so on, the last codepoint of the TCI state field of each BWP in each cell is connected to the remaining codepoints of the TCI state field in MC-DCI.

Table 29 above is only an embodiment for the case where the TCI state field in each BWP in each cell has 8 codepoints and the TCI state field in MC-DCI has 16 codepoints, and it can be generalized to the case where the TCI state field in each BWP in each cell is expressed with n bits and has $2^n$ codepoints, and the TCI state field in MC-DCI is expressed with m bits and has $2^m$ codepoints. In this case, the number of times each codepoint of the TCI state field is copied in each BWP within each cell can be determined as $2^m/2^n$. That is, each codepoint of the TCI state field in each BWP within each cell can be mapped to $2^m/2^n$ consecutive codepoints of the TCI state field in MC-DCI.

[Method 2-4]

To define the meaning of each codepoint in the TCI state field within the MC-DCI, the UE can interleave the respective codepoints in the TCI state field activated for each BWP of each cell scheduled via the MC-DCI and connect (or map) them to the respective codepoints in the TCI state field within the MC-DCI.

For example, it can be assumed that the UE receives scheduling information for four cells, i.e., cell0, cell1, cell2, and cell3, via the MC-DCI and is indicated the first BWP via the BWP indication field in the MC-DCI. In this example, the size of the TCI state field in the MC-DCI may be 4 bits. In this case, the information activated for each codepoint of the TCI state field in DCI format 1_1 or 1_2 transmitted in each BWP (e.g., BWP1 and BWP2) of cell0 to cell3 may be as shown in Table 27 above, and Table 30 below shows the result of copying the activated TCI state field codepoints for each BWP in each cell to the codepoints of the TCI state field in the MC-DCI based on a specific rule.

[Table 30]

| Codepoint index of TCI state field in MC-DCI | Cell0 | | Cell1 | | Cell2 | | Cell3 | |
|---|---|---|---|---|---|---|---|---|
| | BWP1 | BWP2 | BWP1 | BWP2 | BWP1 | BWP2 | BWP1 | BWP2 |
| Codepoint 0 | TCI#1 | TCI#10 | TCI#1 | TCI#1 | TCI#10 | TCI#1 | TCI#6 | TCI#10 |
| Codepoint 1 | TCI#2 | TCI#11 | TCI#2 | TCI#2 | TCI#11 | TCI#2 | TCI#64 | TCI#11 |
| Codepoint 2 | TCI#5 | TCI#14 | TCI#5 | TCI#4 | TCI#14 | TCI#5 | TCI#8 | TCI#14 |
| Codepoint 3 | TCI#7 | TCI#16 | TCI#7 | TCI#5 | TCI#16 | TCI#7 | TCI#9 | TCI#16 |
| Codepoint 4 | TCI#4 | TCI#13 | TCI#4 | TCI#6 | TCI#13 | TCI#4 | TCI#10 | TCI#13 |
| Codepoint 5 | TCI#8 | TCI#17 | TCI#8 | TCI#7 | TCI#17 | TCI#8 | TCI#12 | TCI#17 |
| Codepoint 6 | TCI#3 | TCI#12 | TCI#3 | TCI#11 | TCI#12 | TCI#3 | TCI#15 | TCI#12 |
| Codepoint 7 | TCI#6 | TCI#15 | TCI#6 | TCI#9 | TCI#15 | TCI#6 | TCI#17 | TCI#15 |
| Codepoint 8 | TCI#5 | TCI#14 | TCI#5 | TCI#9 | TCI#14 | TCI#5 | TCI#64 | TCI#14 |
| Codepoint 9 | TCI#1 | TCI#10 | TCI#1 | TCI#11 | TCI#10 | TCI#1 | TCI#8 | TCI#10 |
| Codepoint 10 | TCI#4 | TCI#13 | TCI#4 | TCI#1 | TCI#13 | TCI#4 | TCI#9 | TCI#13 |
| Codepoint 11 | TCI#2 | TCI#11 | TCI#2 | TCI#2 | TCI#11 | TCI#2 | TCI#10 | TCI#11 |
| Codepoint 12 | TCI#8 | TCI#17 | TCI#8 | TCI#7 | TCI#17 | TCI#8 | TCI#6 | TCI#17 |
| Codepoint 13 | TCI#3 | TCI#12 | TCI#3 | TCI#6 | TCI#12 | TCI#3 | TCI#15 | TCI#12 |
| Codepoint 14 | TCI#7 | TCI#16 | TCI#7 | TCI#4 | TCI#16 | TCI#7 | TCI#12 | TCI#16 |
| Codepoint 15 | TCI#6 | TCI#15 | TCI#6 | TCI#5 | TCI#15 | TCI#6 | TCI#17 | TCI#15 |

In the above example, the TCI state field of each BWP in each cell has a total of 8 codepoints with 3 bits, while the TCI state field in MC-DCI can have a total of 16 codepoints with 4 bits. Therefore, a method of copying a total of 8 codepoints to create 16 codepoints and then interleaving them can be used as a method of connecting (or mapping) a total of 8 codepoints to a total of 16 codepoints.

In Table 27, 8 TCI states activated in codepoints 0 to 7 of the TCI state field of BWP1 in cell0 are copied twice to create a total of 16 codepoints, and interleaving is performed according to a specific rule so that they can be connected to the respective codepoint of the TCI state field in MC-DCI as shown in Table 30.

The above interleaving method is an example, and an interleaving method for VRB/PRB pairing that can be used in the frequency resource allocation of PDSCH or an interleaving method that can be used within CORESET can be applied. The interleaving block size can be 2 or 4 and can be configured for the UE via higher layer signaling. However, this embodiment is not limited thereto, and the interleaving block size can be a value configured by the base station other than 2 or 4. Such an interleaving block size can be commonly applied to all cells scheduled via MC-DCI, and different higher layer signaling can be configured for each cell or for each BWP within each cell.

Table 30 above is only an embodiment for the case where the TCI state field in each BWP in each cell has 8 codepoints and the TCI state field in MC-DCI has 16 codepoints, and it can be generalized to the case where the TCI state field in each BWP in each cell is expressed with n bits and has $2^n$ codepoints, and the TCI state field in MC-DCI is expressed with m bits and has $2^m$ codepoints. In this case, the number of times each codepoint of the TCI state field is copied in each BWP within each cell can be determined as $2^m/2^n$. That is, each codepoint of the TCI state field in each BWP within each cell can be copied $2^m/2^n$ times, and can be mapped to respective codepoints of the TCI state field in MC-DCI by being interleaved according to a specific rule.

[Method 2-5]

To define the meaning of each codepoint in the TCI state field within the MC-DCI, the UE can apply a codepoint offset when connecting (or mapping) the respective codepoints in the TCI state field activated for each BWP of each cell scheduled via the MC-DCI to the respective codepoints in the TCI state field within the MC-DCI.

For example, it can be assumed that the UE receives scheduling information for four cells, i.e., cell0, cell1, cell2, and cell3, via the MC-DCI and is indicated the first BWP via the BWP indication field in the MC-DCI. In this example, the size of the TCI state field in the MC-DCI may be 4 bits. In this case, the information activated for each codepoint of the TCI state field in DCI format 1_1 or 1_2 transmitted in each BWP (e.g., BWP1 and BWP2) of cell0 to cell3 may be as shown in Table 27 above, and Table 31 below shows the result of applying the codepoint offset when connecting the activated TCI state field codepoints for each BWP in each cell to the codepoints of the TCI state field in the MC-DCI based on this.

[Table 31]

| Codepoint index of TCI state field in MC-DCI | Cell0 | | Cell1 | | Cell2 | | Cell3 | |
|---|---|---|---|---|---|---|---|---|
| | BWP1 | BWP2 | BWP1 | BWP2 | BWP1 | BWP2 | BWP1 | BWP2 |
| Codepoint 0 | | | | | | | | TCI#14 |
| Codepoint 1 | | | | | | TCI#1 | | TCI#15 |
| Codepoint 2 | | | | TCI#2 | | TCI#2 | | TCI#16 |
| Codepoint 3 | | TCI#10 | | TCI#4 | | TCI#3 | | TCI#17 |
| Codepoint 4 | | TCI#11 | | TCI#6 | | TCI#4 | | |
| Codepoint 5 | | TCI#12 | | TCI#7 | | TCI#5 | | |
| Codepoint 6 | TCI#1 | TCI#13 | TCI#1 | TCI#9 | TCI#10 | TCI#6 | TCI#8 | |
| Codepoint 7 | TCI#2 | TCI#14 | TCI#2 | TCI#11 | TCI#11 | TCI#7 | TCI#6 | |
| Codepoint 8 | TCI#3 | TCI#15 | TCI#3 | TCI#5 | TCI#12 | TCI#8 | TCI#15 | |
| Codepoint 9 | TCI#4 | TCI#16 | TCI#4 | TCI#1 | TCI#13 | | TCI#64 | |
| Codepoint 10 | TCI#5 | TCI#17 | TCI#5 | | TCI#14 | | TCI#12 | |
| Codepoint 11 | TCI#6 | | TCI#6 | | TCI#15 | | TCI#17 | |
| Codepoint 12 | TCI#7 | | TCI#7 | | TCI#16 | | TCI#9 | TCI#10 |
| Codepoint 13 | TCI#8 | | TCI#8 | | TCI#17 | | TCI#10 | TCI#11 |
| Codepoint 14 | | | | | | | | TCI#12 |
| Codepoint 15 | | | | | | | | TCI#13 |

In the above example, the TCI state field of each BWP in each cell has a total of 8 codepoints with 3 bits, while the TCI state field in MC-DCI can have a total of 16 codepoints with 4 bits.

For the 8 TCI states activated in codepoints 0 to 7 of the TCI state field of BWP1 in cell0 in Table 27, codepoint offset 6 can be applied as shown in Table 31 for connecting (or mapping) to codepoints 6 to 13 of the TCI state field in MC-DCI. Such a codepoint offset can be configured for the UE via higher layer signaling, and the codepoint offset can be applied as one value in common to all scheduled cells, or configured as a different value for each cell or for each BWP in each cell. For BWP1 in cell0, cell1, cell2, and cell3 in Table 31, it may be an example in which one codepoint offset value is commonly applied to all scheduled cells.

Table 31 above is only an embodiment for the case where the TCI state field in each BWP in each cell has 8 codepoints and the TCI state field in MC-DCI has 16 codepoints, and it can be generalized to the case where the TCI state field in each BWP in each cell is expressed with n bits and has $2^n$ codepoints, and the TCI state field in MC-DCI is expressed with m bits and has $2^m$ codepoints. In this case, as in BWP2 in cell3 of Table 31, if the codepoint offset value N is taken into consideration and if $2^n + N > 2m$ -, some codepoints will have a higher index than the last codepoint of the TCI state field in MC-DCI, so the x-th codepoint of the TCI state field in each BWP in each cell can be adjusted to be connected (or mapped) within the codepoint index of the TCI state field in MC-DCI through a mod $(x + N, 2^m)$ operation. At this time, mod (a, b) can be the remainder when 'a' is divided by 'b', and 'a' and 'b' can be natural numbers.

[Method 2-6]

To define the meaning of each codepoint in the TCI state field within MC-DCI, the UE can use higher layer signaling to connect (or map) each codepoint in the TCI state field activated for each BWP of each cell scheduled via MC-DCI to a codepoint in the TCI state field within MC-DCI. If the TCI state field in MC-DCI is expressed with m bits and has $M = 2^m$ codepoints, and the TCI state field is expressed with n bits and has $N_{c,i} = 2^n$ codepoints in the i-th BWP in the c-th cell that can be scheduled via MC-DCI, then the UE can define the t-th codepoint of the TCI state field in MC-DCI as $B_t$ = ENUMERATE $\{A_1, A_2, ..., A_N_{c,i}\}$ (t = 1, ..., M) where $A_k$ (k = 1, ..., $N_{c,i}$) is the k-th codepoint of the activated TCI state field in the i-th BWP in the c-th cell. As such, through higher layer signaling configuration, the UE can define which TCI state each codepoint of the TCI state field in MC-DCI for each BWP of each cell that can be scheduled via MC-DCI can indicate.

[Method 2-7]

To define the meaning of each codepoint in the TCI state field within MC-DCI, the UE can connect (or map) some of the TCI states configured via higher layer signaling for each BWP of each cell scheduled via MC-DCI to the codepoints in the TCI state field within MC-DCI. If the TCI state field in MC-DCI is expressed with m bits and has $M = 2^m$ codepoints, and there are $T_{c,i}$ TCI states configured via higher layer signaling in the i-th BWP in the c-th cell that can be scheduled via MC-DCI, then the UE can define the t-th codepoint of the TCI state field in MC-DCI as Ht = ENUMERATE{E1, E2,..., $E_T_{c,i}$} (t = 1, ..., M) where Ek (k = 1, ..., $T_{c,i}$) is the k-th TCI state configured via higher layer signaling in the i-th BWP in the c-th cell. As such, the UE can define which TCI state each codepoint of the TCI state field in MC-DCI can indicate through higher layer signaling configuration for each BWP of each cell that can be scheduled via MC-DCI.

[Method 2-8]

The UE can be configured with one or more sets of TCI state lists that can be connected to respective codepoints of the TCI state field in MC-DCI from the base station via higher layer signaling.

- If the UE reports to the base station as UE capability that the number of cell sets that can be scheduled via MC-DCI received in a specific cell is one, at least one of the following operations may be performed.

    ■ The UE can receive one set of the TCI state lists via higher layer signaling.
    ■ The UE can receive at least one set of the TCI state lists from the base station via higher layer signaling. In this case, the UE can determine the bit length of the TCI state field in MC-DCI based on the configured number of TCI state lists.
    ■ If the number of TCI state lists is N, the UE can expect the bit length of the TCI state field in MC-DCI to be determined by ceil(log2(N)). In this case, ceil(.) represents a rounding function, and log2(.) represents a logarithmic function with a base of 2.

- If the UE reports to the base station as UE capability that the number of cell sets that can be scheduled via MC-DCI received in a specific cell is 2 or more, at least one of the following operations may be performed.

    ■ The UE can be configured, via higher layer signaling, with a set of TCI state lists equal to the number of supportable cell sets reported to the base station, or be configured with a set of TCI state lists equal to the number of cell sets configured for the UE from the base station via higher layer signaling.
    ■ The UE can determine the bit length of the TCI state field in MC-DCI using the set containing the largest number of TCI state lists among one or more sets of TCI state lists configured from the base station via higher layer signaling.
    ■ If the number of TCI state lists for the a-th cell set is $N_a$, the maximum number of TCI state lists for all A cell sets can be expressed as Nmax = max(N1, ..., Na, ..., NA). In this case, the UE can expect the bit length of the TCI state field in MC-DCI to be determined by ceil(log2($N_{max}$)). In this case, ceil(.) represents a rounding function, log2(.) represents a logarithmic function with a base of 2, and max(.) represents a function that derives the maximum value among input values.

For both the above cases of UE capability report, the UE can consider that a list of TCI states may include a plurality of TCI states. The list of TCI states may include a TCI state that is activated for each BWP within each cell, or may include a TCI state that is configured for each BWP within each cell via higher layer signaling but is not activated via MAC-CE or DCI. The list of TCI states may exist individually for each BWP of each cell that can be scheduled via MC-DCI, or may exist commonly for all BWPs of each cell. In addition, a list of TCI states may also include a value, such as empty, void, or none, indicating that a TCI state is not indicated for a specific cell.

- If a list of TCI states exists individually for each BWP of each cell that can be scheduled via MC-DCI, one list of TCI states can be defined to be applicable to a specific BWP for each cell. For example, the first list of TCI states is applicable only to BWP1 of each cell, the second list of TCI states is applicable only to BWP2 of each cell, and one list of TCI states can contain four pieces of independent information related to TCI states that can be applied to each of up to four cells that can be scheduled via MC-DCI. That is, since a specific list of TCI states is applied only to a specific BWP, a specific codepoint of the TCI state field in MC-DCI can be used only for a specific BWP indication.

  ■ For example, it is assumed that the number of cells that can be scheduled via MC-DCI is 4, a certain list of TCI states includes {TCI#1}, {TCI#2}, {TCI#3}, and {TCI#4}, and the list of TCI states can be applied to BWP1. In addition, if the cells that the UE can be scheduled via MC-DCI are cell1, cell2, cell3, and cell4, the UE can assume that each piece of information included in the list of TCI states can be applied to the BWP1 of each cell in order. That is, the UE can consider that {TCI#1} is applicable to cell1, {TCI#2} to cell2, {TCI#3} to cell3, and {TCI#4} to cell4, based on the list of TCI states indicated via the TCI state field in MC-DCI.
  ■ In another example, it is assumed that the number of cells that can be scheduled via MC-DCI is 4, one list of TCI states includes {TCI#1, TCI#2}, {void}, {TCI#3}, and {TCI#4, TCI#5}, and the list of TCI states can be applied to BWP2. If the cells that the UE can be scheduled via MC-DCI are cell1, cell2, cell3, and cell4, the UE can assume that each piece of information included in the list of TCI states can be applied to the BWP2 of each cell in order. That is, the UE can consider that {TCI#1, TCI#2} is applicable to cell1, {void} to cell2, {TCI#3} to cell3, and {TCI#4, TCI#5} to cell4, based on the list of TCI states indicated via the TCI state field in MC-DCI, and in this case, the fact that {void} is applied to cell2 can mean that there is no TCI state indicated in cell2.

- If a list of TCI states exists commonly for each BWP of each cell that can be scheduled via MC-DCI, one TCI state list can be defined to be commonly applied to all BWPs for each cell. For example, each TCI state list can be commonly applied to all BWPs for each cell, and one TCI state list can contain four independent pieces of TCI state-related information applicable to each of up to four cells that can be scheduled via MC-DCI.
- If a list of TCI states contains individual information for each BWP of each cell that can be scheduled via MC-DCI, one TCI state list can contain individual information for each BWP for each cell. If four BWPs are configured for each cell, a total of 16 pieces of TCI state-related information applicable to each of the four BWPs within each of up to four cells can be included. The UE can identify the TCI state-related information corresponding to the BWP indicated via the BWP indicator field in the MC-DCI, from the list of TCI states indicated via the TCI state field in the MC-DCI, and apply it to the corresponding BWP within each cell. Of course, this does not exclude cases where the number of BWPs configured for each cell is different.

  ■ For example, assume that the number of cells that can be scheduled via MC-DCI is 4, and the number of BWPs configured for each cell is 2. If a certain list of TCI states includes {TCI#1}, {TCI#2}, {TCI#3}, {TCI#4}, {TCI#5}, {TCI#6}, {TCI#7}, and {TCI#8}, and if the cells that the UE can be scheduled via MC-DCI are cell1, cell2, cell3, and cell4, the UE can assume that the first 4 pieces of information included in the list of TCI states can be sequentially applied to BWP1 of each cell, and the next 4 pieces of information can be sequentially applied to BWP2 of each cell. That is, the UE can consider, based on the list of TCI states through the TCI state field in the MC-DCI, that {TCI#1} and {TCI#5} are applicable to BWP1 and BWP2 of cell1, {TCI#2} and {TCI#6} to BWP1 and BWP2 of cell2, {TCI#3} and {TCI#7} to BWP1 and BWP2 of cell3, and {TCI#4} and {TCI#8} to BWP1 and BWP2 of cell4.
  ■ In another example, assume that the number of cells that can be scheduled via MC-DCI is 4, one BWP is configured for cell1 and cell2, and two BWPs are configured for cell3 and cell4. If a certain list of TCI states includes {TCI#1}, {TCI#2}, {TCI#3}, {TCI#4}, {empty}, {empty}, {TCI#5}, {TCI#6}, and if the cells that the UE can be scheduled via MC-DCI are cell1, cell2, cell3, and cell4, the UE can assume that the first 4 pieces of information included in the list of TCI states can be sequentially applied to BWP1 of each cell, and the next 4 pieces of information can be sequentially applied to BWP2 of each cell. That is, the UE can consider, based on the list of TCI states indicated via the TCI state field in the MC-DCI, that {TCI#1} is applicable to BWP1 of cell1, {TCI#2} to BWP1 of cell2, {TCI#3} and {TCI#5} to BWP1 and BWP2 of cell3, and {TCI#4} and {TCI#6} to BWP1 and BWP2 of cell4.

Unlike the above example, the TCI state list may include {TCI#1}, {TCI#2}, {TCI#3}, {TCI#4}, {TCI#5}, and {TCI#6}. In this case, since BWP2 does not exist in cell1 and cell2, the UE can omit applying TCI state information for BWP2 in cell1 and cell2 when applying TCI state-related information in the TCI state list in ascending order of cells and ascending order of BWP.

[Method 2-9]

For at least one combination of Method 2-1 to Method 2-8, the UE can be configured by the base station via higher layer signaling, activated via MAC-CE, indicated via L1 signaling, indicated via a combination of at least one of higher layer signaling, MAC-CE, and L1 signaling, or use a method fixedly defined in the standard. For example, if the UE and the base station define each codepoint of a TCI state field in MC-DCI using a combination of Method 2-2 and Method 2-7, the UE and the base station can define each codepoint of the TCI state field in MC-DCI by considering information of each codepoint of the TCI state field activated in DCI format 1_1 or 1_2 that can be transmitted in each BWP in each cell through Method 2-2 along with TCI state information that is not activated but configured via higher layer signaling through Method 2-7.

The UE can report to the base station as UE capability whether at least one combination of Method 2-1 to Method 2-8 can be supported. Furthermore, the UE can be configured with at least one combination of Method 2-1 to Method 2-8 from the base station via higher layer signaling.

When the UE operates with the Rel-15/16 TCI state framework in a specific cell within a certain band or when the UE is configured with higher layer signaling for the unified TCI state in a specific cell within a certain band, the UE can support at least one combination of Method 2-1 to Method 2-9. In other words, the codepoint of the TCI state field in MC-DCI configured through at least one combination of Method 2-1 to Method 2-8 may be applicable to both cases, whether the UE operates in the unified TCI state scheme or not. Additionally, in the case where a specific BWP within a specific cell operates as a single-DCI based multi-TRP, that is, even in the case where at least one of the codepoints of the TCI state field in DCI format 1_1 or 1_2 includes two TCI states, at least Method 2-1 to Method 2-6 obtain information on the TCI state codepoint activated for each BWP within each cell, so that even if two TCI states are activated for one codepoint, the UE can configure the codepoint of the TCI state field in MC-DCI.

If the UE receives a MAC-CE from the base station in each BWP within each cell that can be scheduled via MC-DCI and updates the codepoint information of the TCI state field of DCI format 1_1 or 1_2 within the corresponding BWP, the UE can assume that the information for each codepoint of the TCI state field in the MC-DCI is also changed at the same time when the update of the TCI state field codepoint information based on the reception of the MAC-CE is applied (i.e., 3 ms after the last symbol of PUCCH transmission including HARQ-ACK information for the reception of the MAC-CE). For example, in the case where the UE configures a codepoint of a TCI state field in MC-DCI using Method 2-2, if the codepoints P1 to P8 of the TCI state field in DCI format 1_1 or 1_2 transmitted from the base station in a specific BWP within a specific cell are changed to P1' to P8' via MAC-CE in the BWP, the UE can consider that the codepoint of the TCI state field in MC-DCI can also apply information received in the BWP after the information received via MAC-CE in the BWP is applied. Therefore, if there are 16 codepoints in MC-DCI, P1 for codepoint 0, P2 for codepoint 1, ..., P8 for codepoint 7, P1 for codepoint 8, ..., P8 for codepoint 15 before reception of MAC-CE may be changed to P1' for codepoint 0, P2' for codepoint 1, ..., P8' for codepoint 7, P1' for codepoint 8, ..., P8' for codepoint 15 after application of MAC-CE. This description is an example, and the same can be applied to the other methods.

In the case of scheduling for a specific BWP in a specific cell before the UE has established RRC connected mode and received a MAC-CE indicating activation of the TCI state field, among respective BWPs in each cell for which the UE can be scheduled via MC-DCI, the UE may not apply the codepoint indicated via the TCI state field in the MC-DCI to the BWP in the cell, and the UE may receive PDSCH or transmit PUSCH using the SSB used during initial access for the BWP in the cell.

The UE can expect the TCI state field in the MC-DCI to always be present.

The UE can expect the TCI state field in the MC-DCI to be present or absent depending on specific RRC information configured for the UE via higher layer signaling. This RRC information may be present in CORESET configuration or configured in higher layer signaling for a specific search space where the UE can receive the MC-DCI. If the TCI state field does not exist in the MC-DCI, the UE can use, for BWPs within one or more cells scheduled via the MC-DCI, the TCI state or QCL assumption applied to the CORESET where the MC-DCI was received for PDSCH reception or PUSCH transmission scheduled via the MC-DCI.

<Third Embodiment: MAC-CE based Method for TCI State Field Activation in MC-DCI>

As an embodiment of the disclosure, a MAC-CE based method for activating the TCI state field in MC-DCI will be described. This embodiment can be operated in combination with other embodiments.

If the UE configures the codepoint of the TCI state field in the MC-DCI through Method 2-1 to Method 2-8, and if the base station wants to change the codepoint of the TCI state field in the MC-DCI of the UE, the UE can receive a MAC-CE that changes the definition of each codepoint of the TCI state field in each BWP within each cell from the base station. If the codepoint of the TCI state field for a specific BWP of all cells that can be scheduled via the MC-DCI is to be changed, the base station can schedule a PDSCH to transmit the MAC-CE to the UE through a PDCCH in each of four cells, and the UE can receive up to four MAC-CEs in respective cells. This can be a burden to both the UE and the base station, and the advantage of MC-DCI, which is to efficiently use the resources of the downlink control channel, can be faded.

Therefore, in order to collectively change the codepoints of the TCI state field of a specific BWP within each cell that can be scheduled via MC-DCI, or to change the information signified by the codepoint of the TCI state field in MC-DCI, a MAC-CE capable of indicating the activation of the TCI state field of MC-DCI can be defined in the disclosure. Hereinafter, various MAC-CE structures will be described.

FIG. 20 is a diagram illustrating an example of a MAC-CE for activating a TCI state field in MC-DCI according to an embodiment of the disclosure.

The MAC-CE shown in FIG. 20 can be applied to both cases: whether the UE operates under the Rel-15/16 TCI state framework or under the unified TCI state scheme. In the case of the unified TCI state scheme, the MAC-CE can be applied to both the joint TCI state and the separate TCI state. The MAC-CE can change the meaning of the codepoint of the TCI state field in the MC-DCI by utilizing the TCI state information already activated in each BWP within each cell that can be scheduled via MC-DCI. However, the TCI state itself, already activated in each BWP within each cell that can be scheduled via MC-DCI, cannot be changed via the MAC-CE.

The meaning of each field in the MAC-CE structure can be as follows.

- Set 2000: The Set field may be a field indicating a cell set to which MAC-CE is to be applied among one or more cell sets that can be scheduled via MC-DCI. If the number of cell sets that can be scheduled via MC-DCI is reported to the base station as one by the UE through the UE capability, this field may be ignored. If the number of cell sets that can be scheduled via MC-DCI is reported to the base station as two by the UE through the UE capability, the UE can apply the MAC-CE to cells within cell set 0 if the value of this field is 0, and apply the MAC-CE to cells within cell set 1 if the value is 1.
- Serving Cell ID 2005: The Serving Cell ID field may indicate a serving cell to which MAC-CE is to be applied. This field may be 5 bits long.

  ■ If the UE is configured with higher layer signaling related to the unified TCI state for the cell receiving the MAC-CE, and the serving cell indicated by the Serving Cell ID field is included in one or more of simultaneousU-TCI-UpdateList1, simultaneousU-TCI-UpdateList2, simultaneousU-TCI-UpdateList3, or simultaneousU-TCI-UpdateList4, which are higher layer signaling, then the MAC-CE can be applied to all serving cells included in one or more of simultaneousU-TCI-UpdateList1, simultaneousU-TCI-UpdateList2, simultaneousU-TCI-UpdateList3, or simultaneousU-TCI-UpdateList4 in which the serving cell indicated by this field is included.
  ■ If the UE is not configured with higher layer signaling related to the unified TCI state for the cell receiving the MAC-CE, i.e., if the UE operates in the Rel-15/16 TCI state framework in that cell, and the serving cell indicated by the Serving Cell ID field is included in at least one of simultaneousTCI-UpdateList1 or simultaneousTCI-UpdateList2, which are higher layer signaling, then the MAC-CE can be applied to all serving cells included in at least one of simultaneousTCI-UpdateList1 or simultaneousTCI-UpdateList2 in which the serving cell indicated by this field is included.

- DL BWP ID 2010: The DL BWP ID field may indicate the DL BWP to which the MAC-CE will be applied. The meaning of each codepoint in this field may correspond to each codepoint of the bandwidth part indicator in the DCI. The length of this field may be 2 bits.
- $U_i$ 2015: The $U_i$ field may indicate whether the i-th cell among up to four cells in the cell set indicated via the Set field 2000 operates in the unified TCI state scheme. If the UE is configured with higher layer signaling to operate in the unified TCI state scheme for the i-th cell, the value of this field may be 1, otherwise it may be 0. If all i-th $U_i$ fields are 0, i.e., no cell operates in the unified TCI state scheme, the UE may expect that there is no octet containing the UL BWP ID field 2025 to be described below.
- $Cell_i$ 2020: The $Cell_i$ field may indicate whether there is TCI state activation information for the i-th cell among up to four cells in the cell set indicated via the Set field 2000. If the value of the i-th $Cell_i$ field is 1, this may mean that there is TCI state activation information for the i-th cell. In this case, the UE can assume that octets containing the TCI state activation information for the i-th cell exist from the B(i-1)+4th octet to the Bi+3rd octet. Here, 'B' is a value related to the length of the TCI state field in MC-DCI, and can be calculated as B = ceil($2^n$*3/8), where ceil(.) denotes a rounding function, and 'n' denotes the bit length of the TCI state field in MC-DCI. Conversely, if the value of the i-th $Cell_i$ field is 0, this may mean that there is no TCI state activation information for the i-th cell, and the UE can assume that octets containing the TCI state activation information for the i-th cell from the B(i-1)+4th octet to the Bi+3rd octet do not exist.
- UL BWP ID 2010: The UL BWP ID field can indicate the UL BWP to which the corresponding MAC-CE is applied. The meaning of each codepoint in this field can correspond to each codepoint of the bandwidth part indicator in the DCI. The length of this field can be 2 bits. If all the i-th $U_i$ fields 2025 above are 0, this field and the 3rd octet containing this field may not exist, and if at least one i-th $U_i$ field 2025 is 1, this field and the 3rd octet containing this field may exist.
- Codepoint c,i 2030: The Codepoint c,i field can indicate information about the i-th codepoint of the TCI state field in the MC-DCI. This field can consist of 3 bits. Through this field, the UE can be indicated one of information of up to eight TCI state codepoints activated in the TCI state field in DCI format 1_1 or 1_2 transmitted in the DL BWP ID 2010 within the c-th cell, and information of the i-th codepoint of the TCI state field in the MC-DCI for the BWP corresponding to the DL BWP ID 2010 in the c-th cell. Since this field uses the information of up to eight TCI state codepoints activated in the TCI state field in DCI format 1_1 or 1_2 transmitted in the BWP ID 2010 within the c-th cell, even if the c-th cell operates in the unified TCI state scheme, is of the separate TCI state type, and the corresponding TCI state codepoint includes one DL TCI state and one UL TCI state, it can be connected to the i-th codepoint of the TCI state field in MC-DCI. In this case, the i-th codepoint of the TCI state field in MC-DCI may contain one DL TCI state and one UL TCI state. If the UE operates in the unified TCI state scheme within a specific cell and the length of the TCI state field of DCI format 1_1 or 1_2 within that cell is 4 bits, the UE can expect the length of this field to also be 4 bits when receiving and applying the MAC-CE for that cell.

- R: It indicates a reserved bit and may be set to 0.

FIG. 21 is a diagram illustrating another example of a MAC-CE for activating a TCI state field in MC-DCI according to an embodiment of the disclosure.

The MAC-CE shown in FIG. 21 can be applied to the case where the UE operates under the Rel-15/16 TCI state framework. The MAC-CE can activate not only the TCI state already activated for each BWP within each cell that the UE can schedule via MC-DCI, but also the TCI state that has been configured via higher layer signaling for each BWP within each cell but is not yet activated, in the codepoint of the TCI state field in the MC-DCI.

The meaning of each field in the MAC-CE structure may be as follows.

- Set 2100: This field may indicate a cell set to which MAC-CE is to be applied among one or more cell sets that can be scheduled via MC-DCI. If the number of cell sets that can be scheduled via MC-DCI is reported to the base station as one by the UE through the UE capability, this field may be ignored. If the number of cell sets that can be scheduled via MC-DCI is reported to the base station as two by the UE through the UE capability, the UE can apply the MAC-CE to cells within cell set 0 if the value of this field is 0, and apply the MAC-CE to cells within cell set 1 if the value is 1.
- Serving Cell ID 2105: The Serving Cell ID field may indicate a serving cell to which MAC-CE is to be applied. This field may be 5 bits long.

If the UE is not configured with higher layer signaling related to the unified TCI state for the cell receiving the MAC-CE, i.e., if the UE operates in the Rel-15/16 TCI state framework in that cell, and the serving cell indicated by the Serving Cell ID field is included in at least one of simultaneousTCI-UpdateList1 or simultaneousTCI-UpdateList2, which are higher layer signaling, then the MAC-CE can be applied to all serving cells included in at least one of simultaneousTCI-UpdateList1 or simultaneousTCI-UpdateList2 in which the serving cell indicated by this field is included.

- BWP ID 2110: The BWP ID field may indicate the DL BWP to which the MAC-CE will be applied. The meaning of each codepoint in this field may correspond to each codepoint of the bandwidth part indicator in the DCI. The length of this field may be 2 bits.
- $Cell_i$ 2115: The $Cell_i$ field may indicate whether there is TCI state activation information for the i-th cell among up to four cells in the cell set indicated via the Set field 2100. If the value of the i-th $Cell_i$ field is 1, this may mean that there is TCI state activation information for the i-th cell. In this case, the UE can assume that octets containing TCI state activation information for the i-th cell exist from the $(i-1)*2^n+3$rd octet to the $i*2^n+2$nd octets. Here, 'n' is the bit length of the TCI state field in MC-DCI. Conversely, if the value of the i-th $Cell_i$ field is 0, this may mean that there is no TCI state activation information for the i-th cell, and the UE can assume that octets from $(i-1)*2^n+3$rd octet to $i*2^n+2$nd octet, which contain TCI state activation information for the i-th cell, do not exist.
- TCI state of codepoint c,i 2120: The TCI state of codepoint c,i field may indicate information about the i-th codepoint of the TCI state field in MC-DCI. This field may consist of 7 bits. Through this field, the UE may be indicated one of up to 128 TCI states configured via higher layer signaling in the BWP ID 2110 within the c-th cell, and information about the i-th codepoint of the TCI state field in MC-DCI for the BWP corresponding to the BWP ID 2110 in the c-th cell.
- R: It indicates reserved bit and may be set to 0.

FIG. 22 is a diagram illustrating still another example of a MAC-CE for activating a TCI state field in MC-DCI according to an embodiment of the disclosure.

The MAC-CE shown in FIG. 22 can be applied to both cases where the UE operates under the Rel-15/16 TCI state framework or under the unified TCI state scheme. The MAC-CE can activate not only the TCI state already activated for each BWP within each cell that the UE can schedule via MC-DCI, but also the TCI state that has been configured via higher layer signaling for each BWP within each cell but is not yet activated, in the codepoint of the TCI state field in the MC-DCI.

The meaning of each field in the MAC-CE structure may be as follows.

- Set 2200: This field may indicate a cell set to which MAC-CE is to be applied among one or more cell sets that can be scheduled via MC-DCI. If the number of cell sets that can be scheduled via MC-DCI is reported to the base station as one by the UE through the UE capability, this field may be ignored. If the number of cell sets that can be scheduled via MC-DCI is reported to the base station as two by the UE through the UE capability, the UE can apply the MAC-CE to cells within cell set 0 if the value of this field is 0, and apply the MAC-CE to cells within cell set 1 if the value is 1.
- Serving Cell ID 2205: The Serving Cell ID field may indicate a serving cell to which MAC-CE is to be applied. This field may be 5 bits long.

  ■ If the UE is configured with higher layer signaling related to the unified TCI state for the cell receiving the MAC-CE, and the serving cell indicated by the Serving Cell ID field is included in one or more of simultaneousU-TCI-UpdateList1, simultaneousU-TCI-UpdateList2, simultaneousU-TCI-UpdateList3, or simultaneousU-TCI-UpdateList4, which are higher layer signaling, then the MAC-CE can be applied to all serving cells included in one or more of simultaneousU-TCI-UpdateList1, simultaneousU-TCI-UpdateList2, simultaneousU-TCI-UpdateList3, or simultaneousU-TCI-UpdateList4 in which the serving cell indicated by this field is included.
  ■ If the UE is not configured with higher layer signaling related to the unified TCI state for the cell receiving the MAC-CE, i.e., if the UE operates in the Rel-15/16 TCI state framework in that cell, and the serving cell indicated by the Serving Cell ID field is included in at least one of simultaneousTCI-UpdateList1 or simultaneousTCI-UpdateList2, which are higher layer signaling, then the MAC-CE can be applied to all serving cells included in at least one of simultaneousTCI-UpdateList1 or simultaneousTCI-UpdateList2 in which the serving cell indicated by this field is included.

- DL BWP ID 2210: The DL BWP ID field may indicate the DL BWP to which the MAC-CE will be applied. The meaning of each codepoint in this field may correspond to each codepoint of the bandwidth part indicator in the DCI. The length of this field may be 2 bits.
- $U_i$ 2215: The $U_i$ field may indicate whether the i-th cell among up to four cells in the cell set indicated via the Set field 2200 operates in the unified TCI state scheme. If the UE is configured with higher layer signaling to operate in the unified TCI state scheme for the i-th cell, the value of this field may be 1, otherwise it may be 0. If all i-th $U_i$ fields are 0, i.e., no cell operates in the unified TCI state scheme, the UE may expect that there is no octet containing the UL BWP ID field 2225 to be described below. If the i-th $U_i$ field is 0, the UE may expect that there is no octet where $P_{i,1}$, ..., $P_{i,8}$ fields exist. If the i-th $U_i$ field is 0, the UE may expect that the D/U field 2235 below is indicated as 0 or is ignored like the R field.
- $Cell_i$ 2220: The $Cell_i$ field may indicate whether there is TCI state activation information for the i-th cell among up to four cells in the cell set indicated via the Set field 2200. If the value of the i-th $Cell_i$ field is 1, this may mean that there is TCI state activation information for the i-th cell. If the value of the i-th $Cell_i$ field is 0, this may mean that there is no TCI state activation information for the i-th cell.
- UL BWP ID 2210: The UL BWP ID field can indicate the UL BWP to which the corresponding MAC-CE is applied. The meaning of each codepoint in this field can correspond to each codepoint of the bandwidth part indicator in the DCI. The length of this field can be 2 bits. If all the i-th $U_i$ fields 2225 above are 0, this field and the 3rd octet containing this field may not exist, and if at least one i-th $U_i$ field 2225 is 1, this field and the 3rd octet containing this field may exist.
- $P_{c,i}$ 2230: If the UE uses the unified TCI state scheme and uses the separate TCI state, the $P_{c,i}$ field may indicate whether the i-th codepoint of the c-th cell that can be scheduled via MC-DCI has multiple TCI states or a single TCI state. If the value of $P_{c,i}$ is 1, it means that the corresponding i-th codepoint has multiple TCI states, which may mean that the corresponding codepoint may include a separate DL TCI state and a separate UL TCI state. If the value of $P_{c,i}$ is 0, it means that the corresponding i-th codepoint has a single TCI state, which may mean that the corresponding codepoint may contain one of a joint TCI state, a separate DCI TCI state, or a separate UL TCI state.
- D/U 2235: The D/U field can indicate whether the TCI state ID field 2240 within the same octet is a joint TCI state, a separate DL TCI state, or a separate UL TCI state. If this field is 1, the TCI state ID field within the same octet can be a joint TCI state or a separate DL TCI state. If this field is 0, the TCI state ID field within the same octet can be a separate UL TCI state.
- TCI state $ID_{c,i}$ 2240: The TCI state $ID_{c,i}$ field can indicate a TCI state identified via higher layer signaling TCI-StateId, and can indicate a TCI state connected to the i-th codepoint of the c-th cell for the TCI state field in MC-DCI. If the $P_{c,i}$ field 2230 is 1, the i-th codepoint of the c-th cell for the TCI state field in the MC-DCI may include two TCI states. In this case, two TCI state $ID_{c,i}$ fields are used to express the two TCI states to be connected to the i-th codepoint of the c-th cell, and two octets may be used to include the two fields. If the D/U field is configured as 1, this field may be used to express (or indicate) TCI-StateId, which may be expressed in 7 bits. If the D/U field is configured as 0, the most significant bit (MSB) of this field may be regarded as a reserved bit, and the remaining 6 bits may be used to express (or indicate) UL-TCIState-Id, which is higher layer signaling. The maximum number of TCI states that can be activated may be 8 for a joint TCI state and 16 for separate DL or UL TCI states.

- R: It indicates a reserved bit and can be set to 0.

If the UE receives from the base station at least one MAC-CE among those of FIG. 20, FIG. 21, and FIG. 22, the UE can apply activation information for each codepoint of the TCI state field in the MC-DCI indicated by the MAC-CE, based on the last symbol of PUCCH transmission including HARQ-ACK information indicating whether the reception of the corresponding MAC-CE is successful (e.g., 3 ms after the last symbol of the PUCCH transmission).
If the UE receives at least one MAC-CE among those of FIG. 21 and FIG. 22 from the base station and then changes and activates the codepoint of the TCI state field in the MC-DCI, and if the TCI state changed and activated through the MAC-CE is a TCI state that is not activated in the corresponding BWP within the corresponding cell, the UE may perform the TCI state change and activation for the corresponding codepoint of the TCI state field in the MC-DCI, and may also change the codepoint of the TCI state field in DCI formats 1_1 and 1_2 transmitted in the corresponding BWP within the corresponding cell in the same manner.
The UE may be configured by the base station via higher layer signaling, activated via MAC-CE, indicated via L1 signaling, notified via a combination of at least one of higher layer signaling, MAC-CE, and L1 signaling, or support a method fixed in the standard, so that the UE can activate the codepoint of the TCI state field in the MC-DCI using at least one MAC-CE among those of FIGS. 20, 21, and 22. The UE may report to the base station the UE capability which means whether at least one MAC-CE among those of FIGS. 20, 21, and 22 is supported.
FIG. 23 is a diagram illustrating the operation of a UE according to an embodiment of the disclosure.
In step 2300, the UE may report UE capability to the base station. The UE capability reported to the base station may include at least one of the following: the number of cell sets that can be scheduled via MC-DCI, the maximum number of cells per cell set, information on whether at least one of Method 2-1 to Method 2-9 is supported, and information on whether at least one MAC-CE among those of FIGS. 20, 21, and 22 is supported. If the UE has previously reported the UE capability to the base station or if UE capability reporting is not required, step 2300 may be omitted.
In step 2305, the UE may receive higher layer signaling from the base station. Information transmitted via the higher layer signaling may include at least one of the following: one or more cell indexes included in a cell set, a table including cell scheduling information within each cell set that can be scheduled via MC-DCI, at least one of Method 2-1 to Method 2-9, and information on whether at least one MAC-CE among those of FIGS. 20, 21, and 22 is supported.
In step 2310, the UE may receive a MAC-CE from the base station. The MAC-CE that the UE can receive from the base station may be a MAC-CE that activates a codepoint of a TCI state field included in DCI formats 1_1 and 1_2 in each BWP within each cell that the UE can be scheduled via MC-DCI, and may be, for example, at least one MAC-CE among those of FIGS. 20, 21, and 22.
In step 2315, the UE may determine how each codepoint in the TCI state field in the MC-DCI can be configured, based on the information received from the base station. Furthermore, the UE can assume that the base station also has the same understanding of each codepoint in the TCI state field in the MC-DCI.
In step 2320, the UE may receive MC-DCI from the base station. The MC-DCI may include scheduling information and a TCI state field for one or more cells.
In step 2325, the UE may perform PDSCH reception or PUSCH transmission for multiple cells, based on the scheduling information in the MC-DCI received from the base station.
FIG. 24 is a diagram illustrating the operation of a base station according to an embodiment of the disclosure.
In step 2400, the base station may receive UE capability from the UE. The UE capability reported by the UE may include at least one of the following: the number of cell sets that can be scheduled via MC-DCI, the maximum number of cells per cell set, information on whether at least one of Method 2-1 to Method 2-9 is supported, and information on whether at least one MAC-CE among those of FIGS. 20, 21, and 22 is supported. If the base station has previously received the UE capability or if UE capability reporting is not required, step 2400 may be omitted.
In step 2405, the base station may transmit higher layer signaling to the UE. Information transmitted via the higher layer signaling may include at least one of the following: one or more cell indexes included in a cell set, a table including cell scheduling information within each cell set that can be scheduled via MC-DCI, at least one of Method 2-1 to Method 2-9, and information on whether at least one MAC-CE among those of FIGS. 20, 21, and 22 is supported.
In step 2410, the base station may transmit a MAC-CE to the UE. The MAC-CE that the UE can receive from the base station may be a MAC-CE that activates a codepoint of a TCI state field included in DCI formats 1_1 and 1_2 in each BWP within each cell that the UE can be scheduled via MC-DCI, and may be, for example, at least one MAC-CE among those of FIGS. 20, 21, and 22.
In step 2415, the base station may configure each codepoint in the TCI state field in the MC-DCI, based on the information transmitted to the UE. Furthermore, the base station can assume that the UE also has the same understanding of each codepoint in the TCI state field in the MC-DCI.
In step 2420, the base station may transmit MC-DCI to the UE. The MC-DCI may include scheduling information and a TCI state field for one or more cells.
In step 2425, the base station may perform PDSCH transmission or PUSCH reception for multiple cells, based on the scheduling information in the MC-DCI transmitted to the UE.

FIG. 25 is a diagram illustrating the structure of a UE in a wireless communication system according to an embodiment of the disclosure.

With reference to FIG. 25, the UE may include a transceiver With reference to a UE receiver 2500 and a UE transmitter 2510, a memory (not shown), and a UE processor 2505 (or a controller or processor). According to the communication method of the UE as described above, the UE transceiver 2500 and 2510, the memory, and the UE processor 2505 may operate. That is, the transceiver, the memory, and the UE processor of the UE can operate according to at least one of the methods corresponding to the above-described embodiments or a combination thereof. However, the elements of the UE are not limited to the above-described example. For example, the UE may include more or fewer elements than the aforementioned elements. In addition, the transceiver, the memory, and the processor may be implemented in the form of a single chip.

The transceiver may transmit/receive a signal to/from a base station. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and elements of the transceiver are not limited to the RF transmitter and the RF receiver.

In addition, the transceiver may receive a signal through a radio channel and output the received signal to the processor, and may transmit a signal output from the processor through a radio channel.

The memory may store programs and data required for the operation of the UE. In addition, the memory may store control information or data included in a signal transmitted and received by the UE. The memory may include a storage medium such as a ROM, a RAM, a hard disk, a CD-ROM, and a DVD, or a combination of storage media. In addition, multiple memories may exist.

In addition, the processor may control a series of processes so that the UE may operate according to the above-described embodiment. For example, the processor may control elements of the UE so as to receive DCI composed of two layers and simultaneously receive multiple PDSCHs. Multiple processors may exist, and the processor may perform an operation of controlling the elements of the UE by executing programs stored in the memory.

FIG. 26 is a diagram illustrating the structure of a base station in a wireless communication system according to an embodiment of the disclosure.

With reference to FIG. 26, the base station may include a transceiver With reference to a base station receiver 2600 and a base station transmitter 2610, a memory (not shown), and a base station processor 2605 (or a base station controller or processor). According to the communication method of the base station as described above, the base station transceiver 2600 and 2610, the memory, and the base station processor 2605 may operate. That is, the transceiver, the memory, and the base station processor of the base station can operate according to at least one of the methods corresponding to the above-described embodiments or a combination thereof. However, the elements of the base station are not limited to the above-described example. For example, the base station may include more or fewer elements than the aforementioned elements. In addition, the transceiver, the memory, and the processor may be implemented in the form of a single chip.

The transceiver may transmit/receive a signal to/from a UE. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an embodiment of the transceiver, and elements of the transceiver are not limited to the RF transmitter and the RF receiver.

In addition, the transceiver may receive a signal through a radio channel and output the signal to the processor, and may transmit the signal output from the processor through a radio channel.

The memory may store programs and data necessary for the operation of the base station. In addition, the memory may store control information or data included in a signal transmitted and received by the base station. The memory may include a storage medium such as a ROM, a RAM, a hard disk, a CD-ROM, and a DVD, or a combination of storage media. In addition, multiple memories may exist.

The processor may control a series of processes so that the base station may operate according to the above-described embodiment. For example, the processor may control elements of the base station so as to compose DCI of two layers including allocation information regarding multiple PDSCHs and transmit the DCI. Multiple processors may exist, and the processor may perform an operation of controlling the elements of the base station by executing programs stored in the memory.

The methods according to embodiments described herein may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the programs may be stored in a memory composed of any combination of some or all of them. Further, a plurality of such memories may be included.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access the device that performs embodiments of the disclosure.

In the above-described detailed embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments described herein are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Further, the above respective embodiments may be employed in combination, as necessary. For example, an embodiment of the disclosure may be partially combined with another embodiment to operate a base station and a UE. As an example, embodiments 1 and 2 of the disclosure may be partially combined to operate a base station and a UE. Further, although the above embodiments have been described by way of the FDD LTE system, other variants based on the technical idea of the embodiments may be implemented in other systems such as TDD LTE and 5G or NR systems.

Meanwhile, in the drawings in which methods of the disclosure are described, the order of description does not necessarily correspond to the order of execution, and the order of precedence may be changed or the steps may be executed in parallel.

Alternatively, in the drawings in which methods of the disclosure are described, some elements may be omitted and only some elements may be included therein without departing from the essential spirit and scope of the disclosure.

Furthermore, in methods of the disclosure, some or all of the contents of each embodiment may be implemented in combination without departing from the essential spirit and scope of the disclosure.

Various embodiments of the disclosure have been described. The above description of the disclosure is merely for the purpose of illustration, and is not intended to limit embodiments of the disclosure to the embodiments set forth herein. Those skilled in the art will appreciate that other specific modifications and changes may be easily made thereto without changing the technical idea or essential features of the disclosure. The scope of the disclosure should be determined not by the above description but by the appended claims, and all changes and modifications derived from the meaning and scope of the claims and equivalent concepts thereof shall be construed as falling within the scope of the disclosure.

## Claims

**1.** A method performed by a terminal in a wireless communication system, the method comprising:

receiving, from a base station, a radio resource control (RRC) message including a transmission configuration information (TCI) list related to multi cell (MC)-downlink control information (DCI) via higher layer signaling, wherein the TCI list includes a TCI index for each cell scheduled for the terminal;
receiving, from the base station, a medium access control (MAC) control element (CE) for activating a TCI state;
receiving, from the base station, the MC-DCI including a TCI field, wherein the TCI field is used to indicate one of values included in the TCI list; and
receiving a physical downlink shared channel (PDSCH) in a cell scheduled for the terminal, based on the MC-DCI.

**2.** The method of claim 1, wherein the TCI field included in the MC-DCI has a maximum length of 4 bits, and wherein the TCI index is 3 bits.

**3.** The method of claim 1, wherein the RRC message includes information on a set of cells related to the MC-DCI,

wherein the TCI list is configured for the set of cells, and
wherein the TCI index indicates an activated TCI state.

**4.** The method of claim 1, further comprising:

receiving a MAC CE for changing the activated TCI state,
wherein the MAC CE for changing the activated TCI state further includes information indicating a set of cells, information indicating a cell within the set of cells, and TCI state information for the cell.

**5.** A method performed by a base station in a wireless communication system, the method comprising:

transmitting, to a terminal, a radio resource control (RRC) message including a transmission configuration information (TCI) list related to multi cell (MC)-downlink control information (DCI) via higher layer signaling, wherein the TCI list includes a TCI index for each cell scheduled for the terminal;
transmitting, to the terminal, a medium access control (MAC) control element (CE) for activating a TCI state;
transmitting the MC-DCI including a TCI field, wherein the TCI field is used to indicate one of values included in the TCI list; and
transmitting a physical downlink shared channel (PDSCH) in a cell scheduled for the terminal, based on the MC-DCI.

**6.** The method of claim 5, wherein the TCI field included in the MC-DCI has a maximum length of 4 bits, and wherein the TCI index is 3 bits.

**7.** The method of claim 5, wherein the RRC message includes information on a set of cells related to the MC-DCI,

wherein the TCI list is configured for the set of cells, and
wherein the TCI index indicates an activated TCI state.

**8.** The method of claim 5, further comprising:

transmitting a MAC CE for changing the activated TCI state,
wherein the MAC CE for changing the activated TCI state further includes information indicating a set of cells, information indicating a cell within the set of cells, and TCI state information for the cell.

**9.** A terminal in a wireless communication system, the terminal comprising:

a transceiver; and
a controller coupled with the transceiver and configured to:

receive, from a base station, a radio resource control (RRC) message including a transmission configuration information (TCI) list related to multi cell (MC)-downlink control information (DCI) via higher layer signaling, wherein the TCI list includes a TCI index for each cell scheduled for the terminal,
receive, from the base station, a medium access control (MAC) control element (CE) for activating a TCI state,
receive, from the base station, the MC-DCI including a TCI field, wherein the TCI field is used to indicate one of values included in the TCI list, and
receive a physical downlink shared channel (PDSCH) in a cell scheduled for the terminal, based on the MC-DCI.

**10.** The terminal of claim 9, wherein the TCI field included in the MC-DCI has a maximum length of 4 bits, and wherein the TCI index is 3 bits.

**11.** The terminal of claim 9, wherein the RRC message includes information on a set of cells related to the MC-DCI,

wherein the TCI list is configured for the set of cells, and
wherein the TCI index indicates an activated TCI state.

**12.** The terminal of claim 9, wherein the controller is configured to receive a MAC CE for changing the activated TCI state, and
wherein the MAC CE for changing the activated TCI state further includes information indicating a set of cells, information indicating a cell within the set of cells, and TCI state information for the cell.

**13.** A base station in a wireless communication system, the base station comprising:

a transceiver; and
a controller coupled with the transceiver and configured to:

transmit, to a terminal, a radio resource control (RRC) message including a transmission configuration information (TCI) list related to multi cell (MC)-downlink control information (DCI) via higher layer signaling, wherein the TCI list includes a TCI index for each cell scheduled for the terminal,
transmit, to the terminal, a medium access control (MAC) control element (CE) for activating a TCI state,
transmit the MC-DCI including a TCI field, wherein the TCI field is used to indicate one of values included in the TCI list, and
transmit a physical downlink shared channel (PDSCH) in a cell scheduled for the terminal, based on the MC-DCI.

**14.** The base station of claim 13, wherein the TCI field included in the MC-DCI has a maximum length of 4 bits,

wherein the TCI index is 3 bits,
wherein the RRC message includes information on a set of cells related to the MC-DCI,
wherein the TCI list is configured for the set of cells, and
wherein the TCI index indicates an activated TCI state.

**15.** The base station of claim 13, wherein the controller is configured to transmit a MAC CE for changing the activated TCI state, and
wherein the MAC CE for changing the activated TCI state further includes information indicating a set of cells, information indicating a cell within the set of cells, and TCI state information for the cell.

FIG. 1

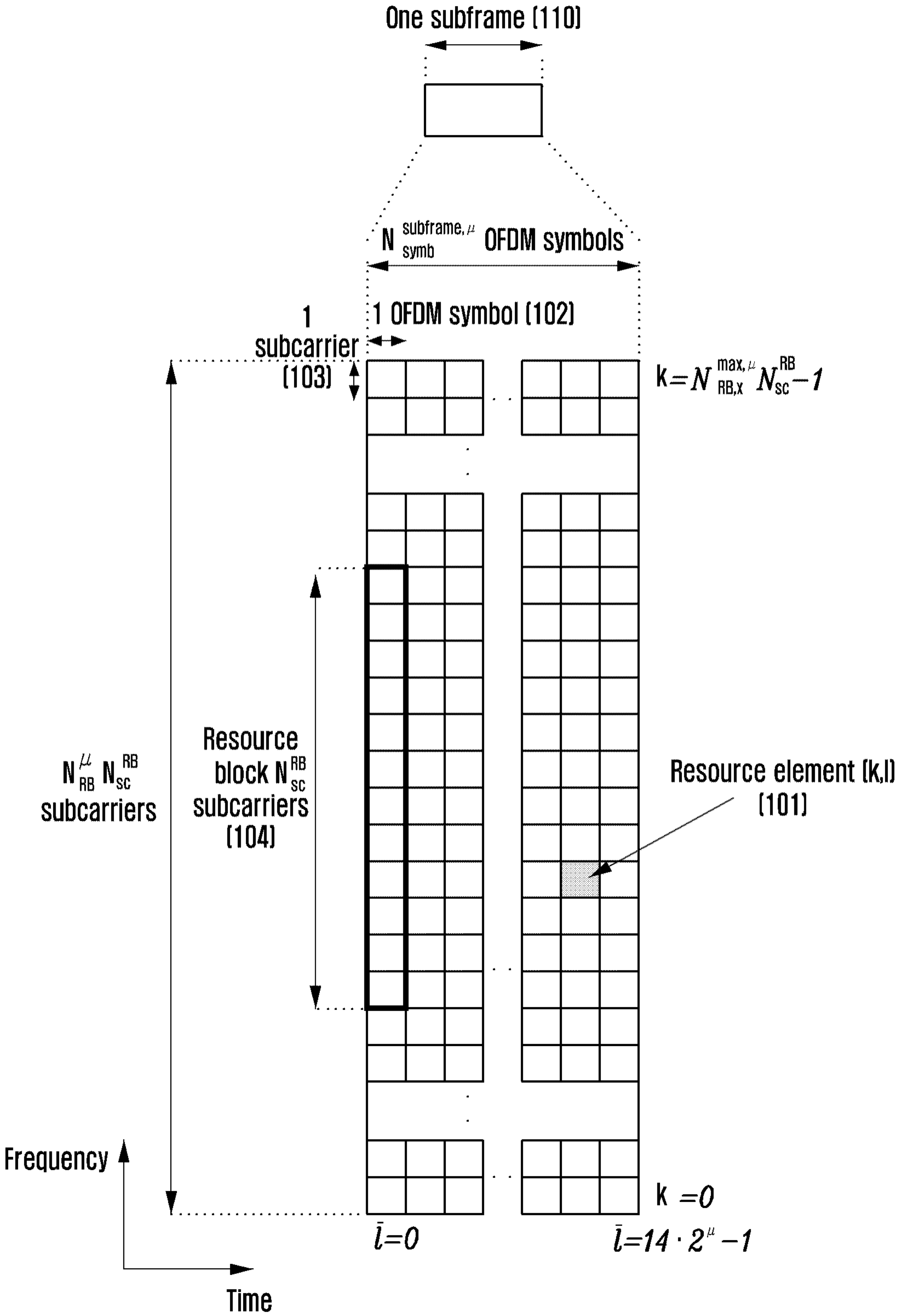
One subframe (110)
$N_{symb}^{subframe,\mu}$ OFDM symbols
1 OFDM symbol (102)
1 subcarrier (103)
$k=N_{RB,x}^{max,\mu}N_{sc}^{RB}-1$
$N_{RB}^{\mu}N_{sc}^{RB}$ subcarriers
Resource block $N_{sc}^{RB}$ subcarriers (104)
Resource element (k,l) (101)
Frequency
k =0
$\bar{l}=0$
$\bar{l}=14\cdot2^{\mu}-1$
Time

FIG. 2

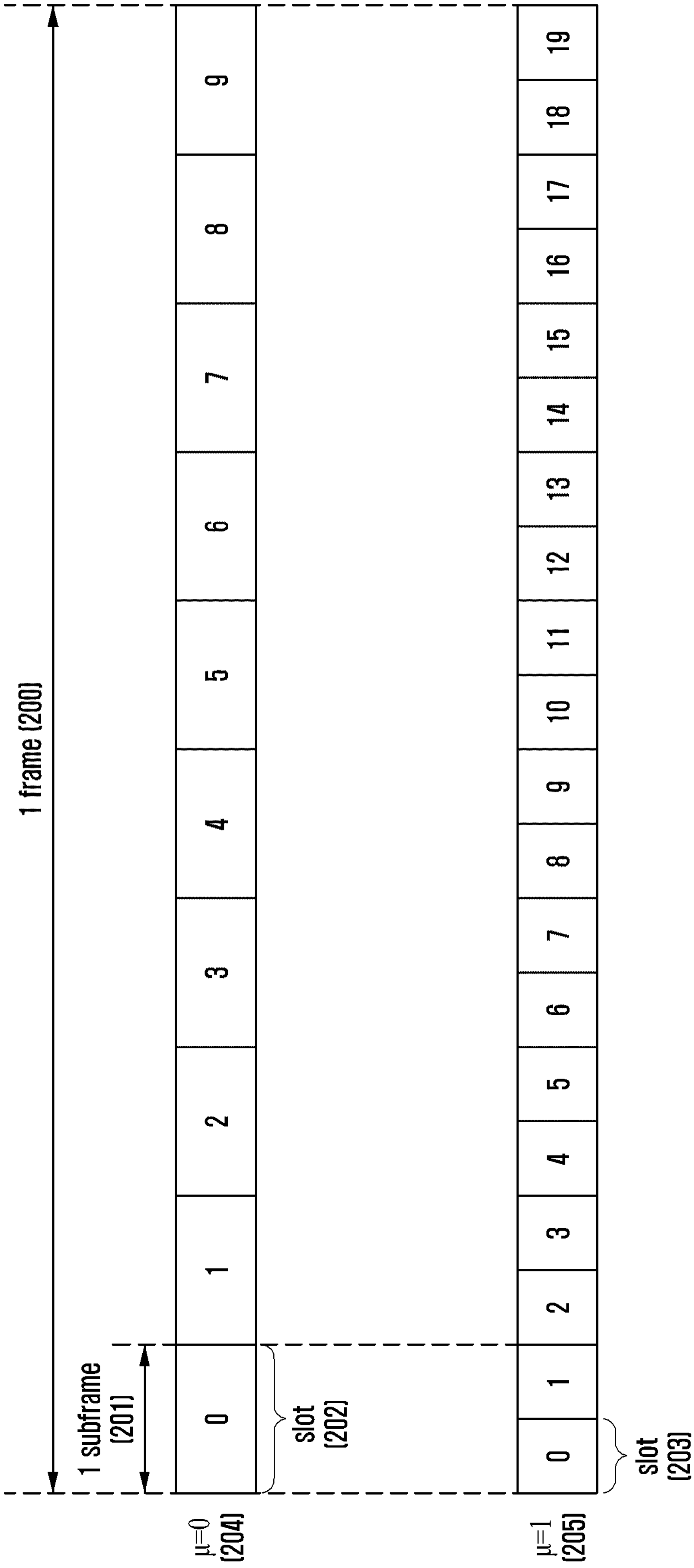
1 frame (200)
1 subframe (201)
slot (202)
slot (203)
μ=0 (204)
μ=1 (205)
0
1
2
3
4
5
6
7
8
9
10
11
12
13
14
15
16
17
18
19

FIG. 3

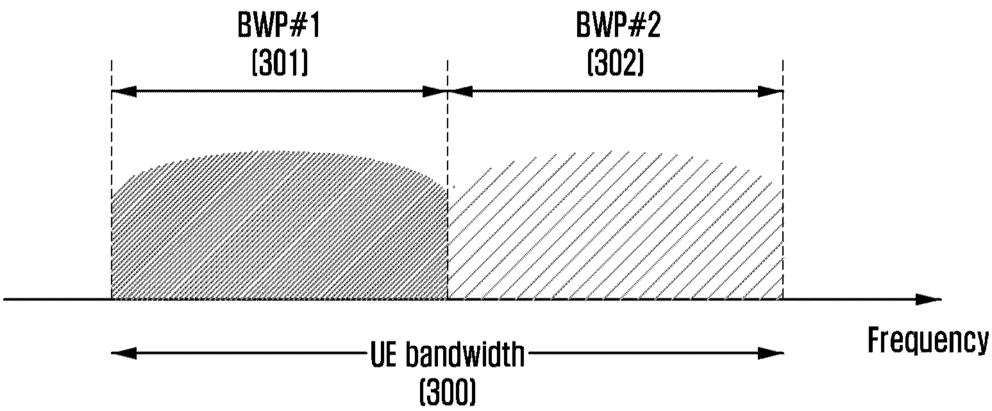

FIG. 4

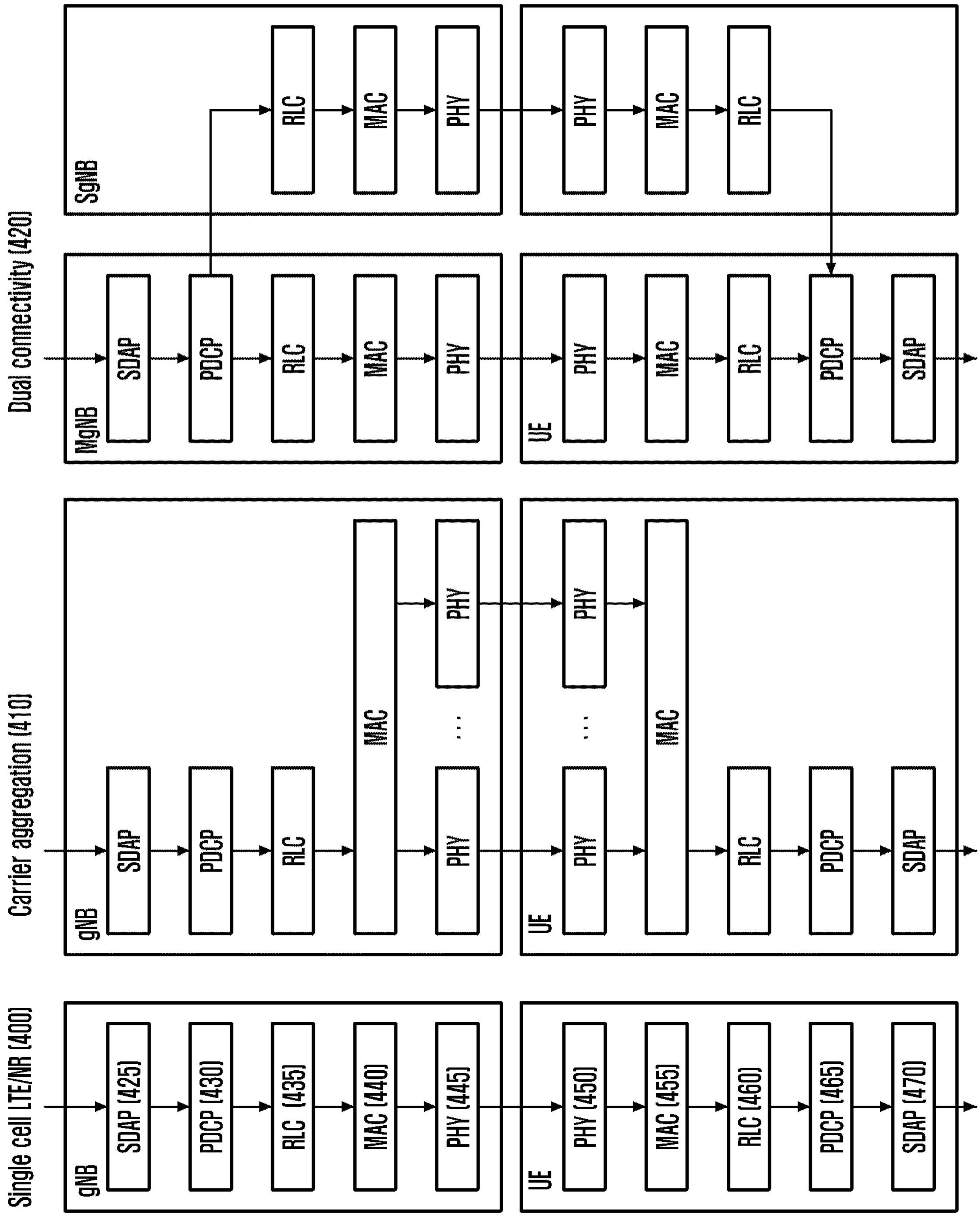
Single cell LTE/NR (400)
gNB
SDAP (425)
PDCP (430)
RLC (435)
MAC (440)
PHY (445)
UE
PHY (450)
MAC (455)
RLC (460)
PDCP (465)
SDAP (470)
Carrier aggregation (410)
gNB
SDAP
PDCP
RLC
MAC
PHY
...
PHY
UE
PHY
...
PHY
MAC
RLC
PDCP
SDAP
Dual connectivity (420)
MgNB
SDAP
PDCP
RLC
MAC
PHY
SgNB
RLC
MAC
PHY
UE
PHY
MAC
RLC
PDCP
SDAP
PHY
MAC
RLC

FIG. 5

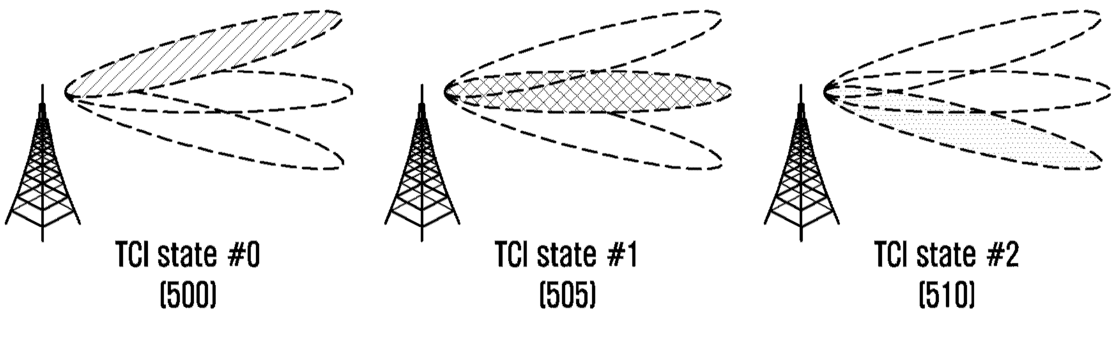

FIG. 6

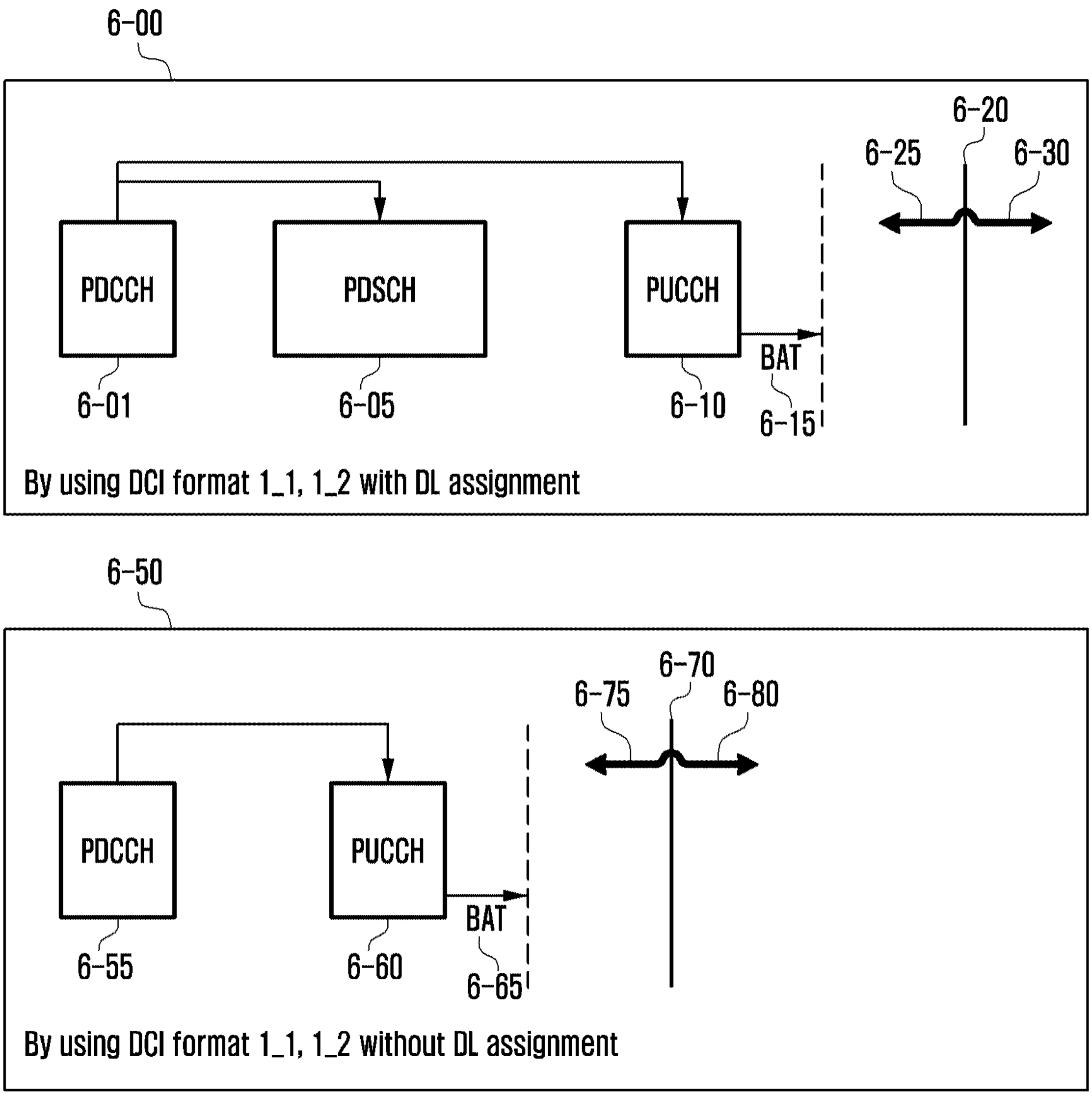
6-00
6-20
6-25
6-30
PDCCH
PDSCH
PUCCH
BAT
6-01
6-05
6-10
6-15
By using DCI format 1_1, 1_2 with DL assignment
6-50
6-70
6-75
6-80
PDCCH
PUCCH
BAT
6-55
6-60
6-65
By using DCI format 1_1, 1_2 without DL assignment

FIG. 7

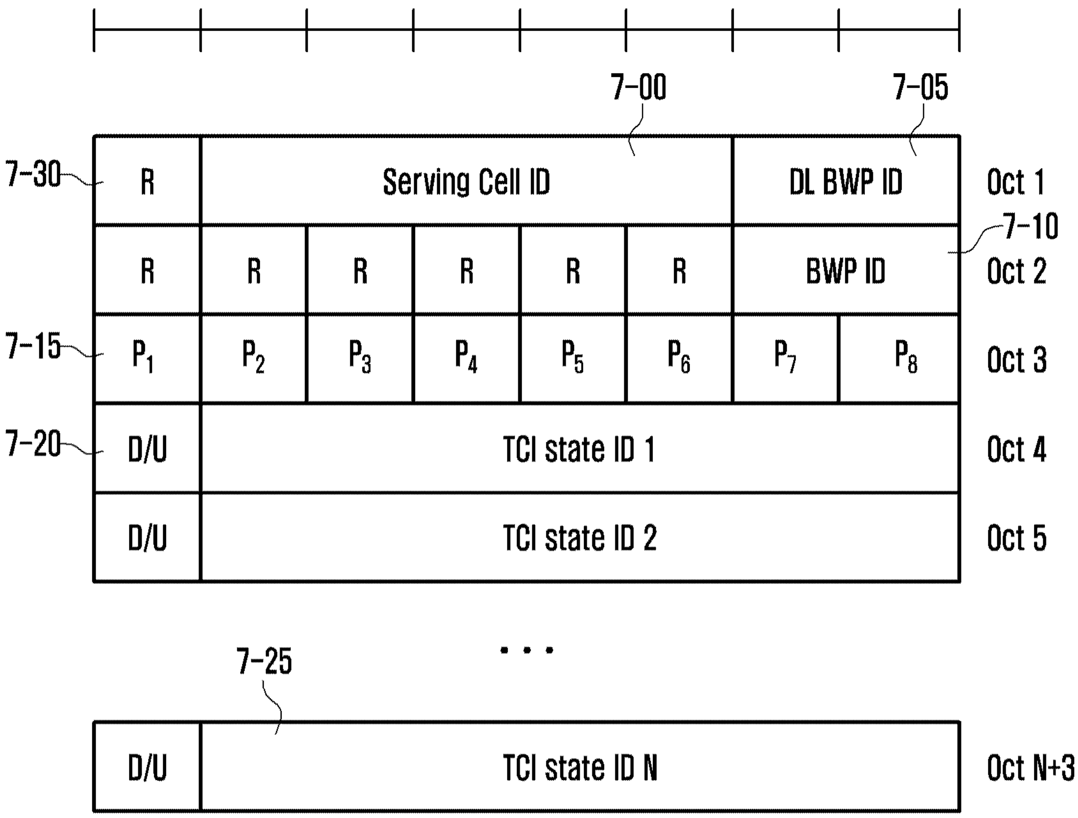
7-00
7-05
7-30
R
Serving Cell ID
DL BWP ID
Oct 1
7-10
R
R
R
R
R
R
BWP ID
Oct 2
7-15
P1
P2
P3
P4
P5
P6
P7
P8
Oct 3
7-20
D/U
TCI state ID 1
Oct 4
D/U
TCI state ID 2
Oct 5
• • •
7-25
D/U
TCI state ID N
Oct N+3

FIG. 8

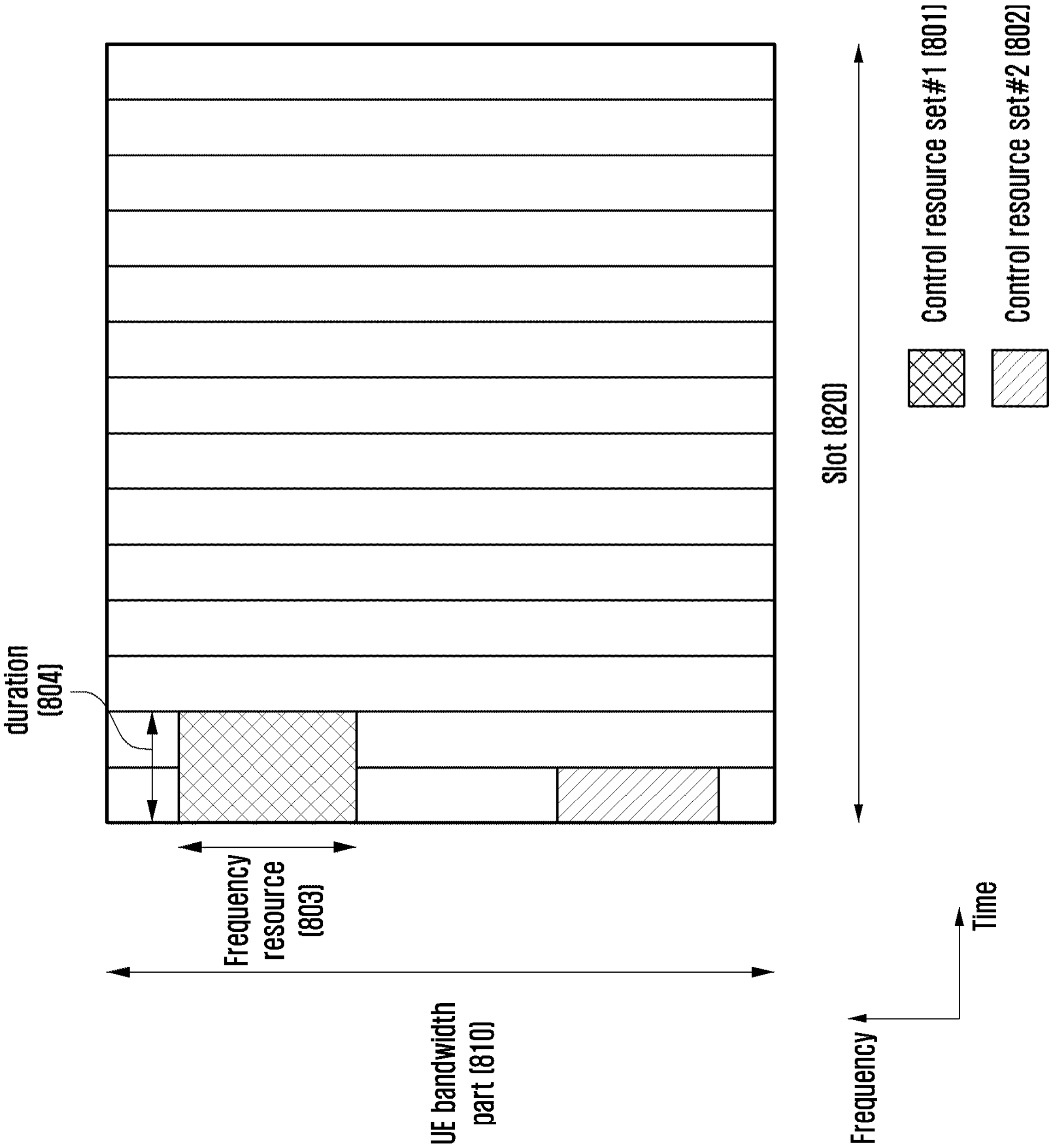
duration (804)
Frequency resource (803)
UE bandwidth part (810)
Slot (820)
Control resource set#1 (801)
Control resource set#2 (802)
Time
Frequency

FIG. 9

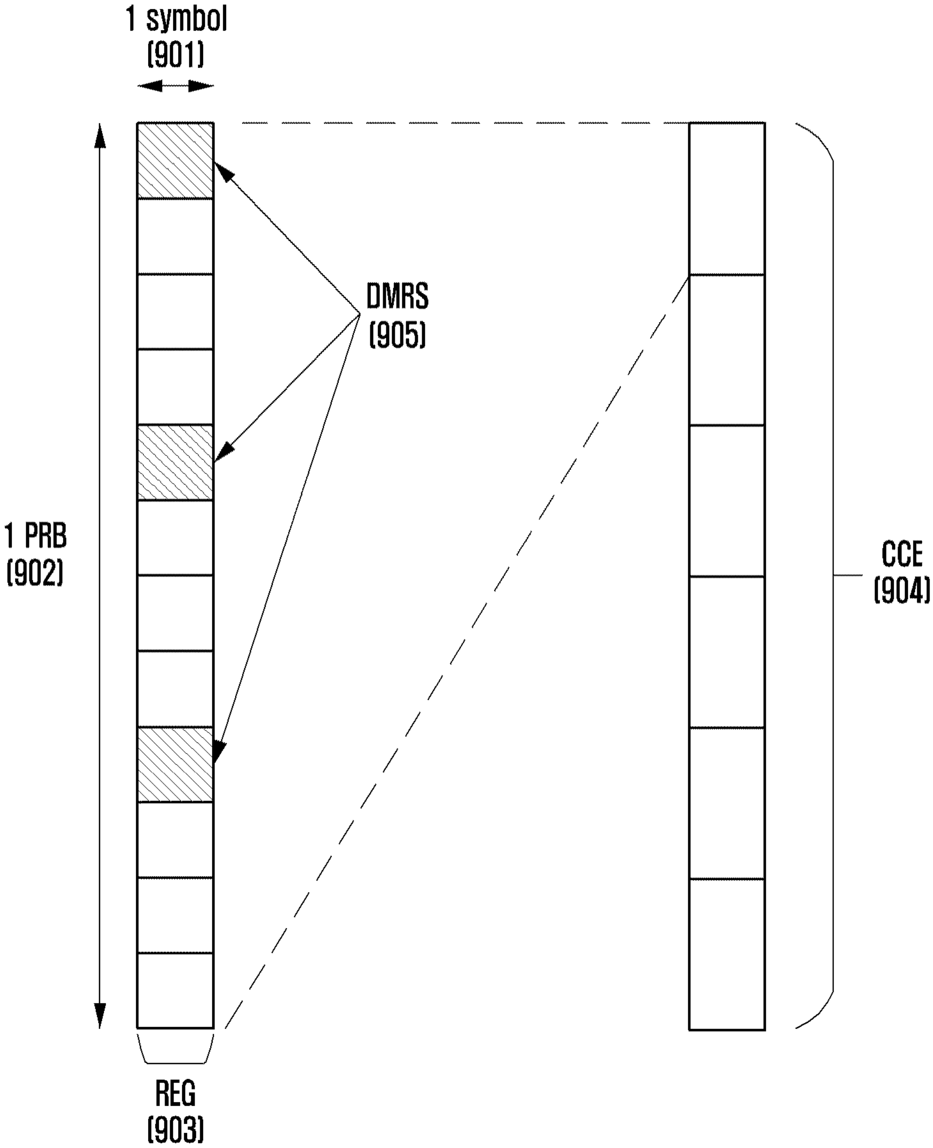

FIG. 10

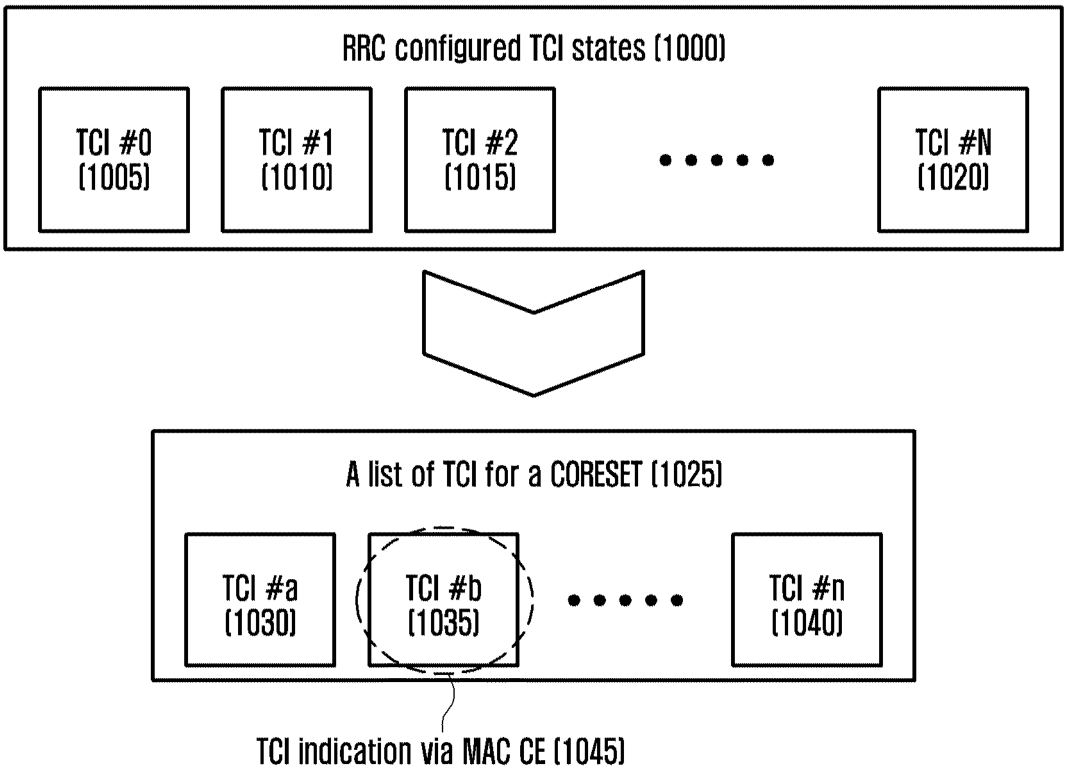
RRC configured TCI states (1000)
TCI #0 (1005)
TCI #1 (1010)
TCI #2 (1015)
TCI #N (1020)
A list of TCI for a CORESET (1025)
TCI #a (1030)
TCI #b (1035)
TCI #n (1040)
TCI indication via MAC CE (1045)

FIG. 11

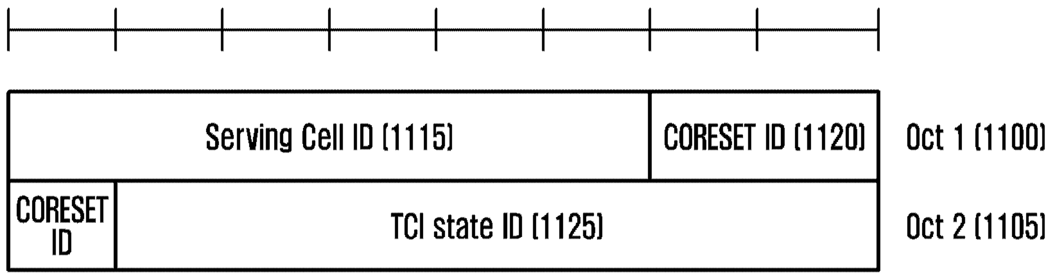
Serving Cell ID (1115)
CORESET ID (1120)
Oct 1 (1100)
CORESET ID
TCI state ID (1125)
Oct 2 (1105)

FIG. 12

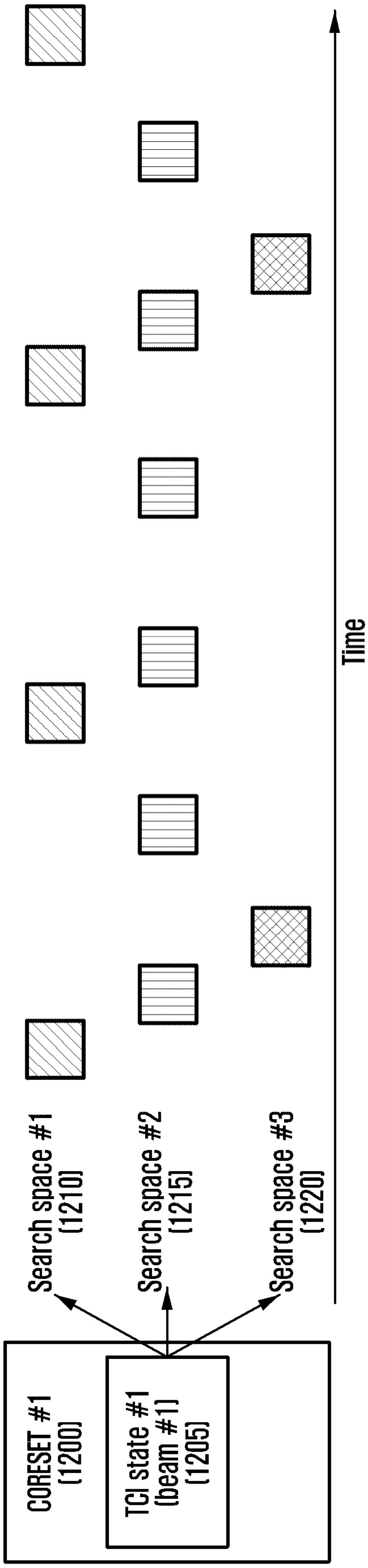
CORESET #1
(1200)
TCI state #1
(beam #1)
(1205)
Search space #1
(1210)
Search space #2
(1215)
Search space #3
(1220)
Time

FIG. 13

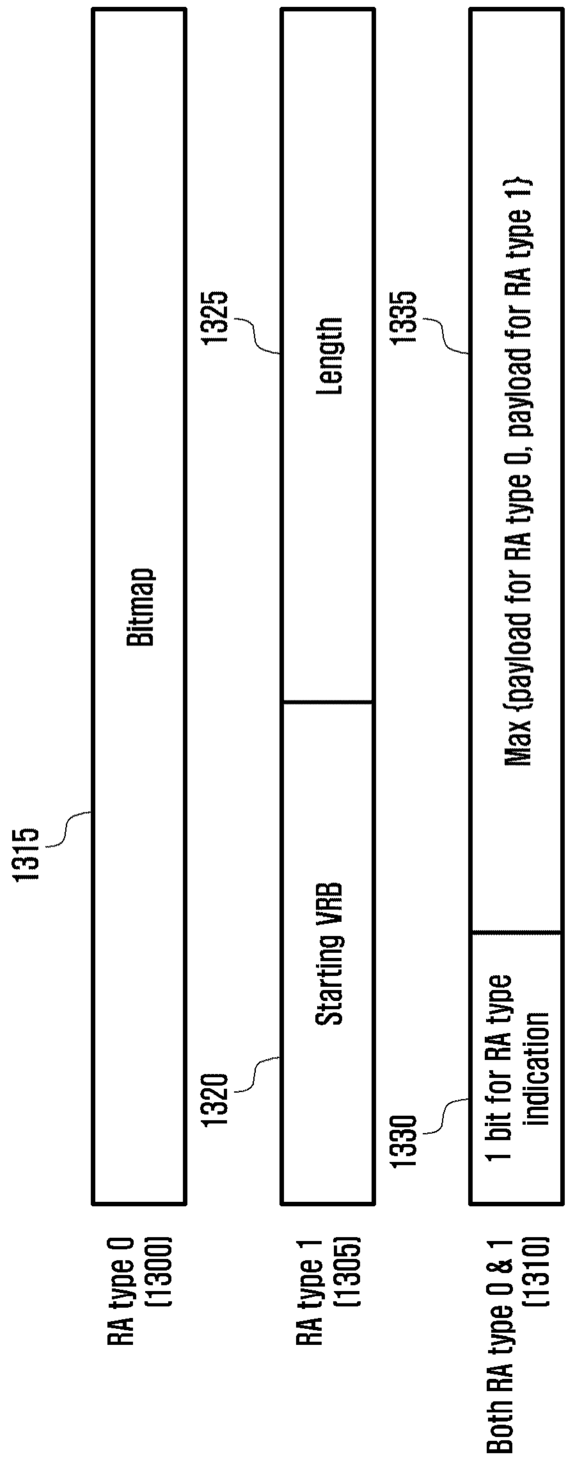
RA type 0
(1300)
RA type 1
(1305)
Both RA type 0 & 1
(1310)
1315
Bitmap
1320
Starting VRB
1325
Length
1330
1 bit for RA type
indication
1335
Max {payload for RA type 0, payload for RA type 1}

FIG. 14

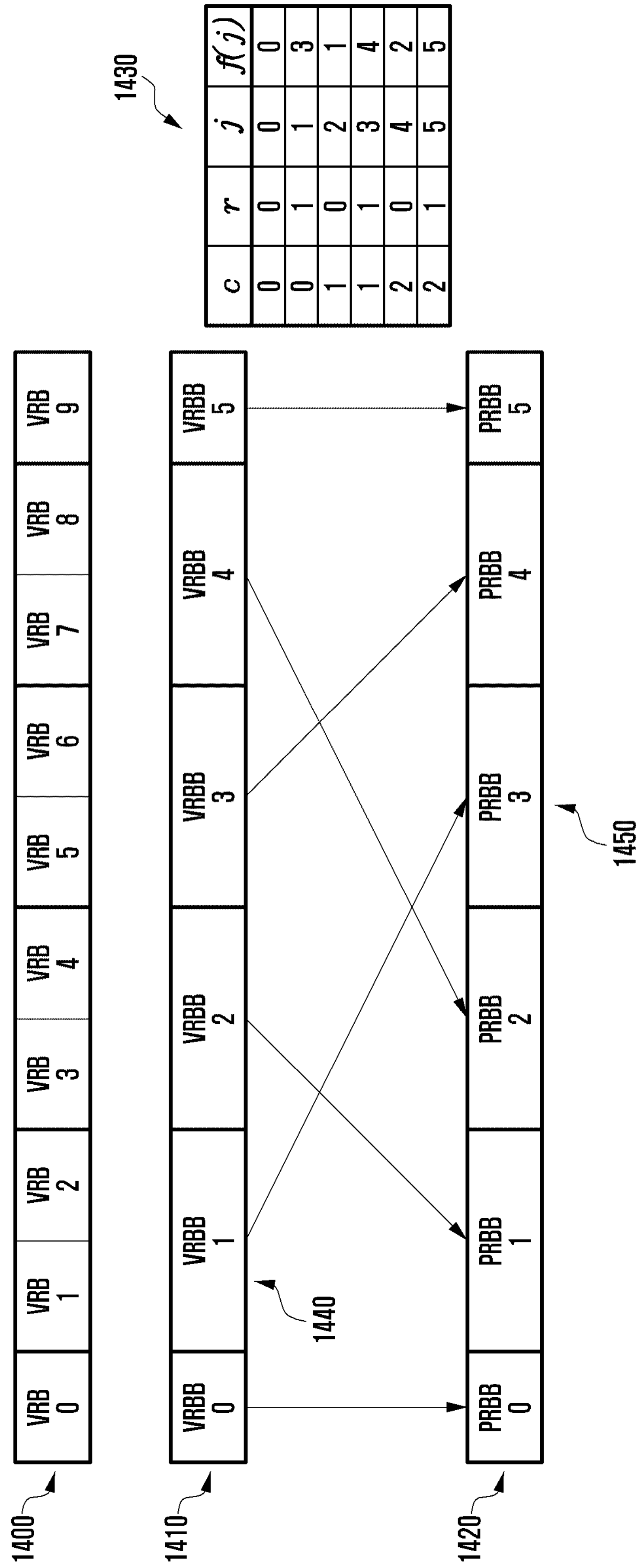


| $c$ | $r$ | $j$ | $f(j)$ |
|---|---|---|---|
| 0 | 0 | 0 | 0 |
| 0 | 1 | 1 | 3 |
| 1 | 0 | 2 | 1 |
| 1 | 1 | 3 | 4 |
| 2 | 0 | 4 | 2 |
| 2 | 1 | 5 | 5 |

FIG. 15

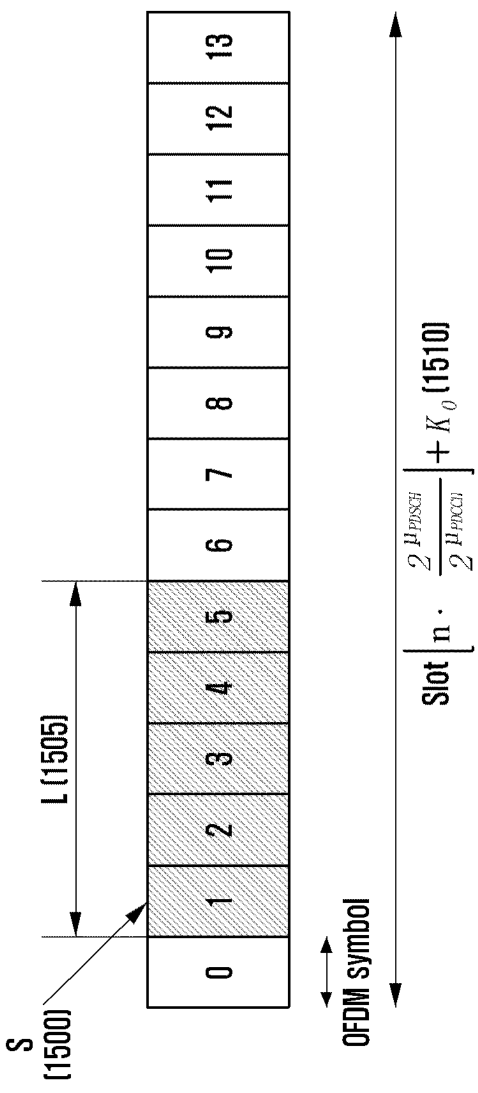
S (1500)
L (1505)
0
1
2
3
4
5
6
7
8
9
10
11
12
13
OFDM symbol
Slot $\left\lfloor n \cdot \frac{2^{\mu_{PDSCH}}}{2^{\mu_{PDCCH}}} \right\rfloor + K_0$ (1510)

FIG. 16

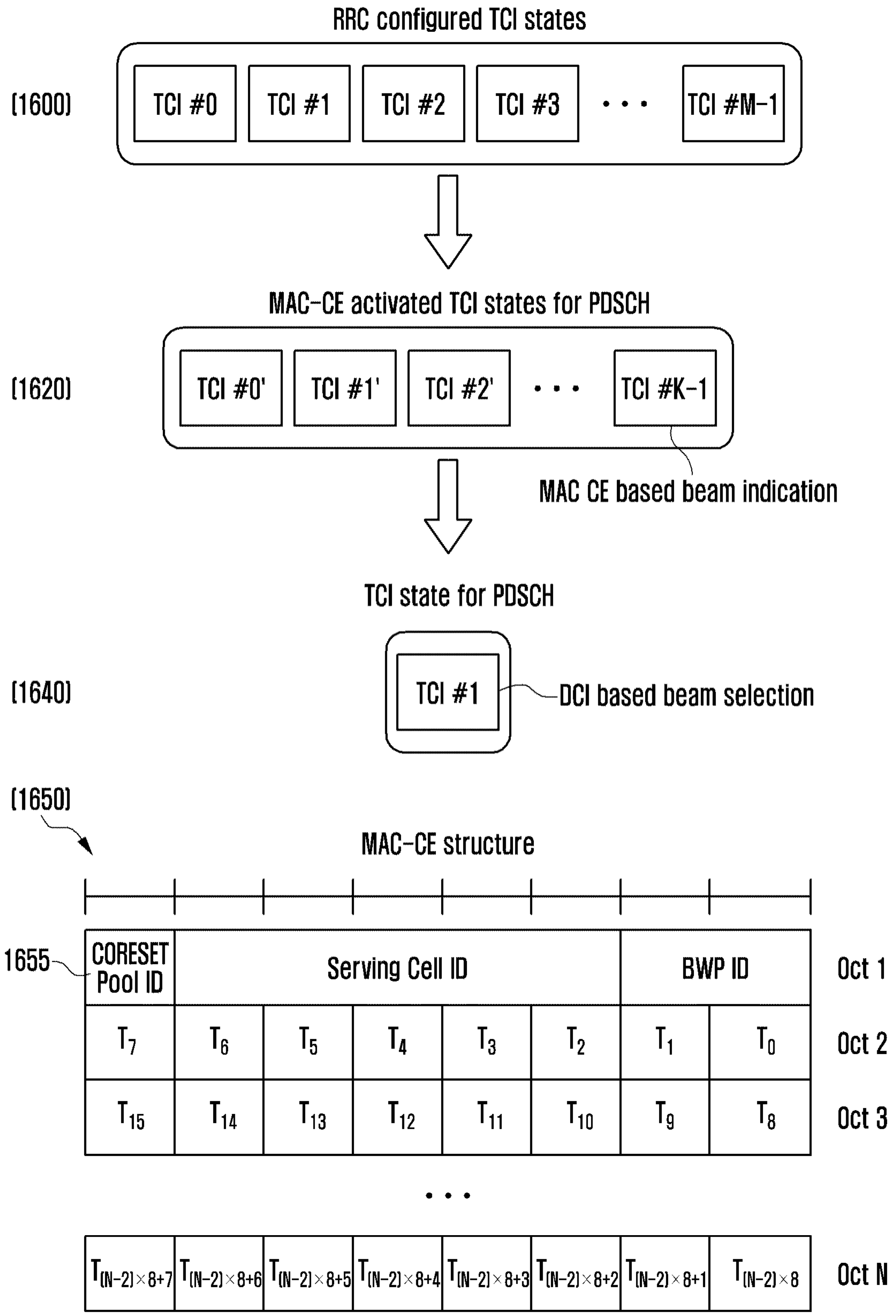
RRC configured TCI states
(1600)
TCI #0
TCI #1
TCI #2
TCI #3
TCI #M-1
MAC-CE activated TCI states for PDSCH
(1620)
TCI #0'
TCI #1'
TCI #2'
TCI #K-1
MAC CE based beam indication
TCI state for PDSCH
(1640)
TCI #1
DCI based beam selection
(1650)
MAC-CE structure
1655
CORESET Pool ID
Serving Cell ID
BWP ID
Oct 1
$T_7$ $T_6$ $T_5$ $T_4$ $T_3$ $T_2$ $T_1$ $T_0$
Oct 2
$T_{15}$ $T_{14}$ $T_{13}$ $T_{12}$ $T_{11}$ $T_{10}$ $T_9$ $T_8$
Oct 3
$T_{(N-2)\times8+7}$ $T_{(N-2)\times8+6}$ $T_{(N-2)\times8+5}$ $T_{(N-2)\times8+4}$ $T_{(N-2)\times8+3}$ $T_{(N-2)\times8+2}$ $T_{(N-2)\times8+1}$ $T_{(N-2)\times8}$
Oct N

FIG. 17

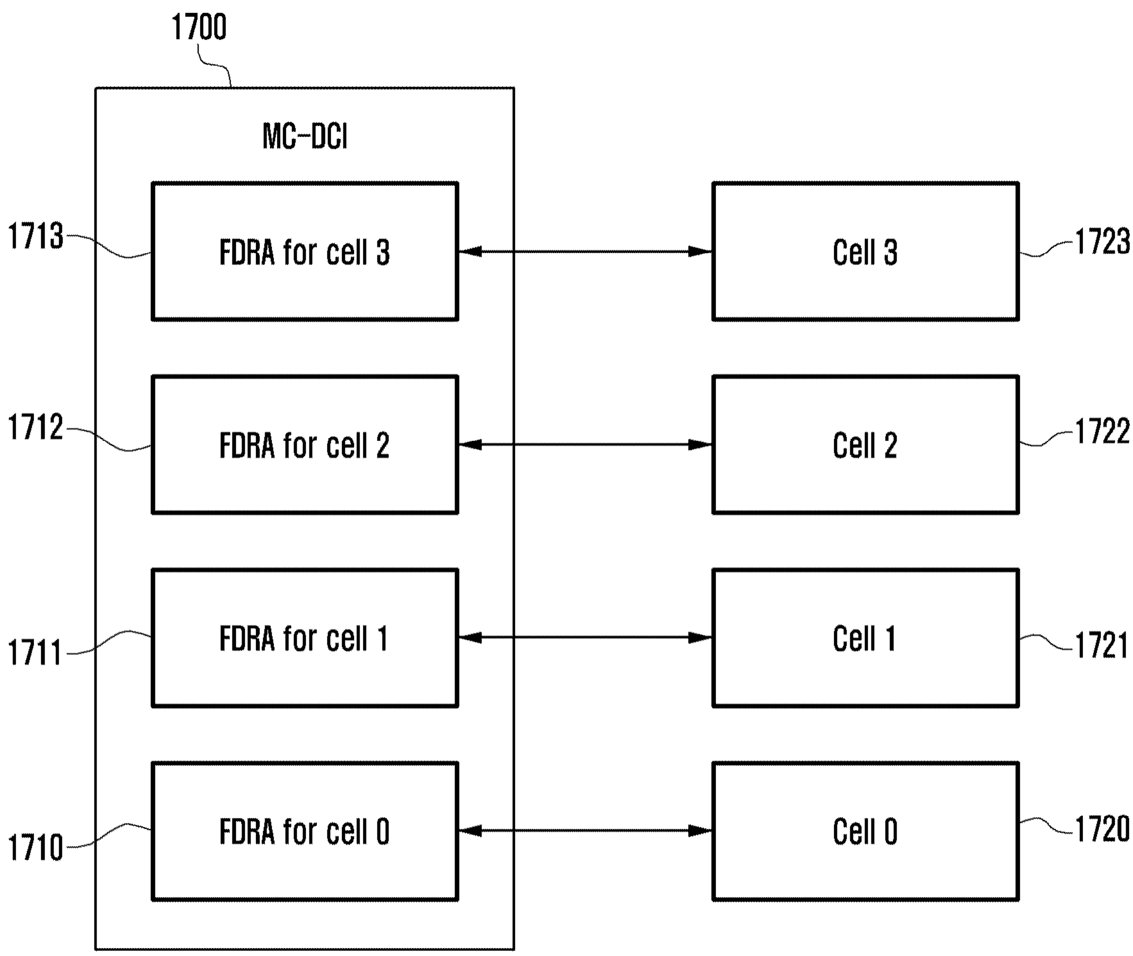
1700
MC-DCI
1713
FDRA for cell 3
Cell 3
1723
1712
FDRA for cell 2
Cell 2
1722
1711
FDRA for cell 1
Cell 1
1721
1710
FDRA for cell 0
Cell 0
1720

FIG. 18

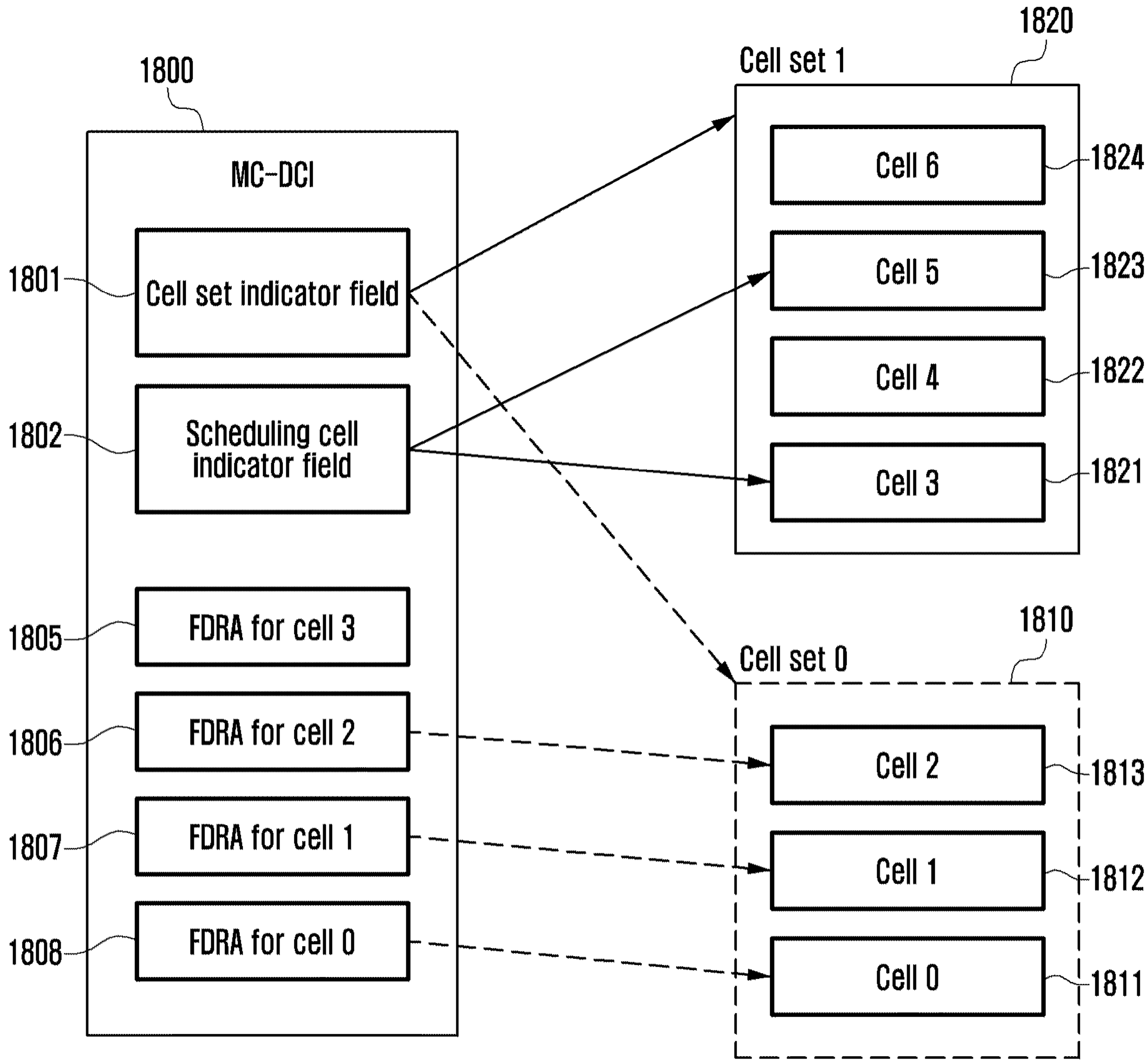
1800
MC-DCI
1801
Cell set indicator field
1802
Scheduling cell indicator field
1805
FDRA for cell 3
1806
FDRA for cell 2
1807
FDRA for cell 1
1808
FDRA for cell 0
1820
Cell set 1
Cell 6
1824
Cell 5
1823
Cell 4
1822
Cell 3
1821
1810
Cell set 0
Cell 2
1813
Cell 1
1812
Cell 0
1811

FIG. 19

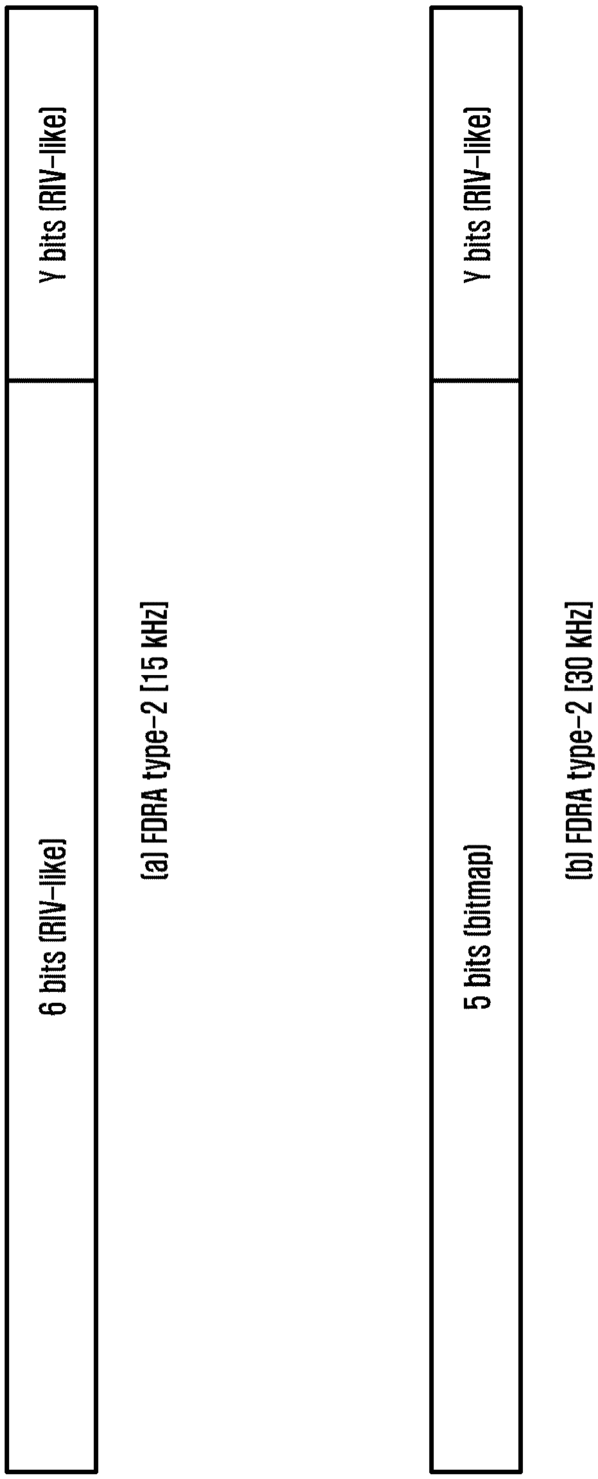


(a) FDRA type-2 (15 kHz)

(b) FDRA type-2 (30 kHz)

FIG. 20

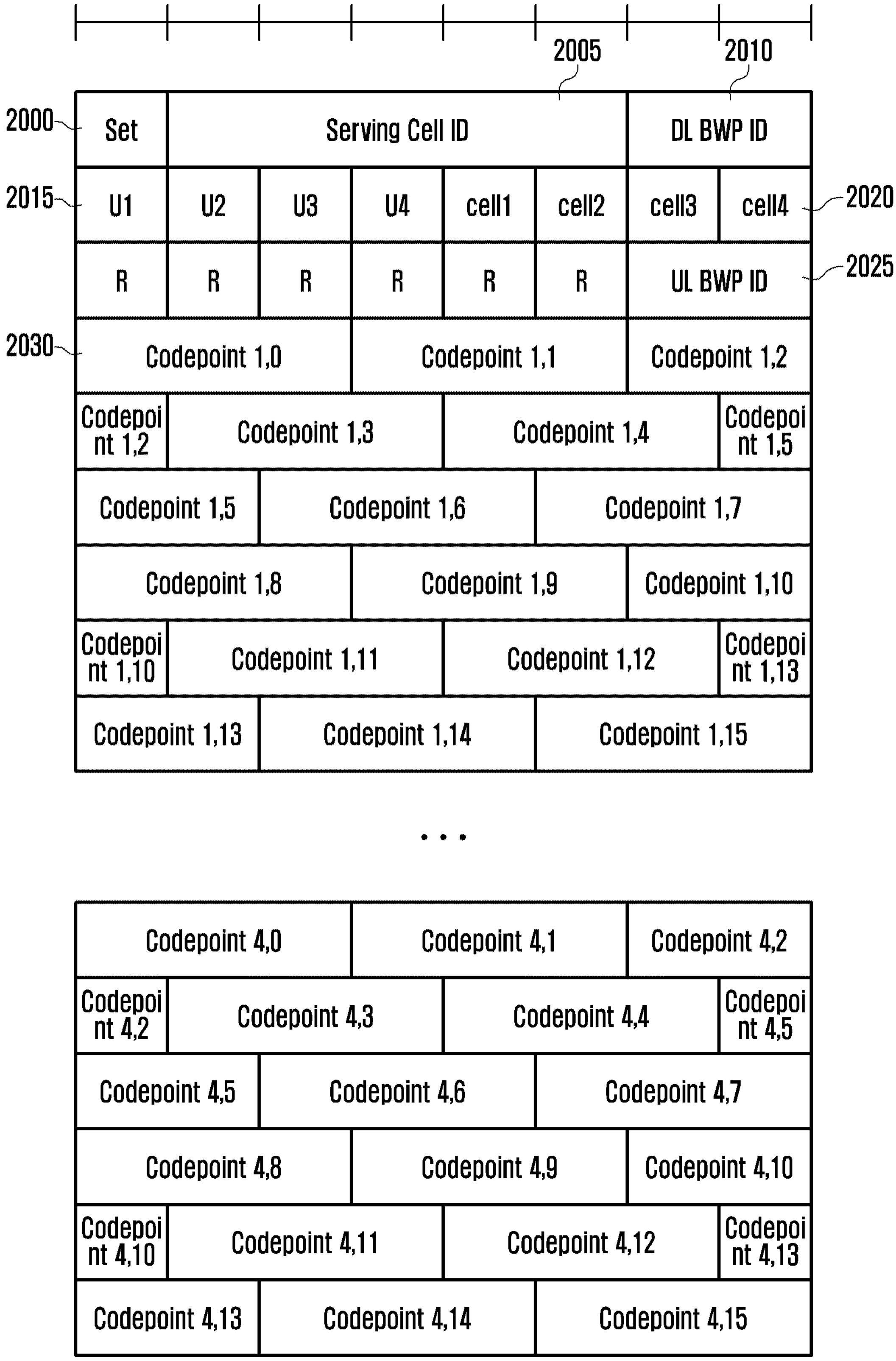
2005
2010
2000
Set
Serving Cell ID
DL BWP ID
2015
U1
U2
U3
U4
cell1
cell2
cell3
cell4
2020
R
R
R
R
R
R
UL BWP ID
2025
2030
Codepoint 1,0
Codepoint 1,1
Codepoint 1,2
Codepoint 1,2
Codepoint 1,3
Codepoint 1,4
Codepoint 1,5
Codepoint 1,5
Codepoint 1,6
Codepoint 1,7
Codepoint 1,8
Codepoint 1,9
Codepoint 1,10
Codepoint 1,10
Codepoint 1,11
Codepoint 1,12
Codepoint 1,13
Codepoint 1,13
Codepoint 1,14
Codepoint 1,15
...
Codepoint 4,0
Codepoint 4,1
Codepoint 4,2
Codepoint 4,2
Codepoint 4,3
Codepoint 4,4
Codepoint 4,5
Codepoint 4,5
Codepoint 4,6
Codepoint 4,7
Codepoint 4,8
Codepoint 4,9
Codepoint 4,10
Codepoint 4,10
Codepoint 4,11
Codepoint 4,12
Codepoint 4,13
Codepoint 4,13
Codepoint 4,14
Codepoint 4,15

FIG. 21

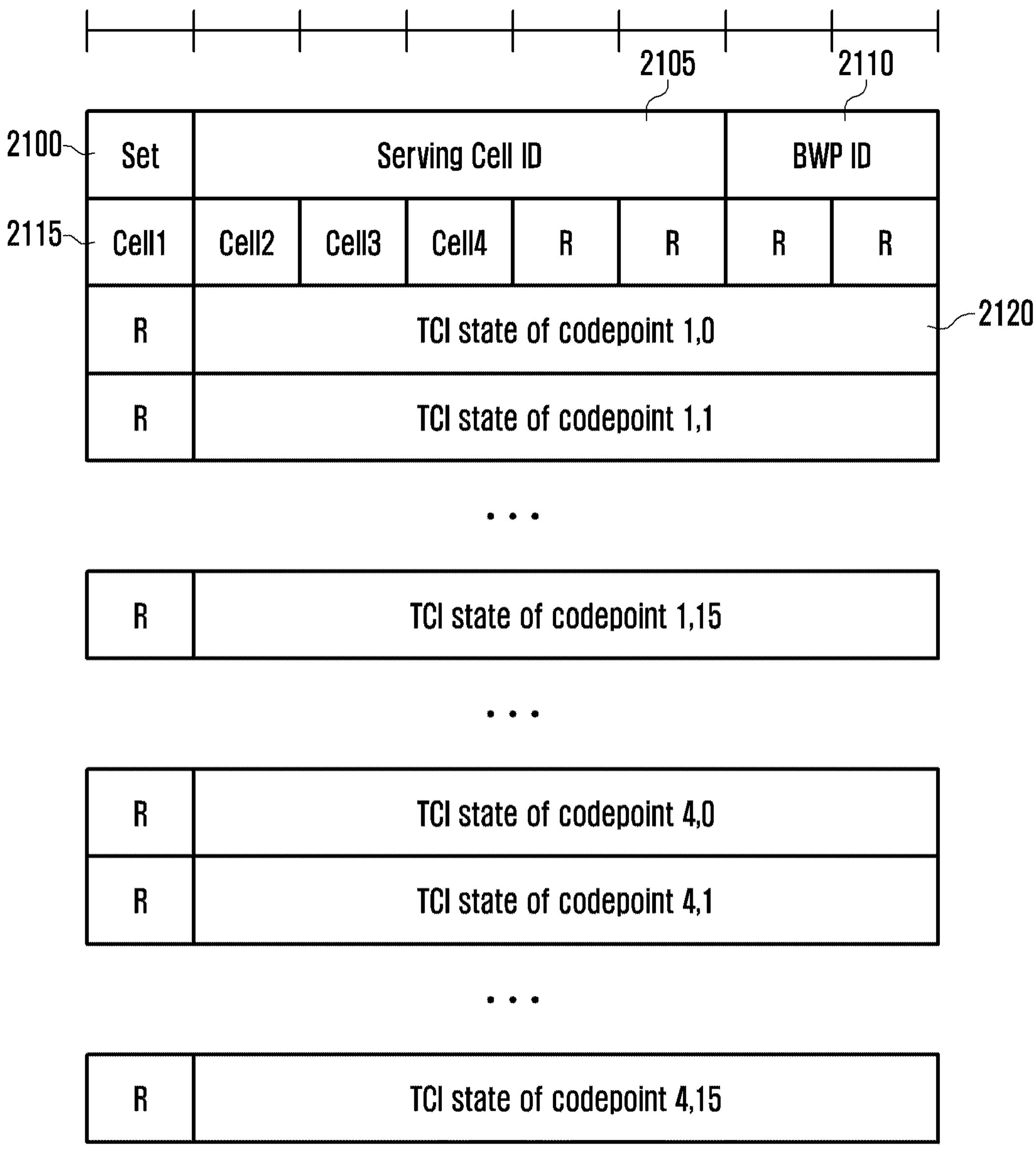
2105
2110
2100
Set
Serving Cell ID
BWP ID
2115
Cell1
Cell2
Cell3
Cell4
R
R
R
R
2120
R
TCI state of codepoint 1,0
R
TCI state of codepoint 1,1
...
R
TCI state of codepoint 1,15
...
R
TCI state of codepoint 4,0
R
TCI state of codepoint 4,1
...
R
TCI state of codepoint 4,15

FIG. 22

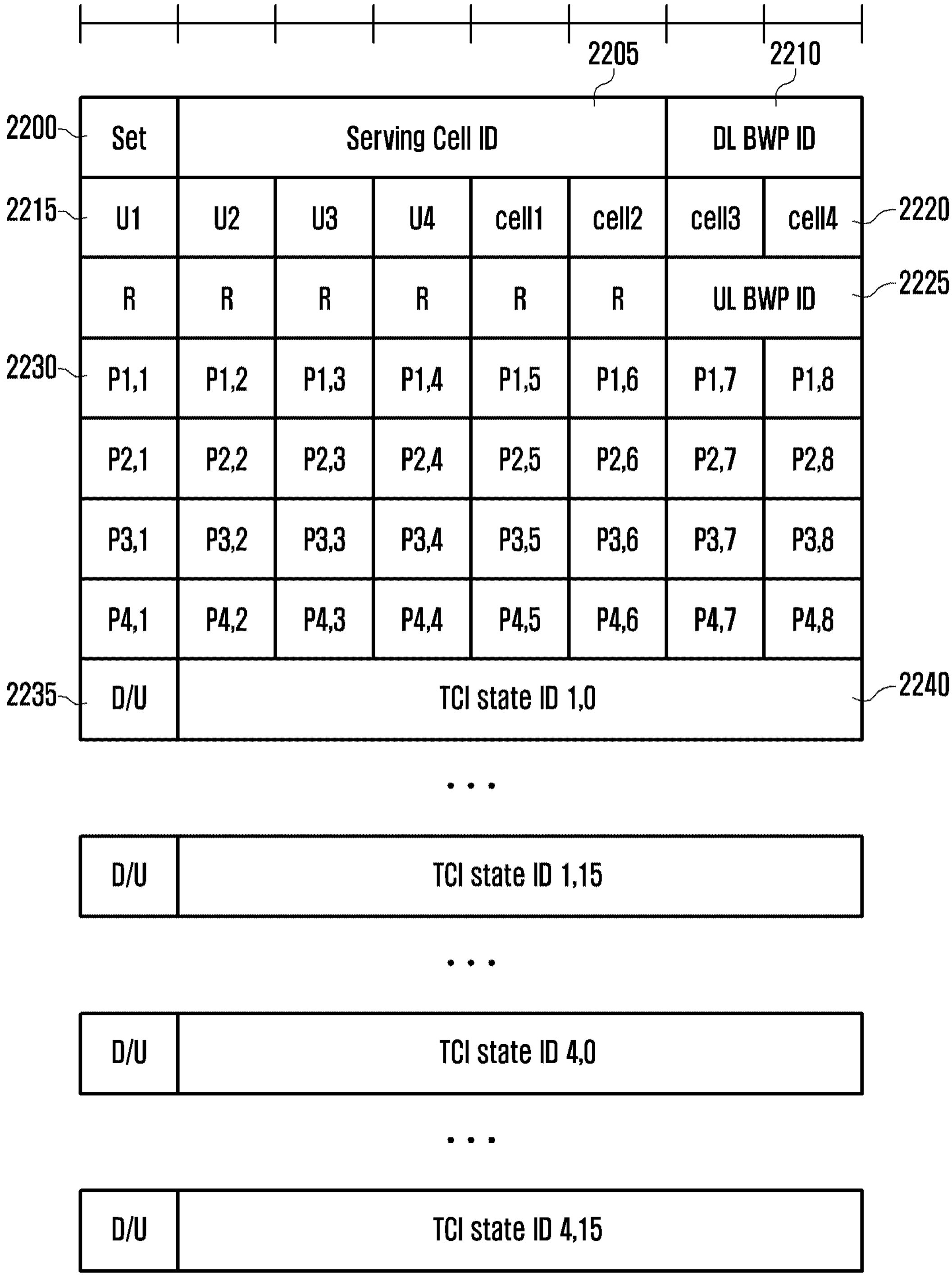
2205
2210
2200
Set
Serving Cell ID
DL BWP ID
2215
U1
U2
U3
U4
cell1
cell2
cell3
cell4
2220
R
R
R
R
R
R
UL BWP ID
2225
2230
P1,1
P1,2
P1,3
P1,4
P1,5
P1,6
P1,7
P1,8
P2,1
P2,2
P2,3
P2,4
P2,5
P2,6
P2,7
P2,8
P3,1
P3,2
P3,3
P3,4
P3,5
P3,6
P3,7
P3,8
P4,1
P4,2
P4,3
P4,4
P4,5
P4,6
P4,7
P4,8
2235
D/U
TCI state ID 1,0
2240
• • •
D/U
TCI state ID 1,15
• • •
D/U
TCI state ID 4,0
• • •
D/U
TCI state ID 4,15

FIG. 23

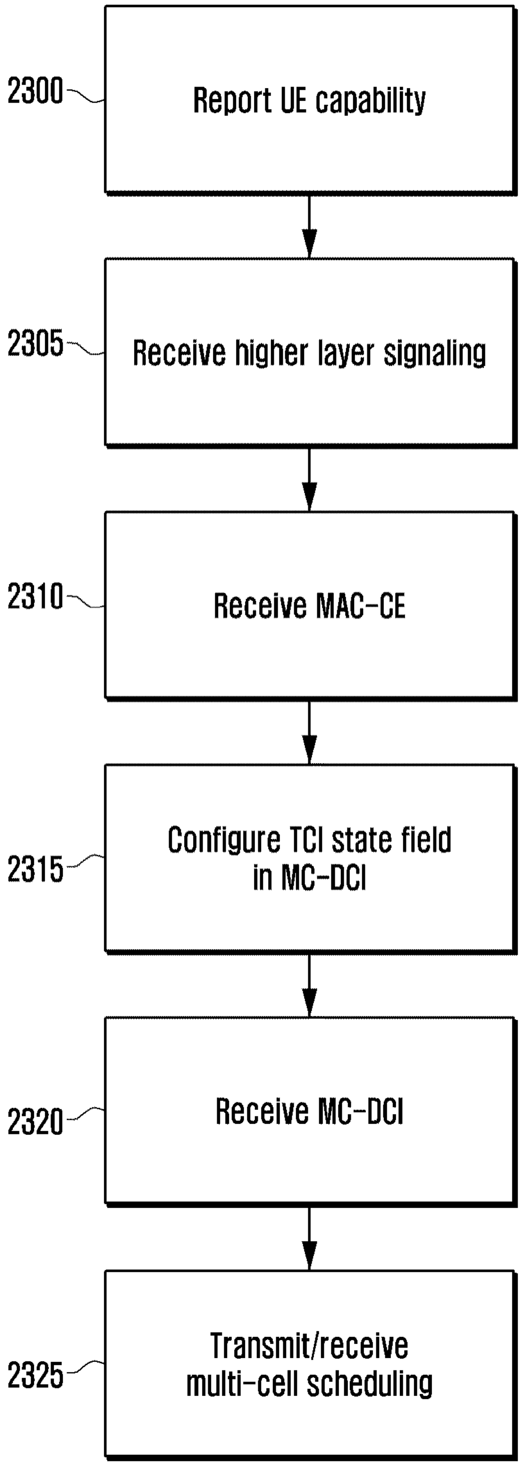
2300
Report UE capability
2305
Receive higher layer signaling
2310
Receive MAC-CE
2315
Configure TCI state field in MC-DCI
2320
Receive MC-DCI
2325
Transmit/receive multi-cell scheduling

FIG. 24

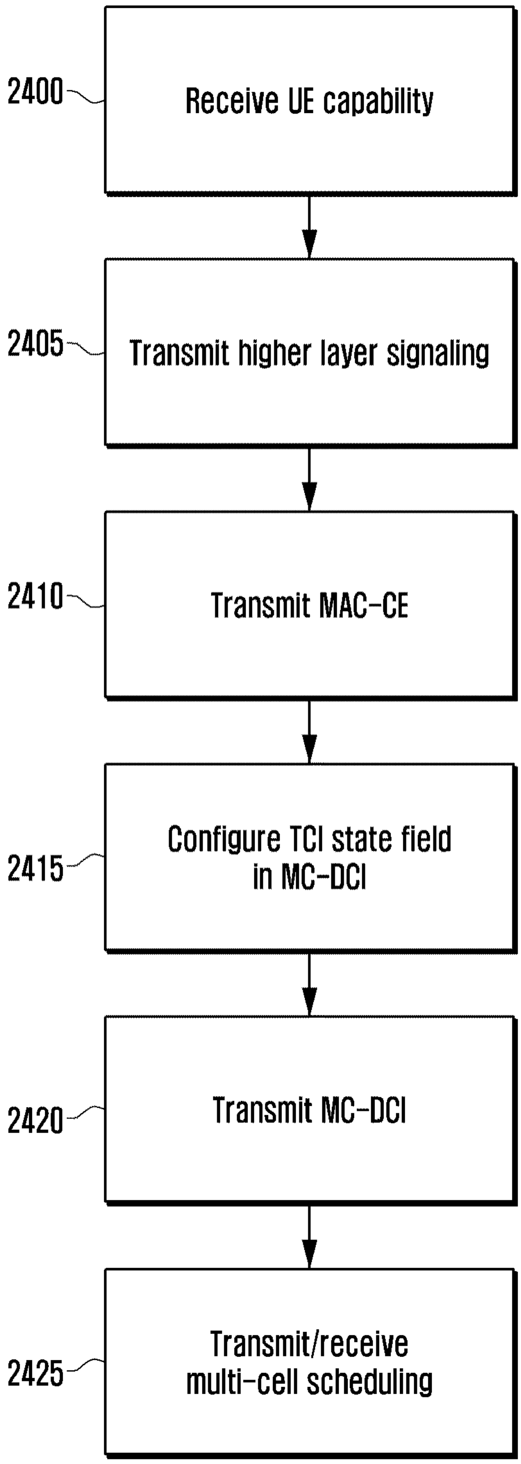
2400
Receive UE capability
2405
Transmit higher layer signaling
2410
Transmit MAC-CE
2415
Configure TCI state field
in MC-DCI
2420
Transmit MC-DCI
2425
Transmit/receive
multi-cell scheduling

FIG. 25

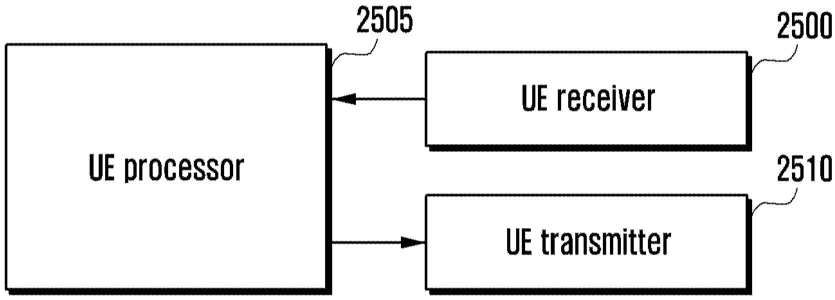

FIG. 26

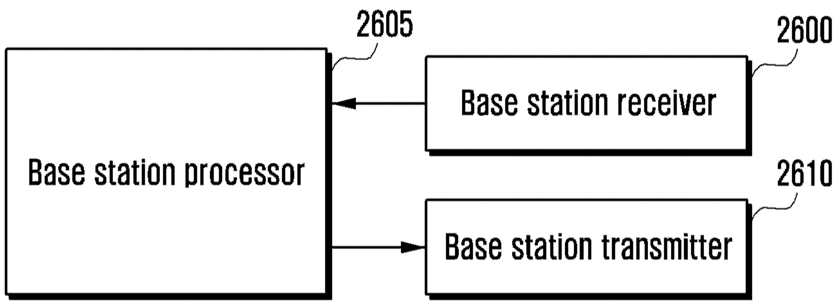
2605
2600
Base station receiver
Base station processor
2610
Base station transmitter

## INTERNATIONAL SEARCH REPORT

International application No.
**PCT/KR2024/005238**

**A. CLASSIFICATION OF SUBJECT MATTER**

**H04W 72/232**(2023.01)i; **H04W 72/231**(2023.01)i; **H04W 72/1268**(2023.01)i; **H04W 72/1273**(2023.01)i; **H04L 5/00**(2006.01)i; **H04B 7/0413**(2017.01)i

According to International Patent Classification (IPC) or to both national classification and IPC

**B. FIELDS SEARCHED**

Minimum documentation searched (classification system followed by classification symbols)

H04W 72/232(2023.01); H04B 7/00(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MC-DCI, TCI, 리스트(list), 활성화(activation), PDSCH

**C. DOCUMENTS CONSIDERED TO BE RELEVANT**

| Category* | Citation of document, with indication, where appropriate, of the relevant passages | Relevant to claim No. |
|---|---|---|
| Y | WO 2022-178074 A1 (OFINNO, LLC) 25 August 2022 (2022-08-25) See paragraphs [0357]-[0367] and [0420]-[0469]; and claims 1-35. | 1,5,9,13 |
| A | | 2-4,6-8,10-12,14-15 |
| Y | VIVO. Discussion on UE features for Multi-carrier enhancements. R1-2302515, 3GPP TSG RAN WG1 Meeting #112bis-e. 07 April 2023. See section 2. | 1,5,9,13 |
| A | QUALCOMM. UE features for MC enhancements. R1-2303621, 3GPP TSG RAN WG1 Meeting #112bis-e. 07 April 2023. See sections 2.1 and 2.2.7. | 1-15 |
| A | SAMSUNG. Discussion on UE features for multi-carrier enhancements. R1-2303159, 3GPP TSG RAN WG1 Meeting #112bis-e. 07 April 2023. See sections 2-3. | 1-15 |

☑ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 August 2024** | **07 August 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/005238**

**C. DOCUMENTS CONSIDERED TO BE RELEVANT**

| Category* | Citation of document, with indication, where appropriate, of the relevant passages | Relevant to claim No. |
|---|---|---|
| A | NOKIA et al. Initial views on UE features for Multi-carrier Enhancements. R1-2302897, 3GPP TSG RAN WG1 Meeting #112bis-e. 06 April 2023.<br>See section 2. | 1-15 |

Form PCT/ISA/210 (second sheet) (July 2022)

**INTERNATIONAL SEARCH REPORT**
**Information on patent family members**

International application No.
**PCT/KR2024/005238**

| Patent document cited in search report | Publication date (day/month/year) | Patent family member(s) | Publication date (day/month/year) |
|---|---|---|---|
| WO 2022-178074 A1 | 25 August 2022 | CN 117083829 A | 17 November 2023 |
| | | EP 4252383 A1 | 04 October 2023 |
| | | US 11824807 B2 | 21 November 2023 |
| | | US 2023-0308237 A1 | 28 September 2023 |
| | | US 2024-0089050 A1 | 14 March 2024 |

Form PCT/ISA/210 (patent family annex) (July 2022)